(19) **Europäisches Patentamt / European Patent Office / Office européen des brevets**

(11) **EP 3 559 696 B1**

(12) **FASCICULE DE BREVET EUROPEEN**

(45) Date de publication et mention de la délivrance du brevet:
**19.07.2023 Bulletin 2023/29**

(51) Classification Internationale des Brevets (IPC):
***G01S 15/42*** *(2006.01)*     ***G01S 15/00*** *(2020.01)*

(21) Numéro de dépôt: **17816892.8**

(52) Classification Coopérative des Brevets (CPC):
**G01S 15/003; G01S 15/42**

(22) Date de dépôt: **20.12.2017**

(86) Numéro de dépôt international:
**PCT/EP2017/083824**

(87) Numéro de publication internationale:
**WO 2018/115125 (28.06.2018 Gazette 2018/26)**

(54) **SYSTEME REPARTI MODULAIRE DE DETECTION ACOUSTIQUE DES MENACES SOUS-MARINES SUR UNE ZONE SENSIBLE**

MODULARES VERTEILTES SYSTEM ZUR AKUSTISCHEN ERKENNUNG VON UNTERWASSERBEDROHUNGEN IN EINEM EMPFINDLICHEN BEREICH

MODULAR DISTRIBUTED SYSTEM FOR THE ACOUSTIC DETECTION OF UNDERWATER THREATS IN A SENSITIVE ZONE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.12.2016 FR 1601814**

(43) Date de publication de la demande:
**30.10.2019 Bulletin 2019/44**

(73) Titulaire: **Thales**
**92400 Courbevoie (FR)**

(72) Inventeur: **RAILLON, Louis**
**06903 Sophia Antipolis Cedex (FR)**

(74) Mandataire: **Atout PI Laplace**
**Immeuble "Visium"**
**22, avenue Aristide Briand**
**94117 Arcueil Cedex (FR)**

(56) Documents cités:
**GB-A- 2 240 847    KR-A- 20150 069 910**
**US-A1- 2010 309 751    US-A1- 2011 007 606**
**US-B2- 7 457 198**

- **SUHWAN KIM ET AL: "Performance comparison of target localization for active sonar systems", IEEE TRANSACTIONS ON AEROSPACE AND ELECTRONIC SYSTEMS, IEEE SERVICE CENTER, PISCATAWAY, NJ, US, vol. 44, no. 4, 1 octobre 2008 (2008-10-01), pages 1371-1380, XP011248811, ISSN: 0018-9251**

**Description**

**Domaine de l'invention**

L'invention concerne de manière générale les systèmes de détection acoustique, et en particulier un système de détection acoustique pour détecter différentes cibles menaçantes, pénétrant dans une zone sensible définie par rapport à une infrastructure à protéger.

**Art antérieur**

Certaines infrastructures accessibles par voie sous-marine peuvent être exposées à différents types de menaces, telles que des menaces sous-marines avec ou sans plongeurs, potentiellement propulsées avec une capacité de rayon d'action et une vitesse importante. De telles menaces peuvent par exemple venir déposer une charge explosive au niveau de l'infrastructure. Des exemples d'infrastructures sensibles comprennent :

- les infrastructures s'ouvrant sur une large entrée de port militaire ou civil, d'une raffinerie ou toute autre installation côtière à forte valeur pouvant être menacée par une menace venant de la mer ;

- Les plateformes pétrolières au large ;

- Les bâtiments de surface restant stationnaires ou mobiles dans une zone, et possédant une capacité d'émission acoustique à basse fréquence.

Des dispositifs de surveillance sous-marine ponctuels sont généralement utilisés pour protéger l'accès par voie sous-marine à de telles infrastructures sensibles.
Par exemple, les systèmes DDS (acronyme pour « Diver Détection Sonar », signifiant Sonar De Détection de Plongeur) peuvent être utilisés pour détecter acoustiquement des plongeurs menaçants.
Les systèmes de surveillance connus peuvent présenter différents niveaux de performance de localisation de cible, comme décrit dans SUHWAN KIM ET AL: "Performance comparison of target localization for active sonar systems", IEEE TRANSACTIONS ON AEROSPACE AND ELECTRONIC SYSTEMS, IEEE SERVICE CENTER, PISCATAWAY, NJ, US, vol . 44, no. 4, 1 octobre 2008, pages 1371-1380.
Les systèmes de surveillance anti-plongeurs actuels sont typiquement basés sur des sonars Haute Fréquence monostatiques. Généralement, de tels systèmes comprennent un émetteur pour chaque récepteur, l'ensemble monostatique émetteur-récepteur colocalisés détectant sur un secteur ou au mieux sur un cercle de rayon R égal à la portée monostatique. Pour les sonars monostatiques DDS classiques, utilisés pour la détection de plongeurs sur quelques centaines de mètres, la durée de l'impulsion est généralement inférieure à 100 msec (millisecondes), ce qui limite le gain de traitement de tels sonars. Par ailleurs, de tels sonars sont sujets à des pertes d'absorption en raison des hautes fréquences de fonctionnement. En pratique, il est très difficile d'utiliser plusieurs sonars monostatiques anti plongeurs « chaînés » car s'il est nécessaire de prévoir des sonars suffisamment proches les uns des autres pour détecter, chaque émetteur gêne le récepteur voisin situé à distance proche, ce qui nécessiterait au contraire d'espacer les émetteurs. Pour résoudre cette contrainte il peut en résulter :

- une réduction du rythme maximal d'émissions possibles et donc du flux d'informations sur la menace, et/ou
- une réduction de la bande disponible, chaque émetteur devant utiliser une bande différente de ses plus proches voisins, la réduction de bande créant une réduction notable de portée dans une zone de portée le plus souvent limitée par la réverbération, surtout pour les menaces à très faible index de cible tels que les plongeurs.

Les systèmes de détection actuels ne permettent pas de détecter avec un préavis suffisant une cible rapide (une cible « rapide » avec une aide de traction a classiquement une vitesse d'environ 2 à 3 noeuds, tandis qu'une cible « non rapide » sans aide de traction a classiquement une vitesse de 1 noeud environ), à des distances suffisamment lointaines par rapport à l'infrastructure pour pouvoir mettre en oeuvre des actions préventives (alarmes, interception de cibles, etc.) avant que la menace n'atteigne l'infrastructure. Par exemple, il n'est pas possible actuellement, en raison de l'absorption en haute fréquence, de détecter trois fois plus loin des plongeurs menaçants allant trois fois plus vite (3 noeuds versus 1 noeud) munis d'un petit engin de traction, qui ont à la fois un faible bruit en passif, et un faible index de cible en actif.

**Définition générale de l'invention**

L'invention vient améliorer la situation. A cet effet, elle propose un système de détection acoustique pour détecter des cibles au moins partiellement immergées dans une zone sensible définie par rapport à une infrastructure, le système de détection comprenant au moins un groupe de détection multistatique, chaque groupe de détection multistatique définissant une zone de détection, et comprenant :

- Un émetteur immergé émettant en basses fréquences ;
- Une pluralité de récepteurs immergés comprenant au moins deux récepteurs, chaque récepteur d'un groupe donné formant avec l'émetteur du groupe un couple bistatique, chaque couple bistatique générant une zone de détection élémentaire entourant une zone d'ombre, une zone d'ombre associée à un couple bistatique correspondant à une zone de non détection, la zone de détection du groupe étant constituée par l'ensemble des zones de détection élémentaires des récepteurs du groupe, la zone d'ombre de chaque récepteur dans un groupe de détection donné est recouverte au moins partiellement par les zones de détection élémentaires des récepteurs voisins du système de détection, les récepteurs d'un groupe donné décrivent au moins une forme linéaire par morceaux et les récepteurs d'un groupe donné peuvent comprendre au moins une paire de référence, la paire de référence comprenant des récepteurs adjacents et équidistants de l'émetteur, le segment rectiligne reliant les récepteurs de la paire de référence étant situé à une distance D de l'émetteur, dite distance émetteur-récepteur de référence, la distance d'un récepteur donné du groupe par rapport à l'axe de symétrie de la paire de référence, parmi les récepteurs du groupe autres que les récepteurs de la paire de référence, dépendant de la distance émetteur-récepteur de référence D et de la distance $(2x_1)$ entre les récepteurs de la paire de référence.

En particulier, la distance $2x_1$ entre les récepteurs de la paire de référence peut être une fonction de la distance émetteur-récepteur de référence D et du rayon de détection minimal $R_{mono}$ d'un sonar monostatique équivalent sur l'ensemble des cibles possibles.

Les récepteurs de chaque groupe peuvent être agencés selon au moins une couche tandis que, pour au moins un groupe du système de détection, les récepteurs d'au moins une couche du groupe décrivent une forme linéaire, les récepteurs de la paire de référence étant symétriques par rapport à un axe de symétrie passant par l'émetteur.

La distance $x_i$ entre un récepteur donné $RX_i$, autre que les récepteurs de la paire de référence, et l'axe de symétrie de la forme peut dépendre de la distance $x_{i-1}$ entre le récepteur adjacent $RX_{i-1}$ et l'axe de symétrie, le récepteur adjacent étant situé entre le récepteur donné et l'axe de symétrie, tandis que la distance du *i - ème* récepteur par rapport au récepteur de référence, situé du même côté que le *i - ème* récepteur par rapport à l'axe, dépend de l'indice i du récepteur et de la distance $x_1$ du récepteur de la paire de référence par rapport à l'axe de symétrie.

En particulier, la distance $x_1$ entre un récepteur de la paire de référence et l'axe de symétrie du groupe peut être au moins égale à une valeur seuil minimale $x_{1min}$:

$$x_{1min} = \frac{D}{\sqrt{2}} \cdot \sqrt{\sqrt{1 + \left(\frac{R_{mono}}{D}\right)^4} - 1}$$

Dans un mode de réalisation, pour une couche linéaire d'un groupe donnée telle que la distance $x_1$ est égale à la valeur seuil minimale, la surface

$$\mathcal{A}ire(\mathcal{T}_i)$$

d'un triangle

$$\mathcal{T}_i$$

formé par un point coïncidant avec l'émetteur du groupe et deux points coïncidant avec deux récepteurs adjacents de la couche, divisée par le cosinus d'un angle $\theta_i$ désignant l'angle d'insonification du récepteur $RX_i$ par rapport à l'axe de symétrie peut être égale à la moitié de la surface

$$\mathcal{A}ire(S)$$

d'un carré S ayant un côté égal à la portée minimale du sonar monostatique équivalent $R_{mono}$ :

$$\mathcal{A}ire(\mathcal{T}_i)/\cos(\theta_i) = \mathcal{A}ire(S)/2 = R_{mono}^2/2$$

Dans un mode de réalisation, la distance $x_1$ d'un récepteur de la paire de référence par rapport à l'axe de symétrie peut être au plus égal à une valeur seuil maximale $x_{1_{max}}$:

$$x_{1_{max}} = R_{mono}^2/D$$

Dans un mode de réalisation, pour une couche linéaire d'un groupe donnée, la surface

$$\mathcal{A}ire(\mathcal{T}_i)$$

d'un triangle de référence

$$\mathcal{T}_i$$

formé par un point coïncidant avec l'émetteur du groupe et deux points coïncidant avec deux récepteurs adjacents $RX_{i-1}$ et $RX_i$ de la couche, divisée par le cosinus de l'angle $\theta_{Mi}$ entre l'axe de symétrie, d'une part, et l'axe passant par l'émetteur TX et par un point $M_i$ situé au milieu du segment délimité par les récepteurs adjacents, peut être égale à la surface

$$\mathcal{A}ire(S)$$

d'un carré S ayant un côté égal au rayon de détection minimal d'un sonar monostatique équivalent $R_{mono}$ :

$$\mathcal{A}ire(\mathcal{T}_i)/\cos(\theta_{Mi}) = \mathcal{A}ire(S) = R_{mono}^2$$

La valeur de la distance $x_1$ d'un récepteur de la paire de référence par rapport à l'axe de symétrie peut être avantageusement comprise entre la valeur de seuil minimale $x_{1_{min}}$ et la valeur de seuil maximale $x_{1_{max}}$.
En particulier, la position de chaque récepteur $RX_i$ peut être telle que l'aire de la surface

$$\mathcal{A}ire(\mathcal{T}_i)$$

d'un triangle

$$\mathcal{T}_i$$

est inférieure ou égale à $R_{mono}^2 \cdot \cos(\theta_{Mi})$ et supérieure ou égale à $R_{mono}^2 \cos(\theta_i)/2$ , le triangle

$$\mathcal{T}_i$$

étant formé par un point coïncidant avec l'émetteur du groupe et deux points coïncidant avec deux récepteurs adjacents de la couche, l'angle $\theta_i$ désignant l'angle d'insonification du récepteur $RX_i$ par rapport à l'axe de symétrie et l'angle $\theta_{Mi}$ désignant l'angle entre, d'une part, l'axe de symétrie et, d'autre part, l'axe passant par l'émetteur et par le point $M_i$ correspondant au milieu du segment délimité le récepteur RXi et le récepteur adjacent précédent $RX_{i-1}$.

Dans un mode de réalisation, les récepteurs de chaque groupe peuvent être agencés selon au moins une couche tandis que, pour au moins un groupe du système, les récepteurs d'au moins une couche du groupe décrivent une forme courbe, la position de chaque récepteur $RX_i$ étant telle que l'aire de la surface

$$\mathcal{A}ire(\mathcal{T}_i)$$

d'un triangle $\mathcal{T}_i$ est inférieure ou égale à $R^2_{mono}.cos(\theta_{Mi})$ et supérieure ou égale à $R^2_{mono}cos(\theta_i)/2$, le triangle $\mathcal{T}_i$ étant formé par un point coïncidant avec l'émetteur du groupe et deux points coïncidant avec deux récepteurs adjacents $RX_i$ et $RX_{i-1}$ de la couche, l'angle $\theta_i$ désignant l'angle d'insonification du récepteur $RX_i$ par rapport à l'axe passant par l'émetteur et perpendiculaire à la droite passant par les récepteurs $RX_i$ et $RX_{i-1}$, l'angle $\theta_{Mi}$ désignant l'angle entre, d'une part, le axe et, d'autre part, l'axe passant par l'émetteur, et par le point $M_i$ correspondant au milieu du segment délimité le récepteur $RX_i$ et le récepteur adjacent précédent $RX_{i-1}$.

Dans certains modes de réalisation, le système de détection peut comprendre au moins un groupe ayant au moins deux couches de récepteurs, les couches de récepteurs étant agencées à des distances émetteur-récepteur de référence différentes.

En particulier, chaque couche peut être configurée pour détecter une cible d'index minimal donné, le produit de la distance $2.x_1$ entre les deux récepteurs de référence de la paire de référence d'une couche par la distance $D_{TRX}$ entre l'émetteur et un récepteur de référence de la paire étant déterminé en fonction du carré $R^2_{mono}$ du rayon de détection d'un sonar monostatique équivalent pour une cible d'index minimal donné à détecter au moins par la couche.

Dans un mode de réalisation, le système de détection peut comprendre des couches de récepteurs linéaires et/ou des couches de récepteurs circulaires, une couche linéaire comprenant des récepteurs sensiblement alignés selon une ligne, une couche circulaire comprenant des récepteurs décrivant une forme au moins partiellement circulaire, certains récepteurs pouvant être partagés entre deux groupes quelconques.

Le groupe peut comprendre au moins une première couche linéaire agencée entre l'émetteur et l'infrastructure et au moins une deuxième couche linéaire, l'émetteur étant agencé entre la deuxième couche linéaire de récepteurs et la première couche linéaire de récepteurs.

Chaque couche peut être configurée pour détecter une cible d'index minimal donné et, certains au moins des récepteurs de l'ensemble des groupes peuvent être agencés selon au moins deux lignes de récepteurs principales, les récepteurs adjacents de la première ligne étant distants entre eux d'une distance $d_{inter_1}$ et la distance émetteur-récepteur de référence de la première ligne étant désignée par $D_{TRX1}$, les récepteurs adjacents d'au moins une autre ligne de récepteurs étant distants entre eux d'une distance $d_{inter_2}$ et la distance émetteur-récepteur de référence de cette autre ligne étant désignée par $D_{TRX2}$, la première ligne étant agencée entre l'infrastructure et les autres lignes ; pour des pertes de propagation égales à K fois le logarithme de la distance des trajets de propagation $TL$, le rapport entre le produit $d_{inter1}.D_{TRX1}$ correspondant à la première ligne et le produit $d_{inter2}.D_{TRX2}$ de cette autre ligne peut être déterminé en fonction de l'écart maximal d'index de détection $\Delta(TS)$ des cibles possibles :

$$2Klog\left((d_{inter_2}.D_{TRX2})/(d_{inter_1}.D_{TRX1})\right) = \Delta(TS)$$

Dans un mode de réalisation, chaque récepteur peut être configuré pour recevoir des signaux dans une bande de fréquences inférieure à 30 KHz. Ce mode de réalisation est particulièrement adapté à la détection de menaces de type plongeur avec ou sans aide de traction.

Les zones de détection élémentaires de certains au moins des récepteurs d'extrémité d'un groupe de détection donné peuvent se recouper au moins partiellement avec les récepteurs d'extrémité d'un groupe de détection adjacent.

La distance entre le récepteur d'extrémité d'un groupe donné et le point d'intersection de deux groupes situé au milieu du segment reliant les deux récepteurs d'extrémité adjacents entre les deux groupes, peut être une fonction du carré du rayon de détection du sonar monostatique équivalent $R^2_{mono}$, et de la distance $D_{TRXL}$ entre le point d'intersection et l'émetteur du groupe donné ($D_{TRXL}$).

Le système de détection peut comprendre au moins un capteur choisi parmi le groupe consistant en un capteur magnétique, un capteur acoustique, un capteur non acoustique, ainsi qu'une unité de classification configurée pour utiliser des informations dérivées des signaux du ou des capteurs pour classifier la cible.

En particulier, dans un mode de réalisation avec pistage actif, les signaux de certains au moins des récepteurs peuvent être utilisés la unité de classification pour classifier les cibles détectées, chaque récepteur étant configuré pour fonctionner au moins acoustiquement en mode passif et actif simultanément, chaque récepteur en mode passif traitant des fréquences inférieures aux fréquences traitées en mode actif, une classification acoustique passive étant faite par asservissement du pistage actif, la portée de classification acoustique ou non acoustique étant au moins égale à la moitié de la distance maximale entre deux récepteurs voisins, afin de classifier au moins lors du passage de la cible entre eux.

Dans un mode de réalisation, le système de détection peut comprendre une unité de traitement mettant en oeuvre un traitement cohérent et adaptatif des récepteurs pour recevoir des échos de cibles sur un récepteur y compris pendant la réception directe de l'émission d'impulsions (« Rx pendant Tx »).

Dans un autre mode de réalisation, le système de détection peut comprendre un groupe dont l'émetteur est non omnidirectionnel, le rayon de détection du sonar monostatique équivalent utilisé pour déterminer le positionnement de chaque récepteur RXi du groupe étant une fonction de l'angle $\theta_i$ désignant l'angle d'insonification de l'émetteur vers le récepteur $RX_i$ par rapport à la direction d'émission maximale de l'émetteur.

Dans certains modes de réalisation, certains au moins des groupes adjacents sont configurés pour émettre des codes orthogonaux dans la même bande de fréquences et peuvent avoir des récepteurs communs partagés, les récepteurs partagés utilisant les échos multistatiques des cibles provenant à la fois des émetteurs des groupes adjacents, les récepteurs étant configurés pour distinguer les échos reçus entre deux émetteurs.

Les modes de réalisation de l'invention fournissent ainsi un système réparti modulaire de détection acoustique sous-marine de menaces sur une infrastructure sensible:

- ils permettent de répartir géographiquement différents groupes de détection multistatiques coopérant entre eux (système réparti) ;

- ils permettent d'optimiser le nombre et/ou la forme des groupes de détection multistatiques (modularité).

Le système de détection forme une large barrière de protection adaptée à l'ensemble des menaces potentielles, en fonction de la plage de conditions prévisibles de l'environnement donné, quelles que soient la vitesse et la taille des menaces.

Le système selon les modes de réalisation de l'invention permet de détecter tout type de menaces, comme par exemple des plongeurs motorisés ou non à des distances supérieures aux systèmes existants mais aussi des PSMs (acronyme pour « Propulseurs Sous-Marins », encore désignés par l'acronyme SDV, acronyme pour l'expression anglo-saxone correspondante « Swimmer Delivery Vehicle »), des drones sous-marins AUVs (acronyme pour Autonomous Underwater Vehicles signifiant Véhicules Sous-Marins Autonomes) et même des torpilles ou mini Sous-Marins/midgets à des distances inaccessibles aux systèmes Hautes Fréquences (notamment supérieures à 2 km). Bien que non limitée à de telles applications, l'invention permet de détecter en continu des menaces rapides tout en offrant un temps de réaction suffisant pour la mise en place d'interventions (par exemple de l'ordre de 10 minutes pour une réaction avec intervention humaine sur place ou un temps beaucoup plus court pour une intervention contrôlée à distance, face à certaines menaces telles que des torpilles ou des menaces très rapides).

**Brève description des dessins**

- La Figure 1 représente schématiquement un système de détection acoustique selon certains modes de réalisation ;

- La Figure 2 représente différentes zones de détection d'un groupe de détection multistatique à 4 récepteurs, selon certains modes de réalisation ;

- La Figure 3 est une vue simplifiée du groupe multistatique à 4 récepteurs de la Figure 2, selon certains modes de réalisation;

- La Figure 4 est un diagramme illustrant la directivité horizontale en gisement d'un émetteur constitué d'une colonne posée verticalement, selon un exemple de réalisation ;

- La Figure 5 est un diagramme illustrant la directivité en site du même émetteur constitué d'une colonne positionnée verticalement, selon un exemple de réalisation ;

- La Figure 6 représente le système de détection multistatique selon une configuration partiellement circulaire de 6 récepteurs, selon un exemple de réalisation ;

- La Figure 7A représente un mode de réalisation particulier du système de détection avec configuration entièrement circulaire selon un exemple de réalisation à 6 récepteurs ;

- La figure 7B est une vue géométrique simplifiée d'une couche linéaire de récepteurs d'un groupe multistatique avec 2i récepteurs ;

- La Figure 8A montre un groupe de détection multi-couches ayant une configuration multilinéaire, selon un exemple de réalisation à 2 couches de récepteurs permettant une zone de détection étanche avec trous de détection uniquement internes, sans redondance de panne ;

- La Figure 8B montre un groupe de détection multi-couches ayant une configuration multilinéaire, selon un exemple de réalisation à 2 couches de récepteurs;

- La Figure 9A représente un groupe de détection multi-couches ayant une configuration totalement circulaire, selon un exemple de réalisation ;

- La figure 9B montre un autre mode de réalisation du système de détection comprenant un groupe de détection à une seule couche à configuration totalement circulaire montrant la zone de détection pour deux types de menaces;

- La figure 9C montre un autre mode de réalisation du système de détection comprenant un groupe à configuration totalement circulaire centré au niveau de l'émetteur et utilisant deux couches de récepteurs optimisés chacun pour deux types de menaces à portées différentes ;

- La Figure 10 montre la surface couverte dans un groupe multistatique, selon un exemple de réalisation;

- La Figure 11A est un schéma représentant un système de détection de 2 groupes multistatiques accolés, constitués chacun de 2 couches linéaires de récepteurs, adaptés pour des menaces à faible vitesse et à faibles index de cible, selon un exemple de réalisation ;

- La Figure 11B est un schéma représentant un système de détection à une couche linéaire, selon un exemple de réalisation ;

- La Figure 12 représente un exemple de groupe de détection partiellement circulaire, selon un mode de réalisation ;

- La Figure 13 montre un exemple de groupe de détection, selon un mode de réalisation dans lequel les récepteurs sont agencés selon une configuration circulaire :

- La Figure 14 montre un système de détection comprenant deux groupes de détection accolés, selon un mode de réalisation à configuration linéaire ;

- La Figure 15 représente le procédé de détection, selon certains modes de réalisation.

- La Figure 16 montre un exemple de réalisation du système de détection pour un groupe de 4 récepteurs ;

- La Figure 17 illustre les avantages du système de détection dans un mode de fonctionnement avec Doppler ;

- La Figure 18 est un schéma représentant un système de détection à 4 groupes multistatique à configuration linéaire, selon un exemple de réalisation ;

- La figure 19A est un schéma simplifié représentant un système de détection à 3 groupes multistatiques à configuration circulaire, selon un exemple de réalisation;

- La Figure 19B est un schéma simplifié représentant deux groupes de détection adjacents, selon un mode de réalisation ;

- La Figure 19C est un schéma représentant deux groupes de détection adjacents formant une barrière simplifiée, selon un autre exemple de réalisation ;

- La Figure 19D est un schéma représentant un groupe multistatique comprenant deux couches agencées pour détecter des menaces d'index différents, selon un mode de réalisation ;

- La Figure 20 est un schéma représentant un système de détection à 4 groupes à configuration circulaires, le système étant agencé pour former deux barrières, une des barrières étant formée à partir des groupes circulaires et l'autre barrière étant formée en utilisant des récepteurs partagés par les groupes.

D'autres caractéristiques et avantages de l'invention apparaîtront à l'aide de la description qui suit et des Figures des dessins annexés dans lesquels :

**Description détaillée**

Selon certains modes de réalisation selon l'invention, il est proposé un système de détection acoustique (encore appelé ci-après « système de surveillance ») configuré pour détecter des cibles au moins partiellement immergée dans une zone sensible définie par rapport à une infrastructure, le système de détection comprenant au moins un groupe de détection multistatique, chaque groupe de détection multistatique définissant une zone de détection, et comprenant :

- Un émetteur immergé ;

- Une pluralité de récepteurs immergés comprenant au moins deux récepteurs (RX), chaque récepteur d'un groupe donné formant avec l'émetteur (TX) du groupe un couple bistatique {TX, RX}.

Chaque couple bistatique {TX, RX} génère une zone de détection élémentaire (320) entourant une zone d'ombre, la zone de détection du groupe étant constituée par l'ensemble des zones de détection élémentaires des récepteurs du groupe.

Dans certains mode de réalisation, la zone d'ombre (encore appelée « zone aveugle » ou « zone de non détection ») de chaque récepteur dans un groupe de détection donné est recouverte au moins partiellement par les zones de détection élémentaires des récepteurs voisins du système de détection, les récepteurs voisins pouvant être des récepteurs du même groupe ou d'un groupe voisin.

La « zone d'ombre » d'un couple bistatique donné correspond à une zone de non-détection, mais est entourée par la zone de détection du couple bistatique émetteur/récepteur considéré.

Les récepteurs de chaque groupe peuvent être agencés selon au moins une couche.

Dans un mode de réalisation, pour au moins un groupe du système de détection, les récepteurs d'au moins une couche du groupe décrivent une forme linéaire, les récepteurs de la paire de référence étant symétriques par rapport à un axe de symétrie passant par l'émetteur. La position des récepteurs peut être déterminée itérativement, la position d'un récepteur donné dépendant de la position du récepteur précédent située entre le récepteur donné et l'axe de symétrie.

Dans un autre mode de réalisation, pour au moins un groupe du système, la forme décrite par les récepteurs d'au moins une couche du groupe est une forme au moins partiellement circulaire de rayon donné $R$, la distance inter-récepteur entre deux récepteurs adjacents de la couche dépendant de la distance D entre l'émetteur du groupe et le segment rectiligne reliant les récepteurs adjacents de la couche, dite « distance émetteur-récepteur de référence ». La forme au moins partiellement circulaire peut être centrée sensiblement au niveau de l'émetteur 31 du groupe ou en un autre point.

Il convient de noter que bien que décrites ensemble ci-dessous, certaines caractéristiques de l'invention peuvent présenter des avantages lorsqu'elles sont considérées séparément.

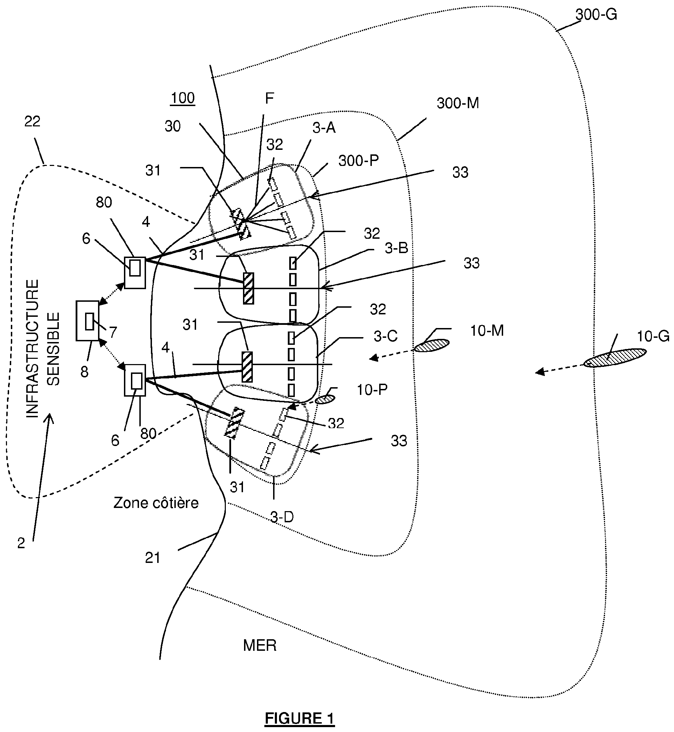

La Figure 1 représente schématiquement un système de détection acoustique 100 pour détecter une cible immergée 10 (encore appelé « menace » ci-après) dans une zone sensible définie par rapport à une infrastructure 2 (encore appelée « infrastructure sensible » ci-après). L'infrastructure 2 peut être tout type d'infrastructure civile ou militaire, industrielle ou touristiques accessible par voie d'eau, c'est-à-dire toute infrastructure 2 située au voisinage d'une zone immergée pouvant être utilisée par une menace pour accéder à l'infrastructure ou être dirigée contre l'infrastructure ou contre les personnes situées au niveau de l'infrastructure. La zone sensible associée à l'infrastructure peut comprendre ainsi une partie de la zone située en amont ou autour de l'infrastructure. Tel qu'utilisé ici, le terme « infrastructure » n'est pas limité à un bâtiment mais englobe toute zone terrestre sensible (par exemple, plateforme pétrolière, port militaire ou civile, bâtiment à haute valeur, etc.). L'infrastructure sensible 2 peut être :

- délimitée par une bordure maritime 21, en partie ou en totalité (par exemple en partie ou en totalité pour une ile ou en totalité pour une plateforme), ou

- par une zone côtière et une limite terrestre 22, qui peut être contrôlée par divers moyens terrestres tels que des barrières physiques formant clôture.

Le système de détection 100 peut être utilisé comme système de surveillance dans certaines applications de l'invention.

La cible 10 peut avoir toute taille et toute vitesse. La cible 10 peut être par exemple une menace sous-marine propulsée telle qu'un plongeur propulsé, un drone, etc. La cible 10 peut être de taille et/ou de vitesse importante et disposer d'une capacité d'emport significative. Le système de détection acoustique 100 selon l'invention permet de détecter de telles menaces bien en amont de l'infrastructure 2, offrant ainsi un temps de réaction suffisant pour neutraliser la menace avant qu'elle n'atteigne l'infrastructure et/ou déclencher des alertes.

Selon un aspect de l'invention, le système 100 (encore appelé « système multistatique » ci-après) comprend au moins un groupe de détection multistatique 3, chaque groupe de détection multistatique 3 définissant une zone de détection 30. La longueur de barrière de la zone de détection 30 du groupe de détection multistatique 3 le long des récepteurs 32 peut dépendre du nombre et/ou de l'espacement entre les récepteurs 32. La zone de détection 30 du groupe de détection multistatique 3 peut également avoir une portée par rapport à la côte 21 à protéger (limite terre/eau) qui dépend de la menace à détecter. Il convient de noter que la représentation des zones de détection 30 et 300 sur la Figure 1 est schématique.

L'ensemble des groupes de détection 3 forment conjointement une zone de détection 300 dont l'étendue dépend du type de menace. Par exemple, comme montré sur la Figure 1 :

- zone de détection 300-P pour une petite menace de type plongeur, typiquement lente ;

- zone de détection 300-M pour une menace de type plongeur muni d'une aide de traction ou d'un engin de propulsion de taille moyenne ou encore une menace de type drone ;

- zone de détection 300-G pour une menace de type gros engin sous-marin (pouvant avoir une vitesse plus importante que la vitesse des menaces précédentes).

Le système multistatique 100 selon certains modes de réalisation peut permettre d'obtenir:

- Une portée, définie par la limitation de la zone de détection 300-P par rapport à l'émetteur 31, qui est supérieure à la portée de référence d'un sonar DDS classique de puissance comparable pour un plongeur ayant une vitesse typique de 1 noeud,

- Une portée, définie par la limitation de la zone de détection 300-M par rapport à l'émetteur 31, qui est au moins 2 à 3 fois plus importante que la portée de référence d'un sonar DDS classique pour un engin allant à une vitesse typique jusqu'à 3 noeuds,

- Une portée, définie par la limitation de la zone de détection 300-G par rapport à l'émetteur 31, qui est au moins 5 à 10 fois plus importante que la portée de référence d'un sonar DDS classique, pour un gros engin pouvant aller jusqu'à 5 noeuds ou plus.

L'augmentation de portée peut être ainsi quasi proportionnelle à la vitesse des menaces typiques, ce qui permet un temps de réaction quasi constant avant que la menace n'atteigne l'infrastructure à protéger.

Bien que non limitée à de tels modes de réalisation, la suite de la description sera faite principalement en référence à une menace de type plongeur (la zone de détection 300 correspondant alors à la zone 300-P), cette menace correspondant à la pire des menaces et déterminant le dimensionnement du système de détection.

Le système de détection peut comprendre un ou plusieurs groupes multistatiques 3. Dans l'exemple de la Figure 1, le système 100 comprend 4 groupes multistatiques :

- deux groupes 3-B et 3C au centre du système ; et

- deux groupes de détection d'extrémité 3-A et 3-D adjacents aux deux groupes centraux (i.e. situés de part et d'autre du groupe central).

La ligne formée par les récepteurs 32 des groupes centraux 3-B et 3C peut ne pas être parallèle à la côte, en particulier au niveau des extrémités de la ligne de récepteurs 32. Les lignes formées par les deux groupes d'extrémité 3-A et 3-D peuvent être inclinés vers l'infrastructure 2, au niveau de leurs extrémités libres. Ainsi les groupes multistatiques 3 peuvent entourer la partie située en amont de l'infrastructure à protéger (bande côtière par exemple) en formant une barrière étanche à une distance suffisante pour permettre un temps de réaction contre la menace.

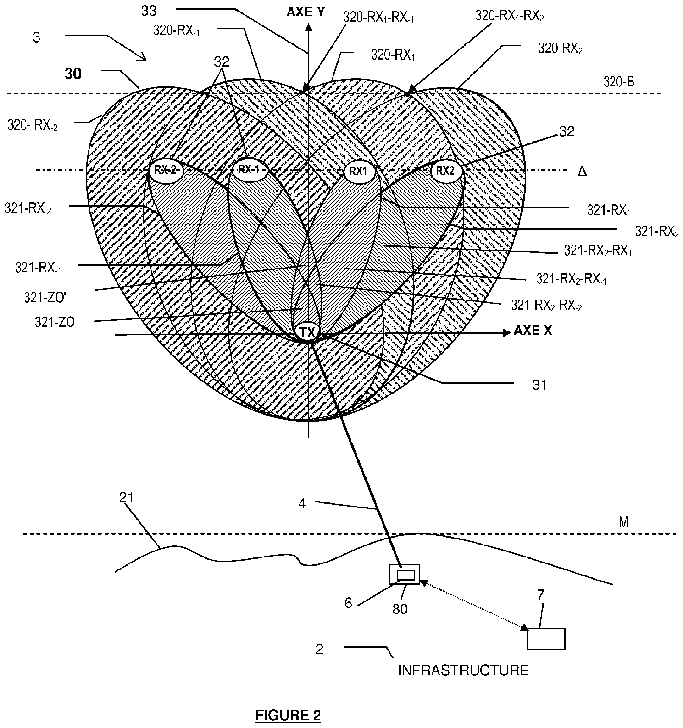

La Figure 2 représente un groupe de détection multistatique, selon certains modes de réalisation. Comme montré sur la Figure 2, chaque groupe de détection multistatique 3 peut comprendre :

- Un émetteur immergé 31 émettant en basses fréquences ;

- Une pluralité de récepteurs immergés 32 comprenant au moins deux récepteurs.

Dans certains modes de réalisation, l'émetteur 31 peut être agencé entre l'infrastructure sensible 2 et les récepteurs 32. Dans d'autres modes de réalisation, le système de détection peut comprendre au moins un groupe ayant au moins deux couches de récepteurs 32, l'une au moins des couches de récepteurs étant agencée entre la côte 21 et l'émetteur 31.

Chaque récepteur 32 (RX) d'un groupe donné 3 forme avec l'émetteur 31 (TX) du groupe un couple bistatique {TX, RX}. Chaque couple bistatique {TX, RX} génère une zone de détection élémentaire 320 entourant une zone d'ombre 321.

La zone de détection 30 de chaque groupe multistatique 3 est ainsi constituée par l'ensemble des zones de détection élémentaires 320 des récepteurs 32 compris dans le groupe 3.

Tel qu'utilisé ici le terme « immergé » désigne un élément (émetteur, récepteur, cible, etc.) immergé dans l'eau au moins partiellement, comment par exemple en environnement maritime (l'élément considéré pouvant être sous-marin ou en surface).

Comme montré sur la Figure 2, chaque groupe 3 comprend au moins une couche de récepteurs 32 ($RX_1$, $RX_2$, $RX_{-1}$, $RX_{-2}$) agencée selon une forme particulière.

La forme décrite par les récepteurs de l'ensemble des groupes de détection multistatique peut être une forme multilinéaire (linéaire par morceaux). En particulier, la forme décrite par les récepteurs 32 d'un même groupe multistatique peut être une forme linéaire comprenant des portions linéaires ou peut inclure au moins courbe, le groupe comprenant au moins deux récepteurs $RX_{-1}$ et $RX_1$, dits « récepteurs de référence » (et formant une paire de récepteurs dite « paire de référence »), symétriques entre eux par rapport à un axe de symétrie 33 (coïncidant avec l'axe Y sur la Figure 2) passant par l'émetteur 31.

Dans l'exemple de la figure 2, la couche de récepteurs est de forme linéaire et tous les récepteurs 32 de la couche linéaire de récepteurs sont symétriques par rapport à l'axe de symétrie 33 (autrement dit la couche présente un axe de symétrie par rapport à cet axe 33).

Dans la suite de la description relative à des configurations linéaires de couches, il sera fait principalement référence à des couches linéaires présentant une symétrie par rapport à cet axe 33 (i.e. tous les récepteurs des couches linéaires étant symétriques par rapport à l'axe 33) à titre d'exemple non limitatif.

Les distances relatives entre les récepteurs 32 peuvent être choisies de sorte que la zone de détection 30 de chaque groupe multistatique 3 assure la détection de la menace la plus difficile à détecter.

Chaque récepteur 32 peut comprendre une antenne multi capteurs configurée pour rejeter par un traitement adaptatif l'émission venant localement de l'émetteur 31, ainsi que la réverbération proche qui l'entoure afin de recevoir la réception de l'écho. Dans certains modes de réalisation, l'antenne peut comprendre une capacité additionnelle de traitement dite « RX pendant TX » (correspondant à l'expression anglo-saxonne « Rx as TX » indiquant que la réception RX de l'écho peut avoir lieu simultanément à la réception sur RX de l'émission TX).

Pour les menaces très lentes, comme des plongeurs classiquement difficiles à détecter par Doppler, et en cas de limitation par réverbération, dans certains modes de réalisation, les récepteurs 32 peuvent être avantageusement éloignés de l'émetteur 31. En effet, pour une menace 10 à distance constante d'un récepteur 32, le niveau de l'écho baisse avec l'éloignement émetteur/récepteur. Cependant, la gêne constituée par la réverbération diminue aussi, ce qui tend à compenser la capacité de détection (signal sur bruit) tant que le bruit ambiant n'est pas limitant.

Dans la suite de la description et notamment pour les formules relatives au positionnement des récepteurs 32, il sera donc considéré que le positionnement des récepteurs 32 par rapport à l'émetteur 31 du groupe est suffisant pour que la réverbération soit devenue suffisamment faible par rapport au bruit ambiant à l'endroit considéré et en sortie de traitement. Une telle propriété peut être obtenue par exemple en choisissant un émetteur 31 ajusté en secteur horizontal selon la géométrie du site à protéger, en site étroit et en large bande d'émission pour permettre une réverbération inférieure au bruit en sortie du traitement des codes d'émission reçus par les antennes de réception. En optimisant la conception (forme géométrique, nombre de transducteurs ou capteurs, etc.) de l'émetteur et/ou du récepteur, le positionnement des récepteurs 32 qui garantit la portée bistatique maximale sur la menace la plus critique est en limitation bruit.

Pour les menaces qui sont facilement détectables en Doppler, dans certains modes de réalisation, les récepteurs 32 peuvent être avantageusement éloignés tant que l'écho de la cible la plus difficile à détecter en Doppler ressort suffisamment du bruit.

Pour constituer un système de surveillance, chaque groupe peut comprendre un émetteur 31 et des récepteurs 32 dont les performances sont optimisées en fonction de certains paramètres d'optimisation, tels qu'un nombre de capteurs important de l'antenne de réception de chaque récepteur 32 permettant une antenne plus directive pour rejeter le bruit et la réverbération.

En complément, pour les menaces détectables en Doppler, ces paramètres d'optimisation peuvent comprendre :

- un émetteur 31 plus puissant ; et/ou

- une durée de l'impulsion d'émission plus importante, y compris sur une durée d'impulsion créant une zone d'ombre (« blanking » en langue anglo-saxonne) à la distance de la cible, ce qui est possible en atteignant une capacité de réjection du trajet direct de l'émetteur 31 par des récepteurs 32 qui permettent d'opérer en mode « RX pendant TX » (« RX as TX » en langue anglo-saxonne).

En effet, dans le mode de réalisation où la durée de l'impulsion d'émission est augmentée, la durée de l'impulsion d'émission T empêche habituellement la détection sur une distance $D_{menace} = cT/2$ ($D_{menace}$ désignant la distance de la menace au récepteur 32 et c la vitesse du son en mètres par seconde). Il convient de noter que dans les réalisations monostatiques classiques, il est impossible d'avoir une très longue impulsion car l'émetteur est confondu ou trop près du récepteur dans les détecteurs monostatiques pour pouvoir recevoir pendant l'émission. De telles longues durées d'émission T même supérieures à 2R/c où R est la portée selon ce mode de réalisation multistatique de l'invention permettent de détecter non seulement des cibles rapides à des distances éloignées de l'infrastructure mais aussi de petites cibles proches en mode « RX pendant TX ».

Les récepteurs 32 peuvent comprendre différents types d'antenne en fonction de certains critères d'application : par exemple selon qu'il est préférable de doubler la puissance de l'émetteur 31, et/ou le nombre d'hydrophones des N récepteurs du groupe, et/ou d'augmenter la durée de l'impulsion, et/ou la capacité de traitement, etc. Dans un mode de réalisation préféré, les récepteurs 32 d'un groupe sont identiques.

Chaque récepteur 32 dans l'exemple de la Figure 2 crée une zone de détection élémentaire 320 et une zone d'ombre 321 de forme sensiblement elliptique, la zone d'ombre d'un récepteur 32 donné correspondant à la zone dans laquelle le récepteur 32 ne peut pas détecter de cible, qui est entourée par la zone de détection du récepteur.

Avantageusement, la zone d'ombre 321 de chaque récepteur 32 dans un groupe de détection donné 3 est recouverte en grande partie par les zones de détection élémentaires 320 des récepteurs voisins. Dans l'exemple de la Figure 2, la zone d'ombre 321-RX$_2$ du récepteur RX$_2$ est recouverte presque totalement par :

• la zone de détection élémentaire 320- RX$_1$ du récepteur voisin RX$_1$, bien que limitée par sa propre zone d'ombre 321- RX$_1$, recouvre la zone d'ombre 321-RX$_2$ sur une grande partie 321-RX$_2$- RX$_1$ ;

• la zone de détection 320-RX$_{-1}$ du récepteur RX$_{-1}$, bien que limitée par sa propre zone d'ombre 321-RX$_{-1}$, ajoute du recouvrement de la zone d'ombre 321-RX$_2$ par la zone 321-RX$_2$-RX$_{-1}$.

• la zone de détection 320-RX$_{-2}$ du récepteur le plus éloigné RX$_{-2}$ de RX$_2$, bien que limitée par sa propre zone d'ombre 321-RX$_{-2}$, ajoute encore du recouvrement en plus des deux précédentes par la zone 321-RX$_2$-RX$_{-2}$.

En résultat, il ne reste comme zone de non-détection du groupe 3 que la zone d'ombre en forme de goutte d'eau 321-ZO. La zone de détection du groupe 3 est donc quasiment sans trou à l'intérieur des limites de portée de la pire menace.

Il convient de noter qu'un résultat similaire serait obtenu même en utilisant :

- uniquement les deux récepteurs RX$_1$ et RX$_{-1}$, avec une zone de non-détection 321-ZO correspondant à la zone 321-ZO' plus importante ;

- 6 ou plus de 6 récepteurs 32, avec une zone de non-détection 321-ZO plus petite.

La zone de non-détection 321-ZO est ainsi d'autant plus petite qu'il y a plus de récepteurs.

La distance inter-récepteurs (i.e. entre deux récepteurs adjacents) d'un même groupe 3 peut avantageusement être irrégulière pour former un recoupement entre les zones de détection bistatique des différents récepteurs, de sorte que la portée définie par la zone de détection 300 du groupe 3 permette de détecter toujours à distance la plus éloignée possible.

En notant 320-RX$_1$-RX$_{-1}$ le point de recoupement le plus lointain de l'émetteur 31 entre la zone de détection 320-RX$_1$ et 320-RX$_{-1}$ des récepteurs RX$_1$ et RX$_{-1}$, et de manière similaire 320-RX$_1$-RX$_2$ le point de recoupement le plus lointain de l'émetteur 31 entre 320-RX$_1$ et 320-RX$_2$, la ligne 320-B passant par ces deux points de recoupement 320-

RX$_1$-RX$_{-1}$ et 320-RX$_1$-RX$_2$ définit la ligne de primo-détection minimale du groupe multistatique 3.

La ligne de primo-détection 320-B détermine le temps maximal $T_{reac}$ de réaction contre la menace. Le temps maximal $T_{reac}$ dépend de la distance $D_{min}$ (encore appelée distance de sécurité) entre la ligne 320-B et la ligne M délimitant l'infrastructure, ainsi que de la vitesse $V_{menace}$ de la menace 10. En particulier, la menace 10 n'a pas le temps d'atteindre l'infrastructure 2 si : $D_{min} > (V_{menace}/T_{reac})$. Le système de détection assure ainsi qu'une menace ne pourra pas franchir la ligne M avant qu'elle ne soit traitée (application d'un moyen de réaction) dans le temps $T_{reac}$.

Cette caractéristique importante selon les modes de réalisation de l'invention, permet de former une barrière de détection d'épaisseur la plus constante possible au-delà de la ligne ou de la courbe formée en reliant les récepteurs 32 du groupe de détection 3.

Le système de détection peut comprendre une juxtaposition de un ou plusieurs groupes multistatiques 3 dont les zones de détection se recouvrent au moins partiellement, ce qui permet de former une barrière autour ou le long de la zone sensible à protéger contre les menaces immergées.

L'émetteur 31 (« TX ») de chaque groupe multistatique 3 peut avoir des coordonnées latitude/longitude fixes, et avoir une hauteur verticale suffisante pour atteindre une directivité en site de finesse souhaitée, à une immersion permettant l'insonification la plus lointaine, pour la bathycélérimétrie considérée. L'émetteur peut par défaut être posé sur le fond ou positionné à une profondeur optimisable en fonction des gradients de célérité qui impacte la propagation. Par exemple, il peut être posé sur le fond marin au large de la zone sensible à protéger lorsque l'infrastructure sensible est agencée à proximité ou dans la mer. Lorsque l'infrastructure sensible 2 est une plateforme en pleine mer, l'émetteur 31 peut être agencé à proximité de la plateforme, et à immersion réglable le long d'un pylone ou par un treuil. La bande de fréquences en émission est choisie en fonction de l'application. Dans certains modes de réalisation, la plage de fréquences en émission peut être avantageusement inférieure à 30 KHz.

Avantageusement, l'émetteur 31 peut être configuré pour insonifier au moins la surface globale de tout le groupe 3.

Les récepteurs 32 (« RX ») peuvent être fixés de différentes manières en fonction de l'environnement. Par exemple, ils peuvent être agencés à une position horizontale fixe, et posés sur le fond marin, au large de la zone sensible à protéger, généralement situés vers le large par rapport à l'émetteur 31.

La distance entre l'émetteur 31 de chaque groupe et la zone sensible à protéger 2 peut être choisie de manière à permettre une alimentation en énergie depuis une source d'énergie 6 et une transmission de données entre les éléments d'un groupe (31, 32) et un dispositif de traitement et exploitation 7 du système de détection 100.

Le système peut comprendre une ou plusieurs sources d'énergie 6 placées dans des locaux techniques 80 (« shelter » en langue anglo-saxonne) d'alimentation de puissance. L'alimentation en énergie peut se faire par exemple au moyen d'un câble 4 connectant l'émetteur 31 à la source d'énergie 6 pour l'alimentation. Il peut être prévu un local technique 80 pour assurer l'alimentation d'un groupe d'émetteur 31. Par exemple, dans le mode de réalisation de la Figure 1, un local technique 80 comprend une source d'alimentation 6 pour alimenter deux émetteurs 31 reliés chacun par un câble 4 au local technique commun 80.

Chaque récepteurs 32 d'un groupe donné 3 peut être relié par au moins un câble électro-optique passant par l'émetteur 31 du groupe, le câble pouvant être séparé ou commun à tous les récepteurs 32 du groupe. Il est ainsi possible d'avoir un unique faisceau regroupant tous les câbles d'un même groupe à protéger ou ensouillé dans le fond de la mer.

Les locaux techniques 80 peuvent être agencés dans la zone sensible. Le nombre de locaux techniques 80 et leur agencement peuvent être choisis pour optimiser la distance de câblage (4) par rapport aux émetteurs 31 des différents groupes.

Dans un mode de réalisation, une partie du traitement des signaux peut être réalisée dans ces locaux 80, le dispositif de traitement 7 fusionnant alors les données issues des différents locaux pour finaliser le traitement.

Les locaux techniques 80 peuvent transmettre les données pré-traitées au dispositif de traitement 7 par tous moyens de communication, par exemple en mode radio-électrique sécurisé ou réseau câblé sécurisé (câblage dans la zone sensible).

La transmission des données entre les éléments (31, 32) des groupes 3 et le dispositif de traitement 7 peut être réalisée en utilisant un réseau de transmission. Dans un exemple de réalisation, l'émetteur 31 peut être situé à quelques kilomètres de l'infrastructure 2 (par exemple 2 Km. Dans certains modes de réalisation, le dispositif de traitement 7 peut être placé dans un centre de surveillance de la zone sensible.

Bien que l'exemple de la Figure 1 montre deux locaux techniques 80, l'homme métier comprendra que l'invention n'est pas limitée à deux locaux techniques et peut inclure un nombre différent de locaux en fonction de l'application de l'invention.

La partie de la source d'énergie électrique 6 pour l'alimentation des récepteurs 32 peut être disposée uniquement au niveau de l'émetteur 31 et distribuée. En variante, la source d'énergie électrique 6 peut être déportée au niveau de chaque récepteur (en particulier pour une basse consommation). La partie déportée de la source d'énergie dans un récepteur donné peut alimenter un préamplificateur avec numérisation, mise en trame et transmission optique.

Il convient de noter que dans les modes de réalisation où la technologie des capteurs est acousto-optique, une fibre optique peut être utilisée en remplacement de l'alimentation électrique.

La transmission des données entre le dispositif de traitement et d'exploitation 7 et les éléments des groupes multistatiques (émetteurs 31, récepteurs 32) peut être par exemple effectuée :

- par fibre optique, la fibre optique ayant par exemple un faible diamètre et étant agencée sur le fond de mer, ce qui offre l'avantage d'une télétransmission discrète tout en offrant une capacité de déport en distance très importante (typiquement supérieur à 10km) ;

- par radio en surface, ce qui permet une autonomie des récepteurs 32 sur une durée dépendant de la batterie, qui peut être rechargeable par connexion électrique à la bouée contenant le bloc radio en surface : les récepteurs 32 peuvent alors être largués ou remplacés rapidement en utilisant par exemple un porteur surface ou un hélicoptère, sans contrainte de câbles.

Le système de détection 100 selon les modes de réalisation offre plusieurs avantages par rapport à des systèmes monostatiques conventionnels (à la fois TX et RX). En particulier, il ne requiert que peu de câbles de puissance (câbles d'alimentation des émetteurs 31). En outre, du fait de la distance avantageuse des émetteurs 31 par rapport à la côte par rapport à la solution monostatique à portée maximum donnée, et la longueur totale des câbles d'alimentation plus nombreux devant alimenter chacun des systèmes monostatiques conventionnels, la longueur totale des câbles d'alimentation de forte puissance (liée à l'émission) en solution monostatique, pour une même surface de détection, est bien supérieure à la longueur nécessaire des câbles pour alimenter les émetteurs 31 par rapport à la côte, selon des modes de réalisation de l'invention.

Par ailleurs, dans un système monostatique conventionnel, deux récepteurs utilisés en barrière monostatique forment des voies l'un vers l'autre pour détecter le franchissement de la barrière par une menace. Un récepteur donné du système monostatique conventionnel est par conséquent aveuglé par l'émission de l'émetteur du récepteur qui lui fait face, qui est relativement proche. Les récepteurs 32 des groupes multistatiques 3 selon les modes de réalisation de l'invention ne nécessitent pas de prévoir une stratégie d'émission. Ils peuvent recevoir les émissions sans gêner les récepteurs voisins, quelle que soit la menace 10. Ils ne requièrent pas non plus de séparer la bande de fréquences disponible au niveau de l'émetteur en sous bandes.

En effet, dans un mode de réalisation de l'invention, chaque récepteur 32 peut être géométriquement à une distance de l'émetteur 31 suffisante pour être capable d'opérer selon un mode « RX as TX », c'est-à-dire pour garder la capacité de recevoir une détection de l'écho même pendant la réception de l'émission de l'émetteur 31 de son propre groupe 3. Ainsi, il est encore moins gêné par un émetteur 31 d'un groupe voisin, à distance généralement supérieure.

La stratégie temporelle d'émission entre eux des divers émetteurs 31 n'est donc pas contrainte, et les émetteurs 31 peuvent tous utiliser de façon optimale la bande maximale et commune pour un design commun, ce qui est un avantage supplémentaire par rapport à la solution multi monostatique classique.

Il convient de noter que, si les émissions voisines n'empêchent pas les détections à l'intérieur d'un groupe donné 3, elles peuvent introduire des ambiguïtés si les codes émis sont exactement les mêmes. Pour remédier à de telles ambigüités, des codes d'émission orthogonaux peuvent être utilisés par le système de détection 100.

Le système de détection 100 selon l'invention permet notamment un découplage entre la distance choisie entre les émetteurs 31 de groupes multistatiques 3 voisins, par rapport aux distances choisies entre les récepteurs 32 d'un groupe donné, le nombre de récepteurs 32 pouvant varier. Il est ainsi possible de régler les distances émetteur/récepteurs de sorte que les portées sur les cibles les plus difficiles à détecter ne soient pas limitées par la réverbération, et donc également que les distances entre deux émetteurs soient relativement importantes. Les réalisations monostatiques classiques ne permettent pas d'effectuer un tel réglage de ces distances. Dans certains modes de réalisation, le système 100 peut comprendre au moins un groupe multistatique 3 dont la configuration géométrique est configurée pour détecter les menaces les plus critiques passant entre :

- un récepteur 32, situé à une extrémité du groupe (chaque groupe comprend deux récepteurs d'extrémités situés de part et d'autre du groupe), et un récepteur d'un groupe multistatique voisin (adjacent au groupe considéré) ;

- entre deux récepteurs 32 voisins quelconques du groupe considéré 3,

pendant une durée suffisante pour déclencher une alerte fiable, quelles que soient les conditions de bruit envisageables de la zone à protéger (même dans les conditions les plus critiques).

La directivité des antennes des récepteurs 32 peut être plus ou moins efficace contre le bruit et/ou du niveau de réverbération sur la menace la plus critique, en fonction de la performance de détection nécessaire pour un espacement donné entre deux récepteurs. La distance inter-récepteur entre les récepteurs d'un même groupe 3 peut être choisie pour optimiser le coût global du système de détection, et/ou la complexité du traitement et/ou le câblage, en augmentant la taille de l'antenne et/ou le nombre d'antennes

Les récepteurs 32 peuvent être des antennes de réception acoustique à faible consommation, permettant une bonne directivité dans la plage de réception de l'actif et/ou de la basse fréquence utile à une détection/classification acoustique passive.

Les récepteurs 32 peuvent être agencés selon différentes géométries.

Dans un mode de réalisation, le système de détection peut comprendre au moins un groupe multistatique 3, les récepteurs 32 de ce groupe multistatique étant agencés selon au moins une couche, les couches comprenant au moins une couche linéaire. La forme décrite par les récepteurs d'une telle couche linaire du groupe est une forme définissant sensiblement une ligne, la distance inter-récepteur entre deux récepteurs adjacents de la couche dépendant de la distance D entre l'émetteur du groupe (31) et la ligne reliant les récepteurs de la couche, dite distance émetteur-récepteur de référence.

En particulier, dans certains modes de réalisation où les couches des groupes multistatiques du système de détection sont linéaires, les récepteurs de l'ensemble des groupes 3 du système de détection peuvent être agencés selon une configuration sensiblement linéaire, certains au moins des groupes adjacents comprenant des portions linéaires sensiblement alignées (par exemple les groupes 3-B et 3-C) et/ou selon une configuration sensiblement « multilinéaire » (encore appelée configuration « linéaire par morceaux »), certains au moins des groupes comprenant des portions linéaires non alignées (par exemple les groupes 3-A et 3-B ou les groupes 3-C et 3-D), comme illustré sur la Figure 1. Dans une configuration multilinéaire, les groupes du système de détection 100 comprennent au moins une couche linéaire, les récepteurs 32 de la couche linéaire étant agencé sensiblement selon une ligne à distante de l'émetteur 31 du groupe d'une distance donnée, dite « distance émetteur/récepteur de référence » (distance entre l'émetteur 31 du groupe et le point d'intersection entre la ligne Δ et le segment passant par l'émetteur 31 et perpendiculaire à la ligne Δ).

Dans les modes de réalisation où un ou plusieurs groupes comprennent au moins une couche linéaire, de tels groupes peuvent comprendre en outre d'autres récepteurs agencés selon une autre forme, comme par exemple récepteurs agencés selon une forme au moins partiellement circulaire.

Dans les modes de réalisation où le système de détection comprend au moins une couche ayant une configuration linéaire par morceaux ou au moins partiellement circulaire et centrée sensiblement au niveau de l'émetteur, les récepteurs de référence de la couche présentent au moins un axe de symétrie passant par l'émetteur sur lequel la distance D peut être déterminée en fonction de la position souhaitée du point de recoupement des zones de détection de deux récepteurs adjacents qui est le plus éloigné de l'émetteur. Cette position peut être située soit à l'extérieur du cercle, soit sur le cercle, soit sur le milieu du segment joignant ces deux récepteurs. L'ensemble de ces points de recoupement forment la zone de primo-détection sous forme d'une ligne courbe ou linéaire par morceaux qui est souvent la donnée d'entrée d'un problème de surveillance à résoudre.

Sur la Figure 2, les récepteurs d'un même groupe sont agencés selon au moins un segment de droite sur une ligne continue Δ (i.e. la ligne Δ passe par les récepteurs 32). Dans une configuration de barrière multilinéaire (i.e. formée de lignes de récepteurs alignées ou non alignées), le nombre et l'agencement des récepteurs 32 par groupe, le nombre de groupes multistatiques, l'agencement des groupes multistatiques peut être choisi de sorte que la ou les lignes de récepteurs Δ s'étendent en amont de l'infrastructure (et des émetteurs 31) et de part et d'autre de celle-ci (i.e. la ou les lignes de récepteurs forment des barrières linéaires de part et d'autre de l'infrastructure 2).

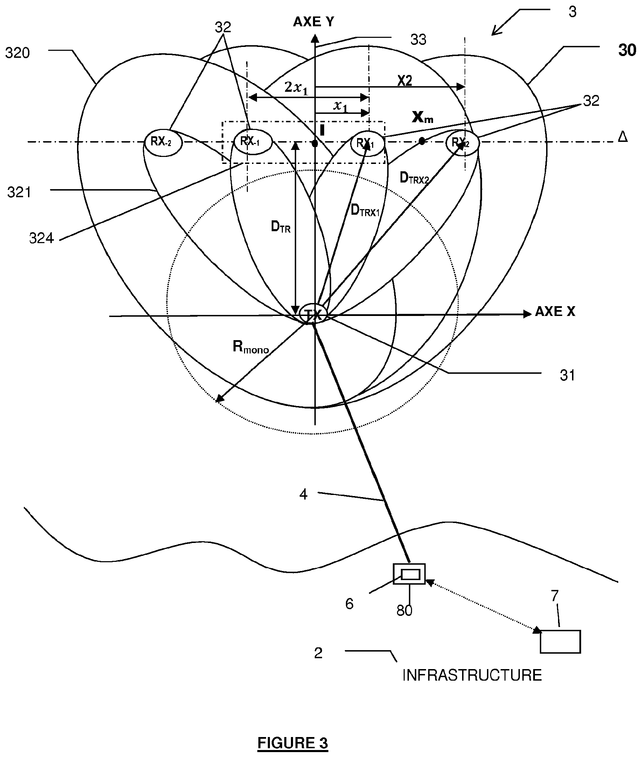

La Figure 3 représente un groupe de détection multistatique à 4 récepteurs, selon certains modes de réalisation, positionné par rapport à un repère (X, Y). La Figure 3 montre les coordonnées utilisées pour caractériser la position des récepteurs 32 du groupe multistatique 3 agencé selon une configuration multilinéaire par rapport à l'émetteur 31. L'axe Y coïncide avec l'axe de symétrie 33 du groupe multistatique 3 qui passe par l'émetteur 31, l'axe X étant perpendiculaire à l'axe Y. Le référentiel (X, Y) est centré au niveau d'un point O coïncidant avec l'emplacement de l'émetteur. La notation $X_{-i}$ et $X_i$ (ou $x_{-i}$ et $x_i$) sera utilisée pour désigner les abscisses $X_{-i}$ et $X_i$ (respectivement $x_{-i}$ et $x_i$) de deux récepteurs $RX_{-i}$ et $RX_i$ symétriques par rapport à l'axe de symétrie 33 (la valeur absolue de l'abscisse $X_{-i}$ étant égal à $X_i$ par symétrie). Par convention, l'indice i associé à un récepteur augmente en fonction de l'éloignement du récepteur 32 par rapport à l'axe de symétrie 33. La notation $x_i$ (abscisse positive) désignera ainsi également la distance entre chacun des deux récepteurs symétriques $RX_{-i}$ ou $RX_i$ et l'axe de symétrie 33. La notation $R_i$ (respectivement $R_{-i}$) pourra être également utilisée pour désigner la position géométrique d'un récepteur $RX_i$ (respectivement $RX_{-i}$).

Dans une configuration multilinéaire, la distance entre l'émetteur 31 et la ligne formée par les récepteurs 32 du groupe de détection multistatique 3 est notée $D_{TR}$ comme illustré sur la Figure 3.

Dans un mode de réalisation, la distance intra-récepteur peut diminuer avec l'éloignement des récepteurs 32 par rapport à l'axe de symétrie 33 augmente, la distance $2X_1 = 2a$ entre les deux récepteurs $RX_{-1}$ et $RX_1$ les plus proches de l'axe de symétrie (dits « récepteurs de référence ») étant alors la plus grande.

La distance $D_{TRX_i}$ représente la distance entre l'émetteur TX et le récepteur $RX_i$. Le cercle de rayon $R_{mono}$ représente la performance qu'aurait un système monostatique qui serait constitué d'un récepteur colocalisé avec l'émetteur TX.

Dans une configuration multilinéaire des récepteurs, l'émetteur 31 est configuré pour insonifier le plus loin possible une colonne d'eau autour et le plus loin possible au-delà du segment de barrière constitué au large du groupe formé par les N récepteurs 32.

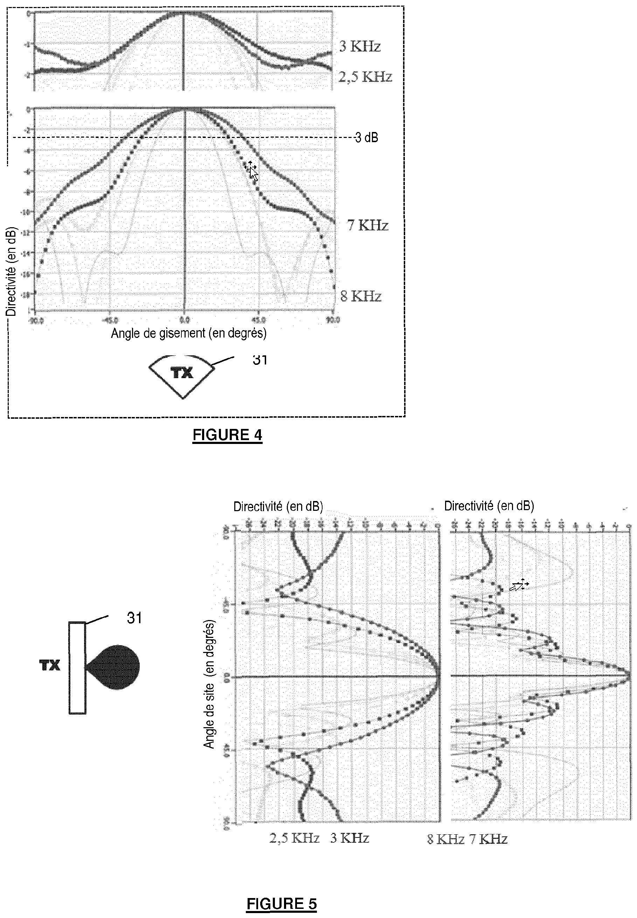

La Figure 4 est un diagramme illustrant la directivité horizontale en gisement émetteur d'une colonne posée verticalement, selon un exemple de réalisation pour un système de détection 100 à configuration multilinéaire et non totalement circulaire. Un tel type d'émetteur est à ouverture en gisement sectorielle limitée, mais potentiellement plus adapté qu'un émetteur omnidirectionnel.

Comme illustré sur la Figure 4, l'émetteur 31 peut avoir une large ouverture sectorielle en gisement vers le large, par exemple au moins à +/- 45° et de préférence au moins à +/-60° de largeur, même à 6 dB du maximum dans l'axe, comme montré sur les diagrammes de la Figure 4.

La Figure 4 montre notamment que l'émetteur 31 insonifie tout son groupe 3 sur environ :

- plus ou moins 80 degrés à 3 Khz et à plus ou moins 2 dB, et

- plus ou moins 45 degrés à 8 dB et à 8 KHz.

La Figure 5 est un diagramme illustrant la directivité en site émetteur d'une colonne positionnée verticalement, selon un exemple de réalisation du système de détection. Comme montré sur la

Figure 5, l'émetteur peut avoir une directivité très étroite en site. La Figure 5 montre notamment un émetteur 31 avec colonne verticale de transducteurs pour un site fin. A 3KHZ et à -3dB, l'émetteur 31 insonifie à plus ou moins 20 degrés. A 8kHZ, et à - 8 dB l'émetteur 31 insonifie à plus ou moins 10 degrés.

De telles caractéristiques permettent de limiter le nombre de trajets multiples se réverbérant sur les interfaces tout en focalisant l'énergie pour des propagations autour de l'horizontale à faible rasance (typiquement moins de +/- 10°de largeur à 3 dB).

L'émetteur 31 peut avantageusement être constitué d'une colonne verticale de transducteurs, par exemple posée verticalement sur le fond sur un support permettant la correction en site éventuelle de pente du fond, ce qui peut être avantageux pour favoriser l'insonification la plus lointaine possible quand le pinceau d'émission en site est fin, et pour limiter la réverbération du fond.

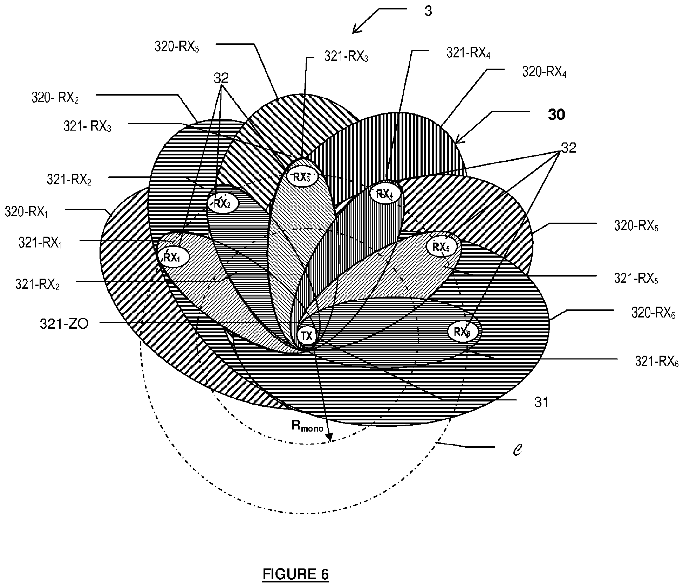

La Figure 6 représente le système de détection multistatique 100 selon une configuration circulaire des récepteurs 32. Dans un tel mode de réalisation, le système comprend au moins un groupe multistatique 3 ayant une ou plusieurs couches de récepteurs 32, les couches comprenant au moins une couche à configuration dite « circulaire ». Les récepteurs de la couche à configuration circulaire sont agencés selon une forme au moins partiellement circulaire (les récepteurs peuvent décrire un cercle entier ou une portion de cercle). Les récepteurs 32 d'une telle couche peuvent être agencés selon au moins un arc de cercle C. Dans certains modes de réalisation, le centre de l'arc de cercle C peut coïncider sensiblement avec l'emplacement de l'émetteur 31. Dans un tel mode de réalisation, un seul groupe multistatique 3 peut être utilisé, l'émetteur 31 pouvant insonifier sur un large secteur, avantageusement unique et omnidirectionnel si la zone à protéger est entièrement circulaire, comme le cas d'une plateforme pétrolière par exemple.

Dans une configuration circulaire, l'émetteur 31 peut être configuré pour insonifier jusqu'à 360° et le plus loin possible, dans une bande de fréquences aussi large que possible. Pour un émetteur omnidirectionnel, dans la gamme de fréquences dite basse ou moyenne (typiquement en dessous de 20 ou 30 KHz), les anneaux FFR (acronyme pour « Free Flooded Ring » signifiant littéralement Anneaux de Céramique Immergés) peuvent être utilisés pour former des antennes verticales, à pinceau fin en site, des anneaux FFR de tailles différentes pouvant être intercalés.

Dans les modes de réalisation dans lesquels un ou plusieurs groupes comprennent au moins une couche circulaire, de tels groupes peuvent comprendre en outre d'autres récepteurs agencés selon une autre forme, à l'intérieur ou non de la forme circulaire, comme par exemple des lignes de récepteurs (récepteurs agencés en lignes), les lignes de récepteurs pouvant être alignées entre elles ou non.

Dans les configurations circulaires de couche du groupe multistatique, la notation $d_{inter} = 2x_i = 2a$ pourra être utilisée pour désigner la distance inter-récepteur entre deux récepteurs adjacents $RX_i$ et $RX_{i+1}$ d'une couche à configuration circulaire. Par convention, dans les configurations de couche circulaire, l'indice i associé à un récepteur 32 augmente le long de la forme circulaire ou partiellement circulaire. La notation $R_i$ pourra être également utilisé pour désigner la position géométrique d'un récepteur $RX_i$ tandis que la position géométrique de l'émetteur 31 pourra être désignée par *0*.

L'émetteur 31 d'un groupe à configuration circulaire peut être agencé à proximité de l'infrastructure 2 ou au niveau de celle-ci de sorte que la forme circulaire décrite par les récepteurs 32 entoure l'infrastructure 2 au moins partiellement pour couvrir la zone sensible, ce qui minimise également la longueur de câble de puissance. La zone sensible à l'infrastructure 2 inclut la zone d'accès à l'infrastructure par voie maritime.

En petit fond, une bonbonne de mise en pression peut être associée à l'émetteur 31, si la hauteur d'eau est insuffisante, ce qui permet d'éviter une cavitation au niveau d'émission souhaitée. Dans le cas d'une infrastructure 2 de type plateforme ou barge d'exploitation pétrolière située en moyen ou grand fond, les éléments du système de détection (émetteurs 31, récepteur 32) peuvent être fixé à une profondeur intermédiaire selon la bathycélérimétrie ou par défaut sur le fond, ce qui permet d'insonifier les menaces relativement proches de la surface.

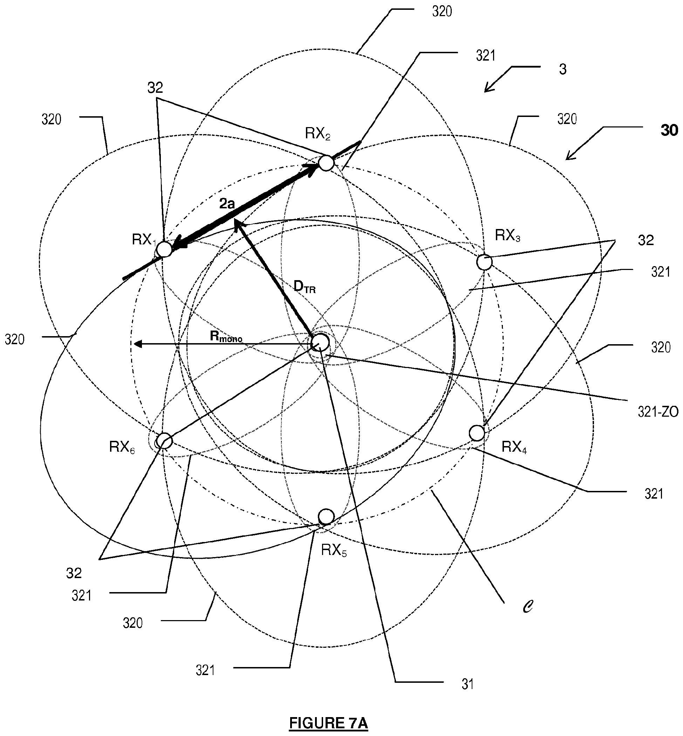

La Figure 7A représente un mode de réalisation particulier du système de détection avec configuration entièrement circulaire.

Comme montré sur la Figure 7A, un pavage de la zone sensible peut être effectué en utilisant un nombre plus ou moins important de récepteurs 32 choisi en fonction de la menace la plus critique à détecter afin d'assurer au moins une zone de détection continue. Dans le mode de réalisation de la Figure 7A, chaque récepteur 32 assure une détection sur un ovale de détection identique 320 dont on retranche l'ellipse 321 correspondant à la zone d'ombre (« blanking ») du récepteur, l'ensemble des récepteurs 32 étant positionnés sur un cercle $\mathcal{C}$ de rayon

$$R_{\mathcal{C}}$$

centré au niveau de l'émetteur 31. L'émetteur 31 peut être ou non différent d'un cercle de rayon $R_{mono}$, le rayon $R_{mono}$ correspondant à la portée monostatique équivalente pour un émetteur couplé à un seul récepteur équivalent à ceux du groupe monostatique mais colocalisés au centre. Par exemple, selon un pavage hexagonal comme représenté sur la Figure 7A, pour lequel le rayon

$$R_{\mathcal{C}}$$

est égal à la portée monoostatique équivalente $R_{mono}$, il est possible d'obtenir une zone de détection délimitée par la surface globale des 6 ovales, continue et quasiment dépourvue de zones d'ombre car les zones de détection élémentaires les recouvrent.

Il ne reste de non recouvert que la Zone d'Ombre en forme de goutte d'eau 321-ZO qui est la seule zone de non-détection de tout le groupement multistatique. Il est donc obtenu une détection quasiment sans trou à l'intérieur des limites de portée de la pire menace.

Le cercle C de rayon

$$R_{\mathcal{C}}$$

peut être inférieur à la portée monostatique équivalente $R_{mono}$ pour rapprocher les récepteurs entre eux ou pour en diminuer le nombre. En réduisant, pour un nombre donné de récepteurs 32, la distance 2*a* entre les récepteurs, chaque ovale de Cassini délimitant une zone de détection élémentaire peut recouvrir de plus en plus les zones de détection élémentaires et/ou les zones d'ombre des récepteurs voisins, ce qui permet de créer de plus en plus de redondance de détection et de recouvrir de plus en plus de zones d'ombre de récepteurs.

En variante, le cercle $\mathcal{C}$ de rayon

$$R_{\mathcal{C}}$$

peut au contraire être supérieur à la portée monostatique équivalente $R_{mono}$ afin d'augmenter la portée limite de chaque ovale de Cassini, ce qui augmente la distance 2a entre les récepteurs, ou peut nécessiter d'augmenter le nombre de récepteurs. En augmentant, pour un nombre donné de récepteurs 32, la distance 2*a* entre deux récepteurs adjacents, chaque ovale de Cassini délimitant une zone de détection élémentaire recouvre de moins en moins les zones de détection élémentaires et/ou zones d'ombre des récepteurs voisins, ce qui limite la redondance de détection et peut résulter en la présence de zones d'ombre de non détection à l'intérieur des limites globales de détection ou voire limiter l'étanchéité de la protection.

Le rayon de détection

$$R_{\mathcal{C}}$$

peut être égal à la portée monostatique équivalente $R_{mono}$

$$(R_{\mathcal{C}} = R_{mono})$$

dans une configuration hexagonale comme représenté sur la Figure 7A. Cela permet avantageusement que chaque ovale de Cassini délimitant une zone de détection élémentaire passe juste géométriquement par la position de ses deux récepteurs voisins. En effet, du fait du pavage hexagonal, le triangle formé par l'émetteur 31 au centre et les deux récepteurs RX1 et RX2, par exemple, est équilatéral. Il en résulte une égalité des produits des distances des côtés suivants, soit :

$$\text{TX-RX}_2 * \text{RX}_2\text{-RX}_1 = \text{TX-RX}_1 * \text{TX-RX}_1$$

Le trajet bistatique de l'écho d'une menace à index de cible supposé constant, située en $RX_2$ et reçu par $RX_1$ sur le cercle C , a donc des pertes globales équivalentes au trajet aller/retour d'un sonar monostatique équivalent de portée $R_{mono}$ qui serait au centre.

La configuration hexagonale de la Figure 7A avec

$$R_{\mathcal{C}} = R_{mono}$$

permet donc une redondance de recouvrement d'un ou plusieurs récepteurs pour une continuité de fonctionnement en panne, à condition que chacun de ces récepteurs soit entouré de 2 récepteurs en fonctionnement, la zone constituée par le cercle de rayon

$$R_{\mathcal{C}} = \text{R}_{mono}$$

restant alors une zone de détection entièrement couverte.

Avec ou sans panne de récepteurs, la zone de détection est ainsi entièrement pleine, sans trou, la seule zone d'ombre correspondant à l'intersection de toutes les ellipses 321-ZO, qui est particulièrement réduite autour de l'émetteur, et a très peu d'impact dur la détection dans un mode opérationnel.

La configuration circulaire de barrière multistatique de l'invention présente plusieurs avantages par rapport à la solution classique multi-monostatique parmi lesquels :

- elle offre un déport géométrique de la barrière des récepteurs 32 avec l'émetteur unique 31 à proximité des sources d'énergie 6, ce qui permet:

    ·une zone de détection déportée pour faciliter le déclenchement d'une alerte avec un meilleur préavis ;

    ·une facilité d'installation des récepteurs déportés, les récepteurs pouvant avoir de faibles besoins énergétiques et utiliser tout type de moyen de transmission de données avec le dispositif de traitement 7;

    ·un positionnement des récepteurs 32 loin de l'infrastructure 2 à protéger qui peut être dans un environnement acoustiquement très bruyant tout en étant apte à détecter une cible en multistatique, même autour de l'émetteur 31 et sans qu'il soit nécessaire de positionner un récepteur en zone bruyante ;

    ·Pour les pires menaces de type plongeurs en circuit fermé qui ont un très faible index de cible TS (acronyme pour « Target Strength » en langue anglo-saxone), surtout lorsqu'ils sont munis d'une petite motorisation à faible TS pour augmenter leur vitesse et donc leur allonge, il est possible de détecter de telles cibles avec un code d'émission de longue durée T pour avoir une bonne résolution Doppler, alors que les systèmes mono-tatiques classiques s'aveuglent sur des durées longues sur un cercle cT/2, le système multistatique permettant lui le « RX pendant TX »

- une meilleure capacité de redondance jusqu'à la limite formée par les récepteurs eux-mêmes même si un récepteur 32 (*RX*) est défaillant ;
- la suppression totale dans le mode « RX pendant TX » ou au moins partielle des zones d'ombre. Les groupes de détection 3 d'un même système de détection peuvent avoir des configurations de récepteurs de forme similaires ou différentes en fonction de l'application.

Dans la suite de la description, les notations suivantes seront utilisées :

*SL* : acronyme pour « Source Level » désignant le niveau sonore de la cible. Le SL correspond au bruit émis par la cible à détecter (en dB)

*TL* : acronyme pour « Transmission Loss » désignant la perte de propagation (en dB)

*TL(TM)* : désigne les pertes de propagation entre le Transmetteur (émetteur 31) et une Menace 10 (en dB)

*TL(MR)* : désigne les pertes de propagation en dB entre une Menace (10) et un Récepteur 32 (en dB);

*R* : désigne la portée de détection en Km, c'est-à-dire la distance jusqu'à laquelle le système de détection détecte une cible ;

*DT* : acronyme pour « Détection Threshold » désignant le seuil de détection→ le système de détection 100 peut détecter quand le niveau de bruit de la cible est suffisamment fort par rapport à ce seuil (seuil en dB) ;

*PL* : acronyme pour « Processing Losses » désignant les pertes de traitement en dB dues aux imperfections de traitement ;

*DI* : acronyme pour « Directivity Index » désignant l'index de directivité de l'antenne de réception (exprimé en dB) ; la directivité représente le filtrage spatial de la réceptivité de l'antenne dans une direction donnée et représente le gain spatial de l'antenne sur le bruit ambiant ;

*TS* : acronyme pour « Target Strenght » désignant l'index de cible à la réflexion de l'impulsion et donc renvoyant un écho (en dB) ;

*NL* : pour « Noise Level » désignant le niveau de bruit ambiant en dB tel que, par exemple, le bruit ambiant en mer qui peut être généré par le trafic maritime, le bruit des vagues, les bruits biologiques, etc.

*T* : désigne la Durée temporelle du code émis en secondes.

En utilisant les notations ci-dessus, le rapport signal sur bruit est celui de l'écho qui entre dans un récepteur 32 rapporté au bruit dans la voie (« beam » en anglais) qui pointe la bonne direction. Il est supposé que la distance DTR suffisante pour que le trajet direct de l'émission sur le récepteur ne le sature pas et n'empêche pas la détection de l'écho, et que la réverbération soit devenue faible devant le bruit ambiant.

La portée de détection monostatique équivalente est caractérisée par un rayon R. Pour les menaces 10 les plus critiques (en supposant par exemple que TS=-20dB) avec c désignant la vitesse du son en mètres par seconde, et

$$SL + TS + DI - 2TL(R) - NL + 10logT - PL > DT$$

Par exemple, dans un exemple de réalisation dans lequel les éléments (émetteur/récepteurs) du système de détection 100 sont agencés dans un environnement maritime en petit fond à gradient négatif de -0,4m/s sur les 20 mètres de hauteur d'eau, pour une « basse » fréquence de 6,5 KHz et un fond ajoutant des pertes linéaires en distance en plus de l'absorption, les pertes en distance d'un modèles de Marsh & Schulkin sont typiquement (en dB):

$$TL(R) = 3 + 17,5 \, log \, R + 1,9 * R/1000,$$

avec R en mètres compris entre 100 mètres (5 fois la hauteur d'eau) et 4km (effet d'arche), avec une influence de la perte de réflexion fond notable puisque l'absorption ne compte ici que pour 0,45 dB/km.

La condition de détection devient :

$$SL + DI + 10logT > 2 * (17,5log(Rm) + 1,9Rkm) + NL + 20 + 5 + 15$$

Le compromis de dimensionnement de l'émetteur en puissance et de l'index de directivité du récepteur peut être calculé, dans cet exemple à partir de :

$$SL + DI + 10logT > 2 * (17,5log(Rm) + 1,9Rkm) + NL + 40$$

Pour une portée R souhaitée sur *TS* = -20*dB* de 750m, pour une barrière qui doit détecter une cible même par très fort niveau de bruit de mer, pour une fréquence de 6,5 KHz, un niveau de bruit de mer de Knudsen de NL = 56,2 dB, il en résulte:

$$SL + DI + 10logT > 103,4 + 96,2, \text{ soit } SL + DI + 10logT > 200\,dB$$

Cette valeur technologiquement faible peut être surprenante par rapport aux caractéristiques des systèmes conventionnels. Elle est due au fait qu'autour de 80 *KHz*, rien que la seule absorption par km est de l'ordre de 20 à 24 dB/km selon le type de fond. Il se rajoute donc au minimum de 15 à 18 dB pour un trajet aller et autant de dB pour un trajet retour, soit environ 33 dB. Le bruit en 17 *logf* n'a baissé que de 17 log (80/6,5) = 18,5 *dB.*

Dans les fréquences moyennes à basse, le système de détection selon l'invention a donc l'avantage, pour une même durée d'impulsion, de présenter un *SL + DI* moins exigeant que le paramètre SL + DI nécessaire aux fréquences hautes classiques.

Ainsi, dans un environnement tropical en petit fond par exemple, même pour les portées classiquement atteignables (750 m) par les DDS actuels sur les menaces pires, il est avantageux en *SL + DI,* à même durée d'impulsion, de diminuer la fréquence. Une telle diminution de la fréquence est encore plus utile pour détecter plus loin des cibles plus rapides et de taille plus importante : en effet, la fréquence optimale diminue encore tant que le TS reste du même ordre vers les fréquences basses, c'est-à-dire que la longueur d'onde n'est pas trop grande par rapport à la taille des éléments de la menace faisant un bon écho.

La zone d'ombre 321 d'un récepteur 32 est d'autant plus grande que la durée de l'impulsion émise est importante. Dans un mode de réalisation à configuration multilinéaire, comme par exemple illustré sur la Figure 2 ou sur la Figure 3 décrite ci-avant, le positionnement des récepteurs peut permettre d'obtenir une barrière étanche d'épaisseur réglée suffisante pour une cible lente constituant la plus faible des menaces, le déclenchement d'une alerte et l'envoi d'un moyen de réaction. La zone de non-détection entre l'émetteur 31 et un récepteur 32 peut nécessiter une relocalisation par intervention locale d'une réaction envoyée sur place (les ovales de Cassini sont séparés pour la menace correspondante à très faible index de cible ).

Selon certains modes de réalisation, il est possible d'améliorer la portée de détection en augmentant la durée de l'impulsion, sans augmenter la zone d'ombre, en utilisant un mode de fonctionnement « RX pendant TX » (les récepteurs 32 peuvent recevoir pendant l'émission). Cela est particulièrement avantageux lorsque la cible est plus rapide ou munie d'un système de propulsion (par exemple de 2 à 3 kts ou 6 kts) comme par exemple un véhicule plus important dans lequel le ou les plongeurs sont protégés du flux d'eau lié à l'avancement).

Dans des modes de réalisation à configuration circulaire, comme par exemple représenté sur la Figure 7A, le système de détection 100 permet d'effectuer un réglage en fonction de la performance de chaque récepteur 32 pour que la zone d'ombre 321 de chaque récepteur soit recouverte au moins partiellement par la zone de détection des deux récepteurs voisins 32, ce qui permet d'obtenir une zone de détection du système de détection dépourvue de zones aveugles, la zone de détection englobant la zone sensible associée à l'infrastructure 2. Un tel réglage peut comprendre un ajustement de l'impulsion d'émission, par exemple avec une durée d'impulsion importante pour éviter d'augmenter le paramètre *SL* et/ou *DI.* Une telle impulsion longue est possible sans que cela ne génère de zones d'ombres importantes en utilisant des codes d'émission particuliers et une capacité de réception pendant l'émission (« RX as TX ») associée à de tels codes. Les codes d'émission de type FM peuvent être par exemple des codes pour lesquels l'écho est reçu à une fréquence suffisamment différente du trajet direct de l'émetteur, avec ou sans Doppler, en raison du simple retard temporel de l'écho par rapport au trajet direct. Le dispositif de traitement 7 peut également mettre en oeuvre un traitement adaptatif pour rejeter le niveau du trajet direct (plus fort) par rapport à celui de l'écho. Il en résulte une réjection *RJtot* suffisante. Dans une application de surveillance utilisant un système d'intervention sur cible en cas de détection de cible, la cible 10 peut être détectée sans qu'il soit nécessaire de relocaliser le système d'intervention sur cible, le dispositif d'intervention pouvant aller à vitesse maximale vers la cible tout en étant continûment dirigé. Dans le cas d'une cible rapide telle qu'une torpille par exemple, le dispositif d'intervention peut être un dispositif de destruction (« hard kill » en langue anglo-saxonne) continûment dirigé vers la cible, sans que la présence du dispositif d'intervention n'ait un effet d'aveuglement de la cible.

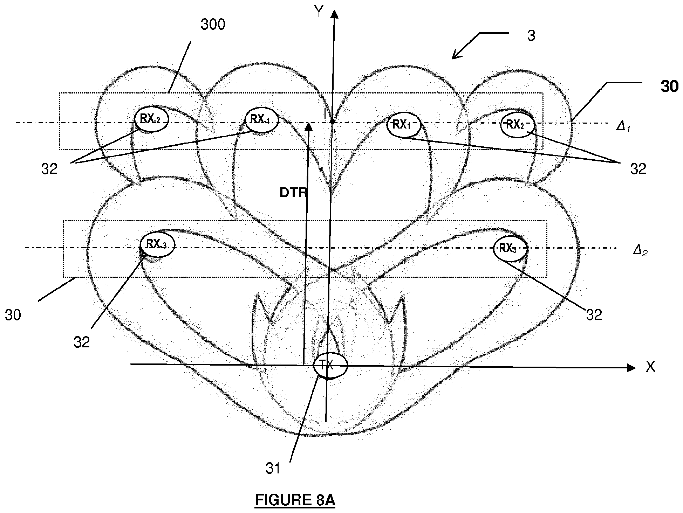

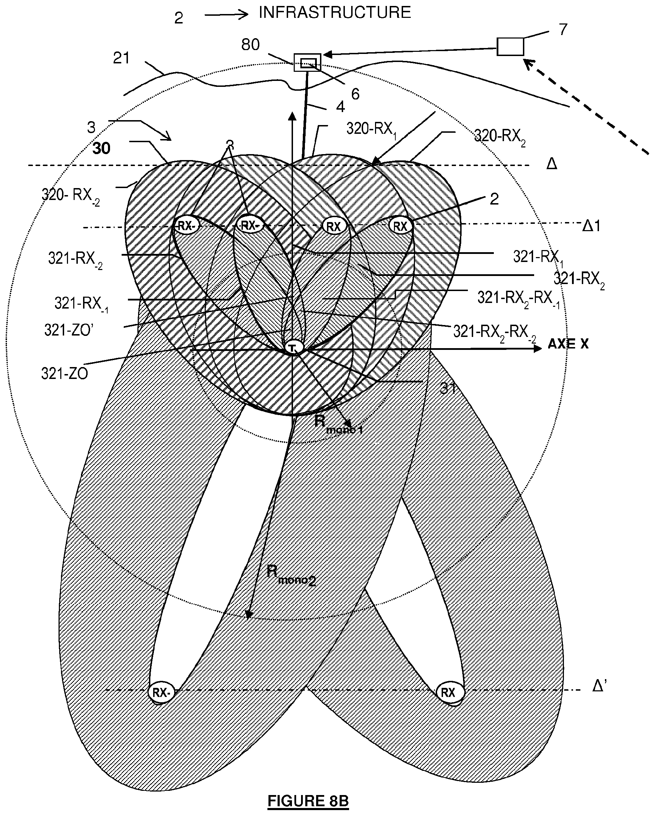

Dans les configurations du système de détection 100 permettant une continuité de fonctionnement en cas de panne ou de destruction d'un récepteur 32 ou de plusieurs récepteurs non adjacents, les récepteurs voisins du récepteur défaillant peuvent être positionnés suffisamment proches pour continuer à garantir l'étanchéité de la protection en cas de récepteur défaillant entouré de 2 récepteurs opérationnel, c'est à dire pour que toute menace passant la ligne droite ou courbe des récepteurs soit détectée. C'est le cas des Figures 2, 3, 6, 7, mais non des figures 8 à 20. Un tel groupe est dit robuste à la panne.

Dans l'exemple de la Figure 7A, il est possible de calculer la rejection totale nécessaire *RJtot* comme suit :

$$RJtot > TL1 + TL2 - TS - TL(D) + PL + DT$$

*TL(D)* représentant la perte de propagation du trajet sur la distance D entre l'émetteur TX et un récepteur RX donné

Sur la Figure 7A, il convient de noter observe qu'une détection limite du couple TX/RX1 passe juste par RX2. Par définition la courbe limite de détection est telle que TL1+TL2 = Constante En supposant que la menace se trouve au niveau de RX2, il vient :

*TL1* + *TL2* = 2 *TL(D)*, car le groupe comprenant l'émetteur *TX* (31) et les récepteurs *RX*1 et *RX*2 (32) forment un triangle équilatéral. D désigne ici le rayon du cercle passant par tous les récepteurs.

Les pertes du trajet bistatique latéral passant par la menace en RX2 pour arriver sont alors égales aux pertes aller/retour allant vers RX1 qui correspond donc aussi la portée monostatique $R_{mono}$ pour une cible dont le TS est supposé identique dans ces deux cas

Par suite, il vient :

$$RJtot > TL(D) - TS + PL + DT$$

Par exemple, en fonction de *D* et pour le cas TS = - 20 *dB* considéré, les valeurs numériques suivantes peuvent être obtenues :

$$\text{pour } D = 500\,m, RJtot > 17{,}5log500 + 1{,}9 * 0{,}5 + 40 = 47{,}2 + 0{,}95 + 40 = 88{,}18\,dB;$$

$$\text{pour } D = 1000\,m, RJtot > 17{,}5log1000 + 1{,}9 + 40 = 52{,}5 + 1{,}9 + 40 = 94{,}4\,dB.$$

Pour un système de détection comprenant 12 récepteurs 32 au lieu de 6, le deuxième trajet bistatique maximal (*RX*1 - *RX*2) est divisé par 2 par rapport à D, ce qui simplifie la réjection (environ 6 dB de gain), mais double le nombre de récepteurs 32 par kilomètre (Km):

$$\text{pour } D = 500\,m, RJtot > 17{,}5log250 + 1{,}9 * 0{,}25 + 40 = 41{,}9 + 0{,}47 + 40 = 82{,}4\,dB;$$

$$\text{pour } D = 1000\,m, RJtot > 17{,}5log500 + 1{,}9 * 0{,}5 + 40 = 47{,}2 + 0{,}95 + 40 = 88{,}2\,dB.$$

Il convient de noter que pour atteindre de telles capacités de rejection caractérisées par *RJtot*, en utilisant certains codes d'émission (par exemple des codes à fréquence instantanée balayant la bande pendant toute l'impulsion, en particulier les codes en modulation de fréquences), le système de détection 100 peut fonctionner en mode « RX pendant TX » (les récepteurs 32 peuvent commencer à recevoir alors que l'émetteur 31 est en train d'émettre) et donc avoir une zone d'ombre autour de chaque récepteur quasi négligeable de l'ordre de l'impulsion comprimée, ce qui permet des impulsions longues favorisant la détection.

Le signal d'émission émis par l'émetteur 31 comprend des impulsions de longueur T. Dans certains modes de réalisation, les impulsions émises par l'émetteur 31 peuvent être modulées avec des codes d'émission Doppler pour améliorer la précision de la mesure du Doppler des échos reçus par une cible 10 en mouvement. L'utilisation de tels codes d'émission Doppler favorise une réjection complémentaire en Doppler de la réverbération et du trajet direct, lorsque la cible a un Doppler supérieur à l'étalement Doppler de la réverbération.

La distance émetteur/Récepteur *D* entre l'émetteur *TX* (31) d'un groupe et un récepteur RX (32) du groupe peut être choisie pour correspondre à la performance d'un sonar monostatique équivalente (comprenant l'émetteur *TX* et un récepteur RX), en fonction des paramètres *SL*, *DI* et *10 logT,* dans les conditions d'environnement de pertes en distance *TL* et bruit *NL* les plus critiques, l'équation du sonar monostatique équivalent étant:

$$SL + DI + 10logT > 2TL(D) + NL + PL + DT$$

Dans le cas des configurations non circulaires, en totalité ou partiellement, mais avec des groupes multistatiques comprenant des récepteurs formant une ou plusieurs lignes, les ordres de grandeur des réjections sont comparables, mais le placement optimal des récepteurs mode de l'invention peut ne pas être régulier.

Dans une configuration multilinéaire d'un groupe de détection du système de détection, les récepteurs 32 du groupe considéré 3 peuvent comprendre au moins une paire de référence (par exemple les paires ($RX_{-1}$, $RX_1$)) et peuvent comprendre des récepteurs 32 adjacents et équidistants de l'émetteur 31 (récepteurs de référence). Les récepteurs $RX_{-1}$ et $RX_1$ de la paire de référence sont reliés par un segment $\Delta$ située à une distance de l'émetteur $D_{TR}$, appelée ci-après distance émetteur-récepteur de référence ($D_{TR}$).

Dans un tel mode de réalisation, la position d'un récepteur donné, notée $X_i$ (ou $X_{-i}$), par rapport à l'axe de symétrie, dans chaque groupe 3, dépend de la distance $D_{TR}$ de l'émetteur 31 par rapport au segment $\Delta$ et de la position du récepteur précédent $X_{i-1}$ (ou $X_{-(i+1)}$ respectivement) par rapport à l'axe de symétrie dans le groupe, pour i (respectivement - i) différent de l'indice de la paire de référence.

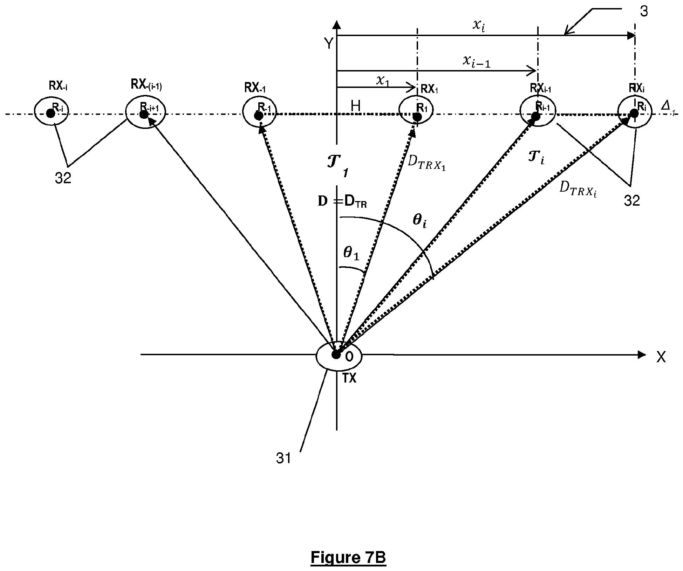

Ainsi, en considérant par exemple l'exemple de la Figure 3 et en référence aux notations indiquées sur la Figure 7B :

- la position du récepteur $X_2$ par rapport à l'axe de symétrie Y dépend de la distance émetteur-récepteur de référence $D_{TR}$ et de la position du récepteur précédent $X_1$ par rapport à l'axe de symétrie ;
- la position du récepteur $X_{-2}$ par rapport à l'axe de symétrie Y dépend de la distance émetteur-récepteur de référence $D_{TR}$ et de la position du récepteur précédent $X_{-1}$ par rapport à l'axe de symétrie.

Tel qu'utilisée ici, l'expression « récepteur précédent par rapport à l'axe de symétrie par rapport à un récepteur donné » désigne le récepteur adjacent au récepteur donné et situé entre le récepteur donné et l'axe de symétrie.

Un tel agencement de récepteurs permet d'obtenir une épaisseur de détection sensiblement constante au-delà de la ligne formée par les récepteurs. Par ailleurs, la zone de détection de chaque groupe de détection 3 forme une barrière de détection dont la longueur dépend de la distance émetteur-récepteur de référence $D_{TR}$. Les distances entre les récepteurs 32 d'un même groupe peuvent être calculées selon l'invention pour permettre la détection des menaces les plus difficiles à détecter (en termes de taille et de vitesse de déplacement) au plus tard au niveau de la ligne des récepteurs. Avantageusement, la zone de détection d'un groupe de détection 3 recouvre au moins partiellement la zone s'étendant entre l'émetteur 31 du groupe 3 et les récepteurs 32, ce qui permet dans certains modes de réalisation de suivre la cible.

Le système de détection multistatique 100 selon les modes de réalisation de l'invention permet d'avoir des récepteurs déportés dans les modes de réalisation avec barrière circulaire, et des émetteurs peu déportés dans les modes de réalisation avec barrière multilinéaire.

En se référant aux notations indiquées sur la Figure 3 et sur la Figure 7B qui montrent les distances inter-récepteurs et intra-récepteurs pour une configuration multilinéaire des récepteurs, les récepteurs 32 de la paire de référence 324 $\{RX_{-1}, RX_1\}$ sont distants entre eux d'une distance inter-récepteur de référence notée $2x_1$, $x_1$ étant la distance d'un récepteur de la paire ($RX_{-1}$ ou $RX_1$) par rapport à l'axe de symétrie (encore notée $x_1$ ci-après a, soit a = $x_1$). Dans un mode de réalisation, la distance inter-récepteur de référence $2x_1$ est une fonction de la distance émetteur-récepteur de référence $D_{TRX}$, et du Facteur De Mérite (FOM) d'un sonar monostatique équivalent représentant la portée minimale $R_{mono}$ d'un sonar monostatique équivalent en considérant l'ensemble des menaces possibles (y compris sur la menace la plus difficile à détecter, dans les conditions d'environnement potentielles les plus difficiles).

Tel qu'utilisé ici, un sonar monostatique équivalent désigne le sonar monostatique qui serait constitué par l'émetteur 31 et un récepteur 32 colocalisé.

Dans les modes de réalisation où le groupe de détection 3 a une configuration multilinéaire, la forme linéaire décrite par un groupe multistatique présente un axe de symétrie Y et la paire de référence est constituée par les récepteurs symétriques par rapport à l'axe de symétrie du groupe sur la même ligne et qui sont les plus proches de l'axe de symétrie : $RX_{-1}$ et $RX_1$. La distance inter-récepteur de référence 2a correspond alors à la distance entre les récepteurs de la paire de référence $\{RX_{-1}$ et $RX_1\}$.

Dans certains modes de réalisation, chaque groupe multistatique, associé à une configuration linéaire des récepteurs, peut comprendre un nombre pair de récepteurs symétriques par rapport à l'axe de symétrie Y (en particulier pour les groupes les plus centraux).

En variante, dans les modes de réalisation où le groupe de détection 3 a une configuration circulaire ou semi-circulaire (comme illustré sur les Figures 6 et 7 par exemple), tous les récepteurs adjacents sont équidistants de l'émetteur 31 (la distance entre un récepteur 32 et l'émetteur est égale au rayon de la forme circulaire) et la forme circulaire décrite par un groupe multistatique présente plusieurs axes de symétrie D1, D2, ... Dn, un axe Di passant par l'émetteur 31 et au milieu du chaque segment reliant deux récepteurs adjacents. Le groupe de détection 3 comprend alors autant de paires de référence que de paires de récepteurs adjacents. Dans un tel mode de réalisation, la distance inter-récepteur de référence $d_{inter} = 2a$ correspond à la longueur du segment reliant deux récepteurs adjacents d'un même groupe.

Dans certains modes de réalisation, au moins certains des groupes multistatiques ayant une configuration des récepteurs circulaire, peut comprendre un nombre pair de récepteurs symétriques par rapport à chaque axe de symétrie Di de la forme circulaire (notamment les groupes les plus centraux).

Dans certains modes de réalisation, la distance inter-récepteur de référence $d_{inter} = 2a$ peut être déterminée à partir du carré $R_{mono}^2$ du rayon de détection $R_{mono}$ du sonar monostatique équivalent, divisé par la distance $D_{TRX_1}$ entre l'émetteur et un des récepteurs ($RX_{-1}$ ou $RX_1$) de la paire de référence 324.

La détection multistatique est obtenue en fonction des 2 trajets :

$$SL + TS + DI - TL(TM) - TL(MR) - NL + 10logT - PL > DT$$

Les distances de trajets bistatiques de propagation maximale acceptable pour former une barrière de détection étanche pour les menaces les plus critiques, à index de cible minimal $TS_{min}$ peut alors s'écrire :

$$TL(TM) + TL(MR) < FOM_{min},$$

avec

$$FOM_{min} = SL + TS_{min} + DI - NL + 10logT - PL - DT.$$

Le paramètre $FOM_{min}$ désigne le Facteur de mérite (« Factor Of Merit ») minimal et représente la performance d'un sonar monostatique (pour un émetteur TX et un récepteur RX donnés) dans un environnement donné, caractérisé par un niveau de bruit $NL$, avec un traitement donné ($T$ et $PL$ et $DT$) pour détecter la menace la plus critique ($TS_{min}$).

Un sonar monostatique utilise un émetteur TX et un récepteur RX au même endroit de sorte que les deux trajets $TM$ (trajet Emetteur-Récepteur) et $MR$ (trajet Menace-Récepteur) se confondent. Le rayon de portée du sonar $R_{mono}$ sur la cible est alors tel que :

$$2\,TL(R_{mono}) = FOM_{min}$$

Tel qu'utilisée ici, l'expression « sonar monostatique équivalent » fait référence à un sonar monostatique constitué d'un même émetteur TX et d'un même récepteur RX (TX et RX étant localisé en un même point pour un sonar monostatique) que ceux utilisés dans les groupes multistatiques 3 selon certains modes de réalisation de l'invention, situé dans un même environnement que les éléments d'émission/réception système de détection 100, en considérant une menace de même TS, et dont la portée de détection est un cercle de rayon $R_{mono}$. L'ensemble des positions de la menace M (10) au-delà desquelles la menace n'est pas détectée vérifie l'équation de détection bistatique suivante, en considérant un tel sonar monostatique équivalent:

$$TL(TM) + TL(MR) = 2\,TL(R_{mono}).$$

Cette équation détermine les ovales de Cassini .

Dans un mode de réalisation du système de détection 100 utilisant une configuration multilinéaire (comme représenté par exemple sur les Figures 2 et 3 par exemple), en considérant que la menace 10 notée M a pour coordonnées (x,y) par rapport à l'émetteur 31 dans le repère {X, Y} considéré, en notant $x_1$ l'abscisse de RX1 et en supposant que les pertes de propagation sont stratifiées horizontalement à titre de simplification (et donc dépendantes uniquement de la distance), il vient :

$$TL(\sqrt{x^2 + y^2}) + TL\sqrt{((x - x1)^2 + (y - D_{TR})^2)} < 2\,TL(R_{mono})$$

Une telle condition définit la condition à satisfaire pour que RX1 détecte la menace M. En considérant une fréquence et des distances de détection suffisamment faibles pour négliger l'absorption, l'équation de la courbe de portée limite devient :

$$K log(\sqrt{(x^2 + y^2)}) + K log\left(\sqrt{(x - x1)^2 + (y - D_{TR})^2}\right) = Constante$$

Cette équation définit une condition à satisfaire pour garantir l'étanchéité de la barrière de détection pour les menaces les plus faibles. Elle détermine des ovales de Cassini comme points de détection possibles de la menace $M$(x,y) par le récepteur $RX_1$ de coordonnées $(x1, D_{TR})$.

Il convient de noter que cette équation peut s'appliquer similairement pour tous les récepteurs $RX_i$ d'indice i du groupe 3, à l'exception d'un récepteur $RX_0$ qui pourrait être situé au niveau de l'axe de symétrie (un tel récepteur central aurait une portée plus grande mais n'aurait pas d'avantage particulier dès lors que l'épaisseur de la barrière est suffisante en tous points). Dans les modes de réalisation préférés, en milieu isotrope, chaque groupe multistatique 3 ne comprend que des paires de récepteurs, sans récepteur central.

En complément, les récepteurs $RXi$ peuvent être agencés de manière à satisfaire une autre condition de détection selon laquelle un récepteur $RXi$ n'est pas agencé dans sa zone d'ombre (« blanking ») qui est déterminée par :

$$D_{TM} + D_{MR} > D_{TRXi} + cT_{sat},$$

avec

$$D_{TRXi} = \sqrt{(x - x_i)^2 + (y - D_{TR})^2}$$

Dans la suite de la description, les notations suivantes seront utilisées :

$$D_{TRXi_{sat}} = D_{TRXi} + cT_{sat},$$

$T_{sat}$ désigne la durée pendant laquelle la réception sur le récepteur $RXi$ de l'impulsion d'émission sature la sortie du traitement, que ce soit spatialement ou du fait de la fonction d'ambiguité du code utilisé :

- En traitement classique, la durée $T_{sat}$ peut être égale à T lorsque le niveau reçu par le récepteur 32 du trajet direct de l'émission est très supérieur à un écho de menace, même proche, empêchant ainsi la réception de l'écho ;

- En traitement adaptatif, en utilisant un traitement et des codes d'émission particuliers, il est possible d'obtenir à la fois une très bonne compression en sortie du traitement cohérent et une très bonne réjection, ce qui permet de détecter un écho dans une direction autre que celle de l'émetteur 31, même pendant la réception de l'émission. Dans un tel mode de réalisation, le système 100 est adapté pour recevoir pendant l'émission elle-même (« RX pendant TX »). Même si la durée de l'impulsion comprimée en sortie de traitement du trajet direct peut être très courte, il existe généralement plusieurs trajets depuis l'émetteur 31. La durée $T_{sat}$ est ainsi non négligeable mais beaucoup plus faible que pour un traitement classique.

Les formules précédentes définissent ainsi les ellipses de foyer TX et RX. Dans la suite de la description, il sera supposé que chaque ellipse associée à un récepteur RX (32) passe sensiblement à proximité de l'émetteur TX et du récepteur RX, dans les modes de réalisation ou le système opère en mode « TX as RX ».

Un tel système de détection 100 offre de nombreux avantages par rapport à une solution multi monostatique conventionnelle, incluant les avantages suivants :

- la forme de la zone de portée de détection est indépendante de la distance entre l'émetteur TX (31) et la limite de la zone maritime sur laquelle est agencée l'infrastructure (côte par exemple) ;

- l'alimentation de l'émetteur peut ne nécessiter qu'un seul câble de puissance ;

- Par ailleurs, il est possible de fixer la distance $D_{TR}$ pour obtenir une barrière d'épaisseur suffisante et qui permette de déclencher une alerte anticipée, pour un temps de réaction suffisant, par exemple pour neutraliser la cible ; il convient de noter que les menaces 10 rapides munies d'un équipement plus gros ont un index de cible TS supérieur et sont détectées plus tôt par le système de détection, sur une plage importante d'index de cible TS, grâce aux basses fréquences de l'émetteur 31.

- La distance entre récepteurs 32 peut être optimisée en la diminuant suffisamment pour que même des menaces 10 faibles ne puissent traverser la barrière sans être détectées soit par au moins un des récepteurs, soit par les deux récepteurs selon le niveau de sécurité souhaité en terme de robustesse à la défaillance ; dans le cas de deux récepteurs, cela permet aussi une meilleure précision de localisation, tout en garantissant un Doppler cible sur au moins un des deux récepteurs.

- Les échos de menaces peuvent être reçus sur un récepteur même pendant la réception directe de l'émission d'impulsions longues (bien supérieures à 100 ms (millisecondes)) sur ce récepteur (« Rx pendant Tx »), ce qui permet un Doppler d'autant plus fin que l'impulsion est longue.

La configuration géométrique des récepteurs 32 peut être optimisée pour obtenir une barrière linéaire robuste à la défaillance (panne ou destruction par exemple) de un ou plusieurs récepteurs non adjacents, les récepteurs voisins à un récepteur adjacent 32 assurant la continuité de service grâce au recouvrement au moins partiel de la zone de détection élémentaire 320 du détecteur défaillant par les zones de détection élémentaires des récepteurs voisins 32.

Une configuration des récepteurs/émetteurs du système selon laquelle l'ovale de Cassini de $RX_{-1}$ passe au niveau du $RX_1$ en mode « RX as TX » en traitement adaptatif ou avec une marge suffisante $cT_{sat}/2$ en traitement classique, cette condition permet de n'avoir aucune zone d'ombre en partie centrale entre les premiers récepteurs $RX_{-1}$ et $RX_1$. Une telle configuration peut être exprimée par le fait que le point RX1 de coordonnées ($x_1$, $D_{TR}$) doit appartenir à l'équation de portée de $RX_{-1}$. L'équation de l'ovale de Cassini de $RX_{-1}$ est:

$$TL(TM) + TL(MRX_{-1}) < 2\,TL(R_{mono}),$$

soit

$$Klog((x^2 + y^2)^{0,5}) + Klog((x - x_{-1})^2 + (y - D_{TR})^2)^{0,5}) < 2\,Klog(R_{mono}).$$

Pour pouvoir détecter une menace M de coordonnées ($x_1$, $D_{TR}$) (en mode « RX pendant TX ») sur l'ovale de Cassini de $RX_{-1}$, il vient :

$$log((x_1{}^2 + D_{TR}{}^2)^{0,5}) + log((x_1 - x_{-1})^2 + (D_{TR} - D_{TR})^2)^{0,5}) = 2log(R_{mono}),$$

soit

$$log((x_1^2 + D_{TR}^2)^{0,5}) + log((x_1 - x_{-1})^2)^{0,5}) = 2log(R_{mono}),$$

soit

$$log(D_{TRX_1}) + log(2x_1) = 2logR_{mono}.$$

Par conséquent, l'abscisse $x_1$ peut être déterminée à partir de l'équation suivante donnant l'abscisse du premier récepteur pour un système minimisant les zones d'ombre et permettant la robustesse à une panne:

$$D_{TRX_1}.2x_1 = R_{mono}{}^2 \quad (1)$$

Le système de détection 100 selon certains modes de réalisation peut vérifier avantageusement une telle équation pour pouvoir détecter efficacement les pires menaces (i.e. menaces les plus difficiles à détecter) dans des conditions d'environnement extrêmes pour lesquelles la portée du sonar monostatique équivalent est $R_{mono}$, la distance inter-récepteur de référence 2a (correspondant au double de la valeur absolue ($|x_1|$) de l'abscisse $x_1$ de chaque récepteur

de la paire de référence par rapport à l'axe de symétrie, soit $2a = 2|x_1|$).

Comme $D_{TRX_1}$ dépend de l'inconnue $x_1$, l'équation (1) peut être formulée encore sous la forme :

$$2x_1\sqrt{(D^2 + x_1^2)} = R_{mono}^2 \qquad (2)$$

En notant $\theta_1$ l'angle correspondant à l'angle entre l'axe de symétrie et le segment joignant l'émetteur TX et le récepteur RX1 de la paire de référence, l'équation (2) peut encore être exprimée par l'équation (3) ci-dessous :

$$D = cos(\theta_1) * D_{TRX1}, \text{ avec } D = D_{TRX} \text{ ; et}$$

$$2x_1 D / cos(\theta_1) = R_{mono}^2 \qquad (3)$$

L'équation (3) peut être interprétée géométriquement en termes de surface.

La figure 7B est une vue géométrique simplifiée d'une couche linéaire de récepteurs d'un groupe multistatique 3, à configuration multilinéaire. La figure 7B montre notamment l'angle $\theta_1$ correspondant à l'angle entre l'axe de symétrie et le segment joignant l'émetteur TX (31) et le récepteur $RX_1$.

Comme montré sur la figure 7B, le produit $x_1 D$ de l'équation 3 correspond au produit de la base de longueur $x_1$ par la hauteur $D$ du triangle

$$\mathcal{T}_1$$

ayant pour sommets les points O, $R_1$, et $R_{-1}$ définis comme suit :

-   le point O désigne l'origine des axes X et Y et coïncide sensiblement avec l'émetteur TX (31) du groupe 3 considéré,

-   le point $R_1$ désigne sensiblement l'emplacement du récepteur $RX_1$ de la paire de référence (situé à droite de l'axe de symétrie) ;

-   le point $R_{-1}$ désigne sensiblement l'emplacement du récepteur $RX_{-1}$ de la paire de référence (situé à gauche de l'axe de symétrie).

De plus, pour le groupe considéré, l'angle $\theta_1$ correspond à l'angle d'ouverture d'insonification de l'émetteur TX vers le récepteur RX1 de la paire de référence qui est situé à droite de l'axe de symétrie du groupe. La Surface de ce triangle T1 de sommets 0, $R_1$ et $R_{-1}$, notée

$$\mathcal{A}ire(\mathcal{T}1),$$

correspond à la moitié du produit entre la base du triangle et la hauteur ((Base * Hauteur)/2), soit $2x_1 D/2$

$$(\mathcal{A}ire(\mathcal{T}1) = 2x_1 D/2),$$

ce qui correspond à la moitié du terme 2x,D de l'équation (3). Par conséquent, l'équation (3) peut être reformulée par la formule de l'équation (4) suivante :

$$\mathcal{A}ire(\mathcal{T}1)/ cos(\theta_1) = R_{mono}^2/2 \qquad (4)$$

L'équation (4) est équivalente aux équations (1), (2) et (3). Le terme de droite de l'équation (4) correspond à la moitié de la surface d'un carré $\mathcal{S}$ de côté

$$R_{mono} \left( \mathcal{A}ire(\mathcal{S}) = R_{mono}^2 \right).$$

Ainsi, selon certains modes de réalisation, pour un groupe donné, la surface

$$\mathcal{A}ire(\mathcal{T}1)$$

d'un triangle de référence formé par l'émetteur 31 du groupe et les deux récepteurs $RX_1$, $RX_{-1}$ de la paire de référence du groupe, divisée par le cosinus du demi angle d'ouverture $\theta_1$ du triangle au niveau de l'émetteur 31 peut être égale à la moitié de la surface

$$\mathcal{A}ire(\mathcal{S})$$

d'un carré S ayant un côté égal à la portée minimale du sonar monostatique équivalent $R_{mono}$. Un tel agencement du système de détection 100 permet d'obtenir un recouvrement maximal des zones d'ombre des récepteurs du groupe avec redondance de panne, et de détecter les pires menaces (menaces les plus difficiles à détecter) dans des conditions d'environnement extrêmes (i.e. pire conditions d'environnement) pour lesquelles la portée du sonar monostatique équivalent est égale à $R_{mono}$.

Par ailleurs, en posant $X = x_1^2$, l'équation (2) peut être exprimée sous la forme d'une équation bicarrée du second degré en $X : 4X(D^2 + X) = R_{mono}^4$.

Soit :

$$x_1 = \frac{D}{\sqrt{2}} \cdot \sqrt{\sqrt{1 + \left(\frac{R_{mono}}{D}\right)^4} - 1} \qquad (5)$$

Ainsi, la distance $x_1$ d'un récepteur de ladite paire de référence par rapport à l'axe de symétrie peut être déterminée en utilisant l'équation (5) pour garantir un recouvrement maximal des zones d'ombre des récepteurs du groupe considéré avec redondance de panne, et détecter les pires menaces dans les pires conditions d'environnement.

La distance $x_1$ d'un récepteur de la paire de référence par rapport à l'axe de symétrie 33 peut être ainsi au plus à la valeur donnée par l'équation (5).

Il convient de noter que selon la valeur de $D = D_{TR}$ par rapport à $R_{mono}$ :

- Si D < $R_{mono}$, l'écartement entre un quelconque des 2 récepteurs {RX1, RX-1} de la paire de référence et l'axe de symétrie 33 est de plus en plus grand ;

- Si $D = \sqrt{3}/2 * R_{mono}$, D correspond à la distance $D_{TR}$ de la corde d'un hexagone inscrit dans le cercle de rayon $R_{mono}$ (comme montré sur la Figure 7A) ; $x_1$ satisfait alors $x_1 = \frac{D}{\sqrt{3}} = R_{mono}/2$ ;

- Si D = $R_{mono}$, la distance entre l'émetteur TX du groupe et la ligne formée par les récepteurs 32 est égale à $x_1$ = 0,455D soit $2x_1$ = 0,96D ;

- Si $= 2\sqrt{3} * R_{mono}$, alors $x_1 = \frac{D}{2\sqrt{2}}$ et un écartement plus faible est obtenu entre l'un quelconque des deux récepteurs de la paire de référence et l'axe de symétrie 33 du groupe tandis que la barrière de protection est plus éloignée de l'émetteur ;

- Si D > $R_{mono}$, un écartement de plus en plus faible est obtenu entre l'un quelconque des deux récepteurs de la paire de référence et l'axe de symétrie 33 du groupe tandis que la la barrière de protection est de plus en plus loin de l'émetteur, ce qui satisfait le compromis entre portée et la surface de barrière optimales pour la détection des pires menaces.

Il convient de noter que le cas particulier D = 0, correspond à une situation où l'émetteur et les deux récepteurs de la paire de référence sont alignés. Dans ce cas D = 0, l'équation (5) n'est pas indéterminée car elle peut s'écrire de façon équivalente :

$$x_1 = \frac{1}{\sqrt{2}} \cdot \sqrt{\sqrt{D^4 + R_{mono}^4} - D^2} \, ,$$

ce qui donne :

$$x_1 = \frac{R_{mono}}{\sqrt{2}}$$

On vérifie ainsi que deux récepteurs alignés avec l'émetteur, espacés de part et d'autre de cette valeur, ont bien la propriété d'avoir des zones de détection qui se couvrent mutuellement. En effet, la longueur du premier trajet pour aller de TX à RX$_{-1}$ est égale à $\frac{R_{mono}}{\sqrt{2}}$ tandis que la longueur du deuxième trajet pour aller de la menace (localisée sur le récepteur RX$_{-1}$ ) à RX$_1$ est égale à $2 \cdot \frac{R_{mono}}{\sqrt{2}}$ , soit un produit égal à $R_{mono}^2$ correspondant à la performance du système. Dans les modes de réalisation où un groupe de détection a une configuration multilinéaire, la distance d'un récepteur donné RX$_i$, différent des récepteurs RX$_1$ et $RX_{-1}$ de la paire de référence, par rapport à l'axe de symétrie 33 du groupe peut dépendre avantageusement de la distance du récepteur adjacent RX$_{i-1}$ à ce récepteur donné RX$_i$ par rapport à l'axe de symétrie, le récepteur adjacent RX$_{i-1}$ étant situé entre le récepteur donné RX$_i$ et l'axe de symétrie (RX$_{i-1}$ est ainsi le récepteur adjacent à RX$_i$ qui est plus proche de l'axe de symétrie que RX$_i$). Par ailleurs, dans un tel mode de réalisation, la distance inter-récepteur entre deux récepteurs du groupe diminue quand on s'éloigne de l'axe de symétrie 33.

En particulier, l'abscisse $x_i$ de chaque autre récepteur 32 du système 10 peut être ensuite déterminée itérativement à partir de l'abscisse du récepteur adjacent précédent $x_{i-1}$ , situé du même côté du groupe 3 par rapport à l'axe de symétrie 33 ( ici, i étant positif ou négatif selon la convention de notation choisie et i - 1 différent de l'indice de la paire de référence (|i - 1|≠1)), du carré $R_{mono}^2$ du rayon de détection $R_{mono}$ du sonar monostatique équivalent et de la distance $D_{TRX}$ entre l'émetteur et le point X désignant le point situé au milieu du segment [$RX_{-1}RX_1$].

En particulier, la position du récepteur $RX_2$ peut être telle que le récepteur $RX_1$ recouvre avec son ovale de Cassini au moins partiellement la zone d'ombre de $RX_2$. L'équation de l'ovale de Cassini de $RX_1$ est:

$$K log((x^2 + y^2)^{0,5}) + K log((x - x_1)^2 + (y - D_{TR})^2)^{0,5}) < 2 \, K log(R_{mono}).$$

Pour pouvoir détecter une menace M (en mode « RX as TX ») de coordonnées ($x_2$, $D_{TR}$) sur l'ovale de Cassini de $RX_1$, la condition minimale est:

$$log((x_2^2 + D_{TR}^2)^{0,5}) + log((x_2 - x_1)^2 + (D_{TR} - D_{TR})^2)^{0,5}) = 2 log(R_{mono}),$$

soit

$$log((x_2^2 + D_{TR}^2)^{0,5}) + log((x_2 - x_1)^2)^{0,5}) = 2 log(R_{mono}),$$

soit

$$log(D_{TRX_2}) + log(x_2 - x_1) = 2 log R_{mono}.$$

Ainsi, il vient:

$$D_{TRX_2}.(x_2 - x_1) = R_{mono}^2 \qquad (6),$$

avec comme condition initiale sur $x_1 = R_{mono}^2/D_{TRX_1}$ et $D_{TRX_2}$ désignant la distance entre l'émetteur 31 et le récepteur $RX_2$.

Plus généralement, l'abscisse $x_i$ du $i$-ème récepteur $RX_i$ peut être déterminée itérativement à partir de l'équation suivante selon laquelle le produit entre la distance $D_{TRX_i}$ et la différence $(x_i - x_{i-1})$ entre l'abscisse $x_i$ du $i$-ème récepteur $RX_i$ et l'abscisse $x_{i-1}$ du $(i - 1)$-ème récepteur $RX_{i-1}$ est au plus égal au carré du rayon du sonar monostatique équivalent $R_{mono}^2$ :

$$D_{TRX_i} \cdot (x_i - x_{i-1}) = R_{mono}^2 \quad (7)$$

$D_{TRX_i}$ désignant la distance entre l'émetteur et le récepteur $RX_i$.

En notant $\theta_i$ l'angle correspondant à l'angle entre l'axe de symétrie 33 du groupe considéré et le segment passant par l'émetteur TX et le récepteur $RX_i$, il vient $D = cos(\theta_i) * D_{TRXi}$ avec $D = D_{TR}$, de sorte que l'équation (7) peut être reformulée selon l'équation (8) ci-dessous :

$$(x_i - x_{i-1})D/cos(\theta_i) = R_{mono}^2 \quad (8)$$

L'équation (8) peut être interprétée en termes de surface en considérant un triangle

$$\mathcal{T}_i$$

dont les sommets coïncident sensiblement avec les éléments TX, $RX_i$ et $RX_{i-1}$. En effet, en faisant référence de nouveau à la figure 7B, le triangle

$$\mathcal{T}_i$$

est délimité par les points 0, $R_{i-1}$ et $R_i$ tels que :

- le point O désigne l'origine des axes X et Y et coïncide sensiblement avec l'émetteur TX (31) du groupe 3 considéré,

- le point $R_i$ désigne sensiblement l'emplacement du récepteur $RX_i$ (situé à droite de l'axe de symétrie) ;

- le point $R_{-1}$ désigne sensiblement l'emplacement du récepteur voisin $RX_{i-1}$ (récepteur adjacent à $RX_i$ situé entre l'axe de symétrie et $RX_i$).

La surface du triangle

$$\mathcal{T}_i \,,$$

notée

$$\mathcal{A}ire(\mathcal{T}_i)$$

correspond au produit de la base $(x_i - x_{i-1})$ et de la hauteur $D$ du triangle

$$\mathcal{T}_i$$

divisé par 2 soit $((x_i - x_{i-1})D/2)$, soit à la moitié du produit $(x_i - x_{i-1})D$ du terme de gauche de l'équation (8). L'angle $\theta_i$ désigne l'angle d'ouverture d'insonification de l'émetteur vers $RX_i$. Par conséquent, l'équation (8) peut être reformulée par la formule de l'équation (9) suivante :

$$\mathcal{A}ire(\mathcal{T}_i)/\cos(\theta_i) = R^2_{mono}/2 \qquad (9)$$

L'équation (9) est équivalente à l'équation (8). Le terme de droite de l'équation (9) correspond à la moitié de la surface d'un carré $\mathcal{S}$ de côté

$$R_{mono}\left(\mathcal{A}ire(\mathcal{S}) = R^2_{mono}\right).$$

Ainsi, selon certains modes de réalisation, pour un groupe donné, la surface

$$\mathcal{A}ire(\mathcal{T}_i)$$

d'un triangle de référence

$$\mathcal{T}_i$$

formé par l'émetteur 31 du groupe et les deux récepteurs adjacents $RX_i$, $RX_{-i}$ (différents des récepteurs de la paire de référence du groupe), divisée par le cosinus du demi angle d'ouverture $\theta_i$ du triangle

$$\mathcal{T}_i,$$

au niveau de l'émetteur 31, peut être égale à la moitié de la surface

$$\mathcal{A}ire(\mathcal{S})$$

d'un carré $\mathcal{S}$ ayant un côté égal à la portée minimale du sonar monostatique équivalent $R_{mono}$. Un tel agencement du système de détection 100 permet d'obtenir un recouvrement maximal des zones d'ombre du groupe considéré, avec redondance de panne, et de détecter les pires menaces dans les pires conditions d'environnement pour lesquelles la portée du sonar monostatique équivalent est $R_{mono}$.

Le positionnement des récepteurs autres que les récepteurs de la paire de référence du groupe peut être ainsi tel que le terme

$$\mathcal{A}ire(\mathcal{T}_i)/\cos(\theta_i)$$

est constant. Comme $D_{TRXi}$ dépend de l'inconnue $x = x_i$ il est possible de résoudre l'équation numériquement, en utilisant l'équation (10) suivante :

$$x^4 - 2x_{i-1}.x^3 + (D^2 + x^2_{i-1}).x^2 - 2D^2.x_{i-1}.x + D^2.x^2_{i-1} - R^2_{mono} = 0 \qquad (10),$$

avec comme condition initiale sur $x_1 = R_{mono}{}^2/D_{TRX_1}$.

En positionnant les récepteurs, autres que les récepteurs de la paire de référence, selon l'équation (10), les zones d'ombre sont minimisées et le système de détection est robuste aux pannes.

Ainsi les récepteurs $RX_i$, de chaque côté de l'axe de symétrie, peuvent être positionnés itérativement à partir de la position du premier récepteur ($|i| = 1$), puis en plaçant itérativement chaque récepteur $RX_i$ en fonction du récepteur précédent $RX_{i-1}$ par rapport à l'axe de symétrie, en résolvant l'équation (10) ci-dessus. Le positionnement des récepteurs $RX_i$, autres que les récepteurs de la paire de référence $RX_1$ et $RX_{-1}$, dépend ainsi de la position de l'un quelconque des récepteurs de la paire de référence.

Dans un mode de positionnement itératif, la différence $(x_i - x_{i-1})$ entre l'abscisse $x_i$ du $i$-ème récepteur $RX_i$ et l'abscisse $x_{i-1}$ du $(i - 1)$-ème récepteur $RX_{i-1}$ peut être par conséquent calculée de façon itérative à partir de $x_1$, toutes les distances $x_i$ pour i = 2 à n étant itérativement déterminées pour un ensemble de $2n$ récepteurs, la dernière distance $x_n$ pouvant être déterminée à partir de l'équation $D_{TRXn} \cdot (x_n - x_{n-1}) = R_{mono}^2$

Chaque récepteur suivant $RX_i$ est ainsi associé à un triangle Ti similaire au triangle de la Figure 7B ayant une surface

$$\mathcal{A}ire(\mathcal{T}_i)$$

de manière similaire. Le positionnement d'un récepteur donné $RX_i$, autre que les récepteurs de la paire de référence ne dépend ainsi que de la position du récepteur voisin précédent $RX_{i-1}$ (entre l'axe de symétrie 33 et le récepteur considéré) et de l'angle d'ouverture de l'émetteur en gisement $\theta_i$ du récepteurs i, et peut donc être effectué de manière itérative. Avantageusement, dans les applications de l'invention nécessitant la même propriété de redondance et d'absence de trou de détection entre tous les récepteurs, le positionnement des récepteurs $RX_i$ est tel que le terme

$$\mathcal{A}ire(\mathcal{T}i)/\cos(\theta_i)$$

est égale à une valeur constante A quelque soit l'indice i, la valeur A étant la même pour tous les récepteurs, et correspondant à la valeur $R_{mono}^2/2$ (soit $A = R_{mono}^2/2$).

Ainsi, dans certains modes de réalisation, pour une configuration linéaire d'au moins une couche de récepteur du groupe, les récepteurs $RX_i$ de cette couche peuvent être agencés tels que la relation suivante est satisfaite :

$$\mathcal{A}ire(\mathcal{T}1)/\cos(\theta_1) = \mathcal{A}ire(\mathcal{T}i)/\cos(\theta_i) = \mathcal{A}ire(\mathcal{T}n)/\cos(\theta_n) = A = R_{mono}^2/2 \quad (11)$$

Si la zone de détection 300 du système de détection 100 vérifie partout la même propriété de redondance et d'absence de trou de détection, il est possible notamment d'utiliser l'équation 11 pour déterminer la valeur du rayon de détection minimal nécessaire du sonar monostatique équivalent $R_{mono} = \sqrt{2 . \mathcal{A}ire(\mathcal{T}i)/\cos(\theta_i)}$ quel que soit l'indice i du récepteur considéré .

Un tel espacement intra-récepteur permet de détecter tout type de menace 10, même les plus critiques (en termes de taille et vitesse), dans une barrière continue et sans zone d'ombre, avec un temps de réaction suffisant, compte tenu de la vitesse maximale de la menace, et qui garantisse même une continuité de fonctionnement en cas de défaillance d'un récepteur 32, si le récepteur défaillant est entouré de 2 récepteurs en fonctionnement. La zone de détection correspondant à la position de ce récepteur défaillant constitue alors la limite de détection. En effet, selon l'équation 11, les zones de détection de deux récepteurs voisins le long de l'axe des récepteurs s'y recoupent. La ligne constituée par les récepteurs forme donc alors la limite de détection.

Dans le cas où l'émetteur 31 n'est pas omnidirectionnel mais est directif en gisement vers le large (comme illustré par exemple sur la Figure 4), il convient de noter qu'une telle directivité peut être en outre prise en compte pour déterminer la distance correspondante optimisée entre les récepteurs. Toute couche linéaire ou partiellement circulaire peut avantageusement utiliser un émetteur directif. Au contraire, toute couche totalement circulaire peut utiliser avantageusement un émetteur omnidirectionnel. La largeur du lobe en site est plus étroit que celui en gisement pour insonifier en site le plus loin possible, sans trop créer de réverbération aux interfaces, tout en insonifiant un secteur large en gisement. Aussi, un émetteur directif adapté peut être plus haut que large. Un tel émetteur peut être modélisé, comme sur les figures, par un rectangle de longueur verticale et de largeur horizontale plus réduite, typiquement une colonne d'émission positionnée verticalement de largeur $l$.

La directivité en gisement est représenté par un sinus cardinal noté *sinc* tel que:

$$\text{sinc}(\Theta) = \sin(\Theta)/\Theta \quad \text{Avec} : \Theta = (\pi l/\lambda) . \sin(\theta)$$

La perte à 3 dB correspondant à sine = $1/\sqrt{2}$ est environ $\Theta = 0{,}44\pi$.

Le niveau d'émission SL($\theta$) diminue donc par rapport à son niveau maximum dans l'axe selon :

$$SL(\theta) = SL0 + 10\,log(sinc^2(\theta)) = SL0 + 20log\left(\left|sinc\left(\tfrac{\pi*0,44 sin\theta}{sin(\theta_{3dB})}\right)\right|\right) \quad (12)$$

La valeur de $\theta_{3dB}$, si elle est atteinte +/- $\pi/2$, est telle que : $sin(\theta_{3dB})$ = 0,44$\lambda$/l pour une fréquence moyenne géométrique entre fmin et fmax.

Pour cette fréquence centrale, l'équation (12) devient alors pour une propagation en KlogR soit :

$$KlogOR_1 + Klog2x_1 = KlogR^2{}_{mono} + 10log(\,sinc^2\Theta_1)$$

Il convient de noter que pour déterminer la distance inter-récepteur $x_1$, en prenant en compte la directivité en gisement de l'émetteur et une propagation en KlogR, il suffit de remplacer $R_{mono}$ par une portée monostatique équivalente inférieure prenant en compte l'insonification réduite $R_{mono}(\theta_1)$ telle que :

$$R_{mono}(\Theta_1) = R_{mono}\,.|sinc(\Theta_1)|^{20/K} \quad \text{Avec } \Theta_1 = \pi l/\lambda\, sin(\theta_1) \text{ ou } \Theta_1 = \frac{\pi*0,44 sin\theta}{sin(\theta_{3dB})} \quad (13)$$

Cette directivité étant toutefois assez large, et utilisée principalement pour insonifier dans son lobe principal, il est possible de déterminer une approximation du sinus cardinal de la directivité théorique par un lobe en cosinus de l'angle d'ouverture en gisement, soit :

$$SL = SL0 + 10log(cos^2(\pi/4.\theta/\theta_{3dB}))$$

Sur le diagramme de la Figure 5 par exemple, il peut être observé un angle $\theta_{3dB}$ d'ouverture en gisement, à 3dB de l'ordre de $\pi/4$ pour 6,5 KHz.

Pour cette fréquence centrale, l'équation (12) devient alors :

$$KlogOR_1 + Klog2x_1 = KlogR^2_{mono} + 10.log(cos^2(\pi/4.\theta/\theta_{3dB}))$$

Il est observé dans le cas où la propagation est en 20$logR$, soit $K$ = 20 et $\theta_{3dB}$ = $\pi/4$, que l'équation (13) peut être encore simplifiée comme suit :

$$OR_1 + 2x_1 = R^2_{mono}\,cos(\theta_1) \quad (14)$$

avec

$$OR_1 = (x_1{}^2 + D^2)^{1/2} \text{ et } cos(\theta_1) = D/OR_1$$

En posant $X = x_1/D$ et $\rho_m = R_{mono}/D$, l'équation devient :

$$X^3 + X - \rho_m^2 = 0 \quad (15)$$

Il existe une solution réelle unique de l'équation (15) du troisième degré réduite qui est avantageusement analytique :

$$X = x_1/D = \left(\frac{\rho^2 m}{4} + \sqrt{\frac{1}{27} + \frac{\rho^2 m}{16}}\right)^{1/3} - \left(\frac{\rho^2 m}{4} - \sqrt{\frac{1}{27} + \frac{\rho^2 m}{16}}\right)^{1/3} \quad (16)$$

Dans le cas particulier où $\rho_m = \frac{R_{mono}}{D} = \frac{\sqrt{3}}{2}$ , pour lequel sans directivité à l'émission $X$ = 0,5, il vient :

$$x_1/D = \left(\tfrac{3}{16} + \sqrt{\tfrac{1}{27} + (\tfrac{3}{16})^2}\right)^{1/3} - \left(\tfrac{3}{16} - \sqrt{\tfrac{1}{27} + (\tfrac{3}{16})^2}\right)^{1/3} = 0{,}337$$

La différence d'écartement entre les récepteurs de la paire de récepteurs de référence, entre un mode de réalisation avec directivité à l'émission et un mode de réalisation sans directivité à l'émission, est donc notable et peut être déterminée en utilisant les équations précédentes à partir des équations 12 à 16.

Selon certains modes de réalisation, chaque groupe de détection 3 peut comprendre plusieurs couches 300 de récepteurs (encore appelées « lignes » de récepteurs dans les configurations de couche linéaires) ayant une forme générale similaire.

Le système de détection 100 peut comprendre au moins un groupe ayant au moins deux couches de récepteurs, chaque couche de récepteur étant associée à une distance émetteur-récepteur de référence $D_{TR}$ différente.

L'espacement entre deux récepteurs adjacents augmente avec la distance émetteur-récepteur de référence associée à la couche. Ainsi plus la distance émetteur-récepteur de référence $D_{TR}$ est grande pour une couche de récepteur, plus la distance inter-récepteur peut être importante, les couches les plus éloignées de l'émetteur 31 ayant les distances inter-récepteur (distance entre deux récepteurs adjacents) les plus importantes et inversement les couches les plus proches de l'émetteur 31 ayant les distances inter-récepteur (distance entre deux récepteurs adjacents) les moins importantes. Un tel agencement permet notamment d'adresser des menaces 10 de différents indices avec un unique système de détection.

Dans certains mode de réalisation, le système de détection peut comprendre des couches de récepteurs linéaires et/ou des couches de récepteurs circulaires, une couche linéaire comprenant des récepteurs sensiblement alignés selon une ligne, une couche circulaire comprenant des récepteurs décrivant une forme au moins partiellement circulaire.

Dans un mode de réalisation particulier, le groupe 3 peut comprendre au moins une première couche linéaire agencée entre l'émetteur et l'infrastructure et au moins une deuxième couche linéaire, l'émetteur étant agencé entre la deuxième couche linéaire de récepteurs et la première couche linéaire de récepteurs.

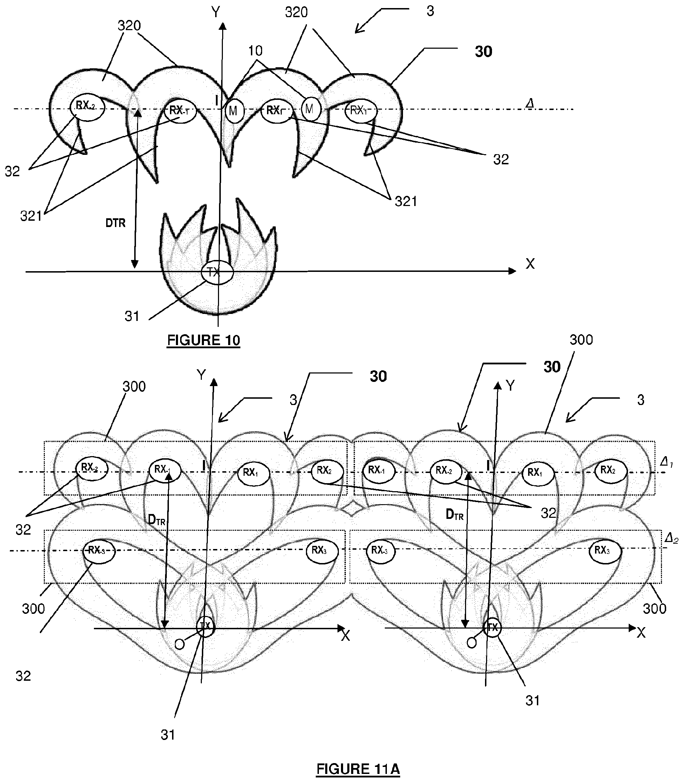

La Figure 8A montre un groupe de détection multi-couches ayant une configuration multilinéaire, selon un exemple de réalisation. Dans l'exemple de la Figure 8A, le groupe de détection à configuration multilinéaire comprend plusieurs lignes $\Delta_k$ récepteurs sensiblement parallèles entre elles, chaque ligne de récepteur formant une des couches du groupe. Il résulte d'une telle configuration de récepteurs une zone de détection globale 300 étanche, avec un espacement avantageux des récepteurs 32 compte tenu de leur portée limitée sur la menace correspondante, bien que la zone de détection présente des trous de détection. Une telle configuration de récepteur ne permet pas de continuité de service en cas de défaillance d'un récepteur. Cependant, la seconde couche linéaire de récepteurs sur la droite $\Delta_2$, permet par rapport à la configuration de la Figure 10, de pouvoir détecter une menace, après que la menace a traversé la droite $\Delta_2$. Cette configuration permet en outre d'obtenir une zone de détection limite globale unique 300 fermée et non constituée de zones séparées entre elles, ce qui facilite l'orientation de la réaction à mettre en oeuvre contre la menace et/ou la relocalisation de la menace.

La Figure 8B illustre un groupe de détection multi-couches ayant une configuration multilinéaire, selon un exemple de réalisation. Dans l'exemple de cette Figure 8B, le groupe de détection à configuration multilinéaire comprend au moins deux lignes $\Delta 1$ et $\Delta'$ de récepteurs 32 sensiblement parallèles entre elles, chaque ligne de récepteur $\Delta 1$ ou $\Delta'$ formant une des couches du groupe et pouvant être avantageusement situées de part et d'autre de l'émetteur 31 par rapport à la zone à protéger, en particulier si les conditions de propagation diffèrent en s'éloignant progressivement de la côte 21 ou de la zone 2 à protéger. Ainsi, la première couche linéaire $\Delta'$ est agencée entre l'émetteur 31 et la côte 21 et la deuxième couche linéaire $\Delta 1$ est agencée en aval de l'émetteur 31 vers le large et donc généralement à plus forte immersion, avec une pente entre les deux lignes de récepteurs. L'émetteur 31 est agencé entre la deuxième couche linéaire $\Delta 1$ de récepteurs et la première couche linéaire $\Delta'$ de récepteurs de façon à obtenir une zone de détection optimale pour l'ensemble des menaces potentielles dans l'environnement considéré.

Dans un mode de réalisation, la distance inter-récepteurs des couches peut être différente d'une couche à l'autre pour détecter différents types de menace. En particulier, la distance émetteur-récepteur de référence associée aux couches pour permettre la distance inter-récepteurs des couches peut augmenter avec la distance émetteur-récepteur de référence associée aux couches plus lointaines pour permettre aux couches les plus éloignées de la côte 21 de détecter les menaces à fort index de cible (menaces les plus rapides nécessitant un préavis plus important) tandis que les couches les plus proches de la côte 21 sont prévues pour détecter les menaces à faible index de cible (menaces les plus lentes pour lesquelles un préavis moins important est suffisant).

Ainsi, la distance entre deux récepteurs adjacents des couches les plus éloignées de la côte 21 peut être avantageusement supérieure à la distance entre deux récepteurs adjacents des couches de récepteurs les plus proches de la côte 21. Dans l'exemple de la figure 8B, l'espacement entre deux récepteurs adjacents de la couche linéaire $\Delta 1$ est inférieur à l'espacement entre deux récepteurs adjacents de la couche linéaire $\Delta'$ qui peuvent donc être à distance plus importante entre eux que sur la ligne Δ1. La couche linéaire Δ' est associée à un cercle de portée monostatique $\mathcal{C}'$ plus importante que la portée de la couche linéaire Δ1 définie par le cercle $\mathcal{C}$ devant détecter des menaces à plus lentes, à plus faible index de cible et donc renvoyant un écho plus faible. Les récepteurs au large sur la ligne Δ' peuvent ainsi avantageusement détecter les menaces les plus rapides, nécessitant un préavis plus important (menaces à fort index de cible ). De telles menaces peuvent être par exemple des menaces équipées d'un engin propulseur augmentant l'index de la cible et donc son niveau d'écho.

Il convient de noter que ce type d'avantages des configurations de groupes à multiples couches linéaires, bien adapté à des menaces d'index différents et aux zones à pertes de propagation non isotrope, peut être obtenu également avec deux couches totalement ou partiellement circulaires.

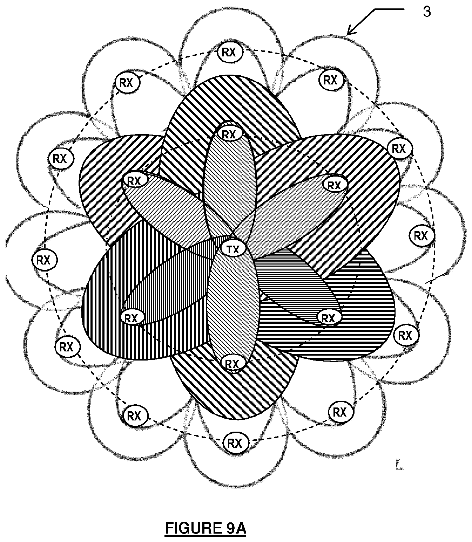

La Figure 9A représente un groupe de détection multi-couches ayant une configuration totalement circulaire, selon un exemple de réalisation. Dans l'exemple de la Figure 9A, le groupe de détection à configuration circulaire comprend plusieurs couches concentriques de récepteurs, chaque couche de récepteur étant circulaire et centrée sensiblement au niveau de l'émetteur 32 (les couches ayant des rayons différents). Le mode de réalisation de la Figure 9A basé sur l'utilisation de deux cercles de récepteurs est adapté aux menaces les plus difficiles à détecter, et permet notamment une détection élargie des menaces de type plongeurs dans le cas où la performance du couple TX/RX sur ces menaces ne permet pas une portée correspondant à un préavis suffisant avec une seule couche. L'exemple de réalisation de cette Figure 9A permet une forte redondance de recouvrement entre les zones de détection élémentaires pour une continuité de service, une telle redondance étant obtenue par la couche interne, la couche externe ne contribuant que très peu à cette redondance. L'avantage des détections simultanées par plusieurs récepteurs est de permettre une meilleure probabilité de détection lorsque l'index de la cible est non isotrope ou dans les applications de l'invention où il est souhaitable de détecter la cible en Doppler avec une radiale Doppler qui ne peut s'annuler simultanément pour tous le récepteurs.

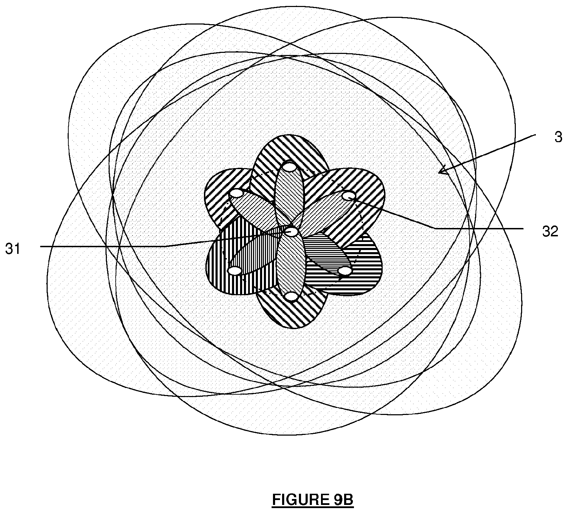

La figure 9B montre un autre mode de réalisation du système de détection comprenant un groupe à configuration totalement circulaire centrée au niveau de l'émetteur 31 et utilisant un seul cercle de récepteurs (correspondant à une couche unique) et adapté pour détecter différents types de menaces. Dans l'exemple de la figure 9B, les zones de détection élémentaires les plus externes sont configurées pour détecter les menaces rapides telles que des menaces munies d'engins propulseurs, tandis que les zones de détection élémentaires les plus internes sont configurées pour détecter les menaces plus lentes à plus faible index de cible telles que des plongeurs sans engins.

Le fort recouvrement des zones de détection entre les zones bistatiques élémentaires respectives à l'intérieur de chacune des couches est un avantage important pour détecter des cibles avec une bonne vitesse radiale Doppler, quelle que soit la trajectoire de menace.

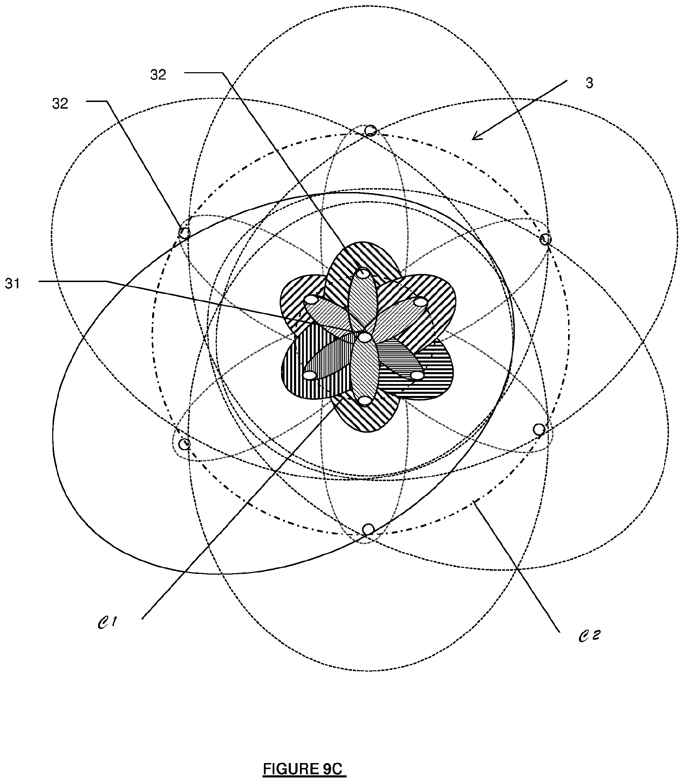

La figure 9C montre un autre mode de réalisation du système de détection comprenant un groupe à configuration totalement circulaire centrée au niveau de l'émetteur 31 et utilisant deux cercles de récepteurs (correspondant à deux couches), comme dans le mode de réalisation de la figure 9A. Dans l'exemple de la figure 9C, le cercle de récepteurs le plus externe

$$\mathcal{C}_2$$

est configuré pour détecter les menaces rapides telles que des menaces munies d'engins propulseurs, tandis que le cercle de récepteurs le plus interne

$$\mathcal{C}_1$$

est configuré pour détecter les menaces plus lentes telles que des plongeurs. En particulier :

• la zone de couverture interne de la zone de détection circulaire interne formée par le cercle de récepteurs le plus interne

$$\mathcal{C}_1$$

peut être dimensionnée de manière similaire à la Figure 9B pour les menaces de type plongeurs, lentes et à faible index de cible, avec redondance de certaines au moins des zones de détection élémentaires et une zone de détection globale 300 dépourvue de trou de détection à l'exception de la zone 321-ZO représentée sur la Figure 7A ;

- la zone de couverture externe de la zone de détection circulaire externe formée par le cercle de récepteurs le plus externe

$$\mathscr{C}_2$$

peut être positionnée pour obtenir une portée plus grande que celle obtenue avec la configuration de récepteurs de la Figure 9B, ce qui permet d'obtenir la portée la plus grande possible (portée maximale) tout en respectant la contrainte de redondance et de recouvrement total des zones d'ombre de la Figure 7A telle que définie par l'équation 4, à l'exception de la zone 321-ZO correspondante, tout point à l'intérieur du cercle formé par les récepteurs étant détecté par au moins 2 récepteurs, avec des Doppler différents.

L'homme du métier comprendra que l'invention s'applique également à des configurations de récepteurs partiellement circulaires, le système de détection 100 comprenant alors au moins un groupe ayant au moins une couche de récepteurs décrivant un arc de cercle. Un tel groupe peut par exemple comprendre deux couches de récepteurs concentriques, chacune décrivant un arc de cercle

$$\mathscr{C}_i$$

de rayon supérieur ou égal à une portée monostatique équivalente $R_{mono_i}$.

Les couches de récepteurs peuvent avoir un nombre de récepteurs différents et/ou des distances intra-récepteurs différentes. Dans certains modes de réalisation, les couches peuvent comprendre au moins une couche à configuration multilinéaire, et/ou au moins une couche à configuration au moins partiellement circulaire ou encore une combinaison de couches multilinéaires et de couches au moins partiellement circulaires.

La couche la plus éloignée de l'infrastructure désigne la couche d'extrémité du système. La portée de la barrière de protection est liée au positionnement de ligne ou de la courbe reliant les récepteurs de la couche d'extrémité.

La forme décrite par les récepteurs 32 d'une même couche d'un groupe multistatique peut être une forme linéaire (droite par exemple) ou une forme courbe pouvant présenter une symétrie par rapport à l'axe 33.

Les couches peuvent présenter le même axe de symétrie 33.

Pour un même émetteur 31 et un ou plusieurs groupes multistatiques contigus, le système de détection 100 peut comprendre N récepteurs 32 de portée R, ou N/2 de portée 2R, sur une même longueur élémentaire de couche de récepteurs 32.

Bien que la description de certains modes de réalisation soit faite principalement en référence à des groupes de détection 3 comprenant une seule couche de récepteurs, à titre d'exemple non limitatif, l'homme du métier comprendra que l'invention n'est pas limitée à un tel mode de réalisation.

La Figure 10 montre la surface couverte dans un groupe multistatique de configuration identique aux Figures 2 et 3, mais pour une menace particulièrement difficile à détecter, typiquement un plongeur sans aide de traction.

Dans certaines applications de l'invention, il peut être prévu de ne détecter que des menaces 10 lentes à très faibles index de cible TS. Dans de telles applications, il n'est pas nécessaire de prévoir une barrière de détection totalement étanche (i.e. sans aucune zone d'ombre). Dans certains modes de réalisation adaptés à de telles applications, les récepteurs 32 de chaque groupe multistatique peuvent être espacés comme représenté dans l'exemple de la Figure 10 de sorte que la barrière multistatique générée par les récepteurs 32 soit suffisamment distante pour avoir un temps de réaction adapté à la mise en place d'une intervention sur une cible M (par exemple pour avoir le temps de positionner un USV dans la bonne direction sachant que la zone de pénétration peut être loin du centre de contrôle, l'USV ayant alors un moyen de relocalisation classique de type DDS et des moyens de dissuasion ou destruction), l'épaisseur de la barrière pouvant varier.

Il peut être noté, dans cet exemple, que les ovales de Cassini sont disjoints, ce qui est le cas lorsque toutes les distances $D_{TRX}$ entre l'émetteur et les divers récepteurs de la figure 10 sont tels que $\frac{D_{TRX}}{2} > R_{mono}$. La distance entre l'émetteur et les récepteurs est alors bien supérieure à la condition précédente de recouvrement des zones d'ombre, ce qui assure un préavis suffisant.

L'alerte lors du passage de la barrière suffit pour réagir lorsque la cible, sans aide de traction, est lente. Ce groupe multistatique est typiquement sans redondance ni recouvrement des zones d'ombre. Il ne constitue un système qu'avec d'autres groupes comme détaillé ci après.

La Figure 11A est un schéma représentant un système de détection 100 comprenant 2 groupes multistatiques accolés, constitués chacun de deux couches linaires de récepteurs, selon un exemple de réalisation multilinéaire dans lequel une partie de la zone de non détection de la Figure 10 est comblée. Un tel système est adapté à des menaces à faible vitesse et à faibles index de cible. Dans ce mode de réalisation, le système 100 comprend deux groupes multistatique 3, chaque groupe étant agencé selon deux couches 300 selon une configuration multilinéaire. Les agencements particuliers à 2 couches de récepteurs 32 (comme dans les exemples des Figures 8 et 11A), créent une barrière multistatique suffisamment éloignée, particulièrement adaptée pour des menaces 10 à faible vitesse et faibles TS.

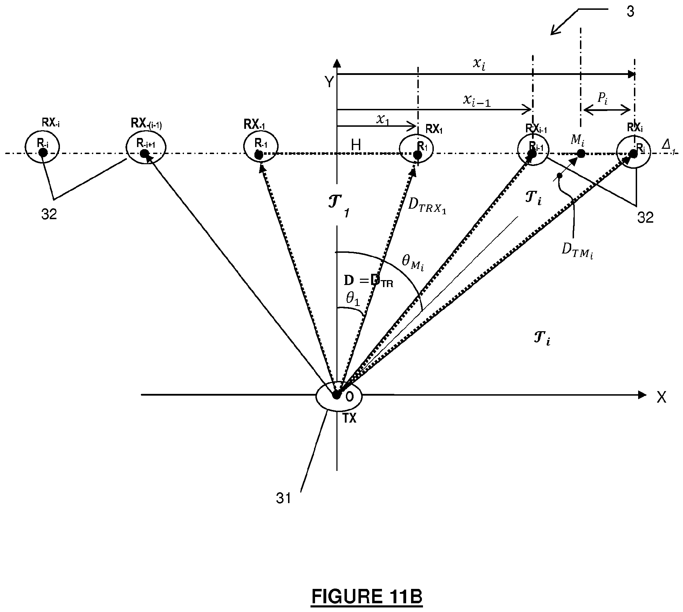

La Figure 11B est un schéma représentant un système de détection adapté pour des menaces à faible vitesse et à faibles index de cible, selon un autre exemple de réalisation.

Dans la suite de la description, il sera fait référence aux notations utilisées pour une configuration linéaire étanche, dans laquelle des « trous » de détection (ou zones de non détection internes) peuvent exister, comme indiqué sur la Figure 11B.

Dans de tels modes de réalisation, le point milieu H de coordonnées $(0, D_{TR})$ qui correspond à l'intersection de l'axe des ordonnées OY (coïncidant avec l'axe de symétrie 33) et de la ligne formée par les récepteurs 32 d'une couche linéaire peut avantageusement appartenir à la courbe définie par l'équation de portée du premier récepteur $RX_1$ (32) par rapport à l'axe de symétrie (respectivement $RX_{-1}$ par symétrie) pour garantir une étanchéité de la protection minimale. L'équation de l'ovale de Cassini de $RX_1$ est définie par tout point M tel que:

$TL(TM) + TL(MRX1) < 2\ TL(R_{mono})$, M étant à l'intérieur de l'ovale de Cassini en cas d'inégalité stricte et sur l'ovale de Cassini en cas d'égalité.

Par conséquent, l'équation de portée du premier récepteur par rapport à l'axe de symétrie $RX_1$ (respectivement $RX_{-1}$ par symétrie) pour un point M de coordonnées $M(X, y)$ est décrite par :

$$K.\log((x^2 + y^2)^{0,5}) + K.\log((x - x_1)^2 + (y - D_{TR})^2)^{0,5}) < 2\,K.\log(R_{mono})\quad(17)$$

Sur la Figure 11B, la distance $D_{TR}$ correspond comme précédemment à la distance entre l'axe des récepteurs et l'émetteur. La condition recherchée étant qu'une menace M de coordonnées $(0, D_{TR})$ soit sur la courbe de portée de $RX_1$ en mode « RX as TX », il vient :

$$\log\left((0^2 + D_{TR}{}^2)^{0,5}\right) + \log((0 - x_1)^2 + (D_{TR} - D_{TR})^2)^{0,5}) = 2.\log(R_{mono})\qquad(18)$$

soit :

$$\log\left((D_{TR}{}^2)^{0,5}\right) + \log(x_1{}^2)^{0,5}) = 2.\log(R_{mono})\qquad(19)$$

L'équation (19) s'écrit encore :

$$\log(D_{TR}) + \log(x_1) = 2.\log(R_{mono}),$$

soit

$$\log(D_{TR}.x_1) = \log(R_{mono}{}^2)$$

Il en résulte :

$$D_{TR}.x_1 = R_{mono}{}^2\quad(20)$$

Soit :

$$x_1 = R_{mono}{}^2/D\quad(21),$$

Dans l'équation (21), $D = D_{TR}$ désigne la distance entre l'émetteur et la ligne formée par les récepteurs de référence (comme montré par exemple sur les figures 3 ou 11B).

L'équation (20) correspond à des applications du système de détection sans redondance ni recouvrement des zones d'ombre des récepteurs voisins.

L'équation (21) est équivalente à l'équation (20).

Les équations (20) et (21) correspondent à une situation de recoupement des zones de détection de deux récepteurs adjacents, telle que le point de recoupement le plus éloigné de l'émetteur coïncide sensiblement avec le point H représenté sur la figure 11B, ce point H étant le milieu du segment délimité par les récepteurs adjacents $RX_{-1}$ et $RX_1$.

La condition de recoupement exprimée par les équations (20) et (21) est différente à la condition de recoupement exprimée par l'équation 1 qui requiert des récepteurs adjacents plus proches les uns des autres. Dans le cas de l'équation 1, la limite de la zone de détection d'un récepteur donné passe par les récepteurs adjacents voisins, tout en recouvrant la partie de leurs zones d'ombre située autour de ces récepteurs voisins. La configuration des récepteurs selon l'équation (1) permet également d'assurer une redondance de panne pour tout récepteur entouré de deux voisins de part et d'autre.

L'équation (21) peut être également interprétée géométriquement en termes de surface, le produit $x_1 D$ correspond au produit de la base de longueur $x_1$ par la hauteur $D$ du triangle

$$\mathcal{T}_1$$

ayant pour sommets les points 0, $R_1$ et $R_{-1}$ définis tel que précédemment avec:

- le point O désigne l'origine du repère ayant pour axe l'axe X (axe des abscisses) et l'axe Y (axe des ordonnées) et coïncide sensiblement avec l'émetteur TX du groupe (31),

- le point $R_1$ coïncide sensiblement avec l'emplacement du récepteur RX1 de la paire de référence, et

- le point $R_{-1}$ coïncide sensiblement avec l'emplacement le récepteur $RX_{-1}$ de la paire de référence.

La Surface, notée

$$\mathcal{A}ire(\mathcal{T}_1)$$

(ou

$$\mathcal{A}ire(\mathcal{T})$$

) du triangle

$$\mathcal{T}_1$$

correspond à la moitié du produit $2x_1 D$ du terme de gauche de l'équation (21). Par conséquent, l'équation (21) peut être reformulée par la formule de l'équation (22) suivante :

$$\mathcal{A}ire(\mathcal{T}) = R_{mono}^2 = \mathcal{A}ire(\mathcal{S}) \qquad (22)$$

L'équation (13) est équivalente à l'équation (12). Le terme de droite de l'équation (13) correspond à la surface d'un carré $\mathcal{S}$ de côté

$$R_{mono} \left( \mathcal{A}ire(\mathcal{S}) = R_{mono}^2 \right).$$

Ainsi, selon certains modes de réalisation, pour un groupe donné, la surface

$$\mathcal{A}ire(\mathcal{T})$$

peut être égale à la surface

$$\mathcal{A}ire(\mathcal{S})$$

d'un carré $\mathcal{S}$ ayant un côté égal à la portée minimale du sonar monostatique équivalent $R_{mono}$ , soit

$$\mathcal{A}ire(\mathcal{T}) = \mathcal{A}ire(\mathcal{S}),$$

avec :

-

$$\mathcal{A}ire(\mathcal{T})$$

désignant la surface du triangle de référence $\mathcal{T}$, défini similairement au triangle de référence de la Figure 7B, par le triangle formé par l'émetteur et les 2 récepteurs RX$_1$ et RX$_{-1}$.

Un tel agencement du groupe multistatique 3 permet d'obtenir une zone de détection linéaire étanche au minimum le long de l'axe formé par les récepteurs 32 situés à une distance $D$ de l'émetteur, sans recouvrement des zones d'ombre du groupe ni redondance de panne, et de détecter toutes les menaces, incluant les pires menaces dans les pires conditions d'environnement de portée du sonar monostatique équivalent $R_{mono}$.

Dans un tel mode de réalisation, comme $D_{TRX_1}$ ne dépend plus que de l'inconnue $x_1$.

La distance $x_1$ d'un récepteur de la paire de référence par rapport à l'axe de symétrie 33 peut être ainsi au moins égale à la valeur donnée par l'équation (25).

Il convient également de noter les variations suivantes en fonction de la valeur de $D = D_{TR}$ par rapport à $R_{mono}$ :

• Si $D = R_{mono}$, $D$ étant la distance entre l'émetteur TX et la ligne de récepteurs, alors la distance $x_1$ est égale à $D$;

• Si $D = 2/\sqrt{3} * R_{mono}$ alors $x_1 = \frac{D\sqrt{3}}{2}$ .

L'écartement entre l'un quelconque des 2 récepteurs de référence (RX$_1$ ou RX$_{-1}$) l'axe de symétrie est de plus en plus faible tandis que la barrière s'étend de plus en plus loin (vers le large), selon le compromis entre la portée et la surface barrière nécessaire pour les pires menaces, avec une barrière potentiellement étanche mais augmentation des zones de non détection entre l'émetteur et la ligne formée par les récepteurs.

Plus généralement, il résulte des caractéristiques précédentes que la distance $x_1$ d'un récepteur de la paire de référence par rapport à l'axe de symétrie 33 peut prendre toutes les valeurs possibles, comprises entre la valeur $x_{1min}$(correspondant à la valeur de l'équation 22) et la valeur $x_{1max}$ (correspondant à la valeur de l'équation 25), en fonction du compromis souhaité entre la distance inter-récepteur et le recouvrement des zones de détection, tout en garantissant une zone de détection continue en aval de la ligne rectiligne ou de la courbe formée par les récepteurs, soit :

$$x_{1min} \leq x_1 \leq x_{1max} ,$$

avec

$$x_{1min} = \frac{D}{\sqrt{2}} \cdot \sqrt{\sqrt{1 + \left(\frac{R_{mono}}{D}\right)^4} - 1},$$

et

$$x_{1_{max}} = \frac{R_{mono}^{2}}{D}$$

En considérant la même contrainte de recoupement des zones de détection pour le récepteur suivant RX$_2$, distinct des récepteurs de la paire de référence, une menace M située entre les récepteurs RX$_1$ et RX$_2$ de coordonnées $(x, D_{TR})$, M ayant une abscisse $x$, sera détectée par les récepteurs RX$_1$ et RX$_2$ si les zones de détection élémentaires de ces récepteurs se recoupent en ce point et donc:

$$Log((x^2 + D_{TR}^2)^{0,5}) + log((x - x_1)^2 + (D_{TR} - D_{TR})^2)^{0,5}) = 2\,log(R_{mono}),$$

ce qui définit la détection d'un tel point M par RX$_1$

$$Log((x^2 + D_{TR}^2)^{0,5}) + log((x - x_2)^2 + (D_{TR} - D_{TR})^2)^{0,5}) = 2\,log(R_{mono}), \quad \text{ce qui définit la}$$

ce qui définit la détection d'un tel point M par RX$_2$.

Les équations ci-dessus donnent :

$$D_{TRX}.(x - x_1) = R_{mono}^{2}$$

$$D_{TRX}.(x_2 - x) = R_{mono}^{2}$$

Par conséquent, dans un tel mode de réalisation, le point M de recoupement est au milieu entre RX$_1$ et RX$_2$.

La condition géométrique de positionnement du récepteur RX$_2$ d'abscisse $x_2$ s'écrit donc :

$$D_{TM2}.(x_2 - x_1)/2 = R_{mono}, \quad \text{Equation (26)}$$

$M_2$ étant le point d'abscisse x = $(x_1 + x_2)/2$, autrement dit le milieu $M_2$ du segment reliant les récepteurs RX$_1$ et RX$_2$.

Par itération, l'abscisse $x_i$ de chaque récepteur RX$_i$ peut être déterminé itérativement en fonction de l'abscisse $x_{i-1}$ du récepteur précédent par rapport à l'axe de symétrie, selon l'équation suivante par:

$$D_{TMi}.(x_i - x_{i-1})/2 = R_{mono}^{2} \quad (27)$$

La solution de cette équation (27) assure une solution sans redondance ni recouvrement avec $M_i$ le milieu du segment reliant les récepteurs RX$_i$ et RX$_{i-1}$.comme indiqué sur la Figure 11B

Il convient de noter que cette formule (27) est distincte de la formule (7) qui fait intervenir la distance $D_{TRX_i}$ (distance entre TX et RX$_i$) et non la distance $D_{TRMi-1,i}$ distance entre TX et $X_m$, milieu du segment reliant les récepteurs RX$_i$ et RX$_{i-1}$) qui est plus petite. La distance $x_i$ - $x_{i-1}$ entre les deux récepteurs RX$_i$ et RX$_{i-1}$, donnée par l'équation (25), est donc supérieure, ce qui permet d'optimiser le nombre de récepteurs tout en conservant l'étanchéité de la barrière, malgré l'absence de redondance et le recouvrement non maximal.

L'équation (27) peut être interprétée en termes de surface comme l'équation 8.

La figure 11B est une vue géométrique d'un groupe multistatique 3 comprenant une couche linéaire de récepteur. Elle montre le triangle $\mathcal{T}_i$ défini comme précédemment dans la figure 7B (de sommets O, R$_{i-1}$ et R$_i$). Il convient de noter que l'angle $\theta_{Mi}$ est un angle plus petit que l'angle $\theta_i$ de

la figure 7B. Plus précisément, l'angle $\theta_{Mi}$ représente l'angle entre l'axe de symétrie 33 (coïncidant avec l'axe Y) et l'axe passant par O (point correspondant à l'emplacement de l'émetteur TX) et par le point au point $M_i$ correspondant au milieu du segment délimité par les points R$_{i-1}$ (correspondant à RX$_{i-1}$) et R$_i$ (correspondant à RX$_i$). Ainsi l'angle $\theta_{Mi}$ satisfait la relation :

$$\cos(\theta_{Mi}) = D/D_{TRM_i} \quad (28)$$

La distance $D_{TM_i}$ désignant la distance entre le point 0 coïncidant avec l'émetteur TX et le point milieu $M_i$.

L'équation (27) peut être exprimée ainsi à partir de l'aire du triangle $\mathcal{T}i$ comme suit :

$$\mathcal{A}\text{ire}(\mathcal{T}i)/\cos(\theta_{Mi}) = R_{mono}^2 \quad (29)$$

Ainsi, l'agencement des récepteurs/émetteur de chaque couche linéaire d'un groupe multistatique peut être configuré en appliquant la formule suivante, notamment dans les applications ne nécessitant pas une continuité de service en cas de panne de certains récepteurs (ceux-ci pouvant être rapidement remplaçables) et pouvant tolérer des zones d'ombre dans la zone de détection du groupe lorsque les moyens de réaction ont une capacité propre de relocalisation de cible :

$$\mathcal{A}\text{ire}(\mathcal{T}1)/\cos(\theta_{M1}) = \mathcal{A}\text{ire}(\mathcal{T}i)/\cos(\theta_{Mi}) = \mathcal{A}\text{ire}(\mathcal{T}n)/\cos(\theta_{Mn}) = \text{Constante} = R_{mono}^2 \quad (30)$$

Il est à noter que dans le cas particulier du point milieu entre $RX_{-1}$ et $RX_1$ cela conduit à $\theta_{M1} = 0$ ou $\cos(\theta_{M1}) = 1$ (le point M1 coïncidant alors avec le point H de la Figure 11B).

Comme $D_{TM_i}$ dépend de $x_{i-1}$ et de l'inconnue $x = x_i$ l'équation (27) peut être résolue numériquement comme suit:

$$\left(D^2 + \left(\frac{(x+x_{i-1})}{2}\right)^2\right).\left(\frac{(x-x_{i-1})}{2}\right)^2 = R_{mono}^4$$

Soit en posant

$$X = x_i/x_{i-1}:$$

$$X^4 + \left(\frac{4D^2}{x_{i-1}^2} - 2\right).X^2 - \frac{8D^2}{x_{i-1}^2}.X^2 - \frac{4D^2}{x_{i-1}^2} + 1 - \frac{16R_{mono}^4}{x_{i-1}^4} = 0 \quad (31)$$

Ainsi, dans les applications de l'invention ne nécessitant pas de redondance pour une continuité de fonctionnement en cas de défaillance d'un des récepteurs 32, l'abscisse $x_i$ du i-ème récepteur $RX_i$ peut être déterminée selon l'équation (31) itérativement à partir de $x_{i-1}$ entre $x_i$ et l'abscisse $x_{i-1}$ du récepteur adjacent précédent $RX_{i-1}$, situés du même côté du groupe 3 par rapport à l'axe de symétrie (i étant un entier positif ou négatif; si i est négatif, selon la convention de notation choisie, |i - 1| et |i| seront considérés), et du double du carré du rayon du sonar monostatique équivalent $2R_{mono}^2$ et de la distance $D_{TRM_i}$ entre l'émetteur et le point $M_{i-1,i}$ situé au milieu du segment $[RX_{-i}, RX_i]$ selon l'équation (28) avec comme condition initiale :

$$x_1 = R_{mono}^2/(D)$$

Le groupe de détection 3 peut ainsi détecter sur une large zone de détection (avec ou sans trous de détection selon le mode souhaité d'application de l'invention) les menaces les plus critiques entre l'émetteur 31 et la ligne des récepteurs 32, la ligne de récepteurs constituant elle-même une barrière étanche.

Ainsi les récepteurs $RX_i$ de chaque côté de l'axe de symétrie, peuvent être positionnés itérativement à partir de la position du premier récepteur (|i| = 1), puis en plaçant itérativement chaque récepteur en fonction du récepteur précédent par rapport à l'axe de symétrie.

Il convient de noter que comme l'hypoténuse $D_{TRX_i} = (x_i^2 + D_{TR}^2)^{0,5}$ augmente à mesure que les récepteurs s'éloignent de l'axe de symétrie (pour $D_{TRX_i}$ correspondant à la distance l'émetteur 31 et le récepteur $RX_i$), dans un mode de réalisation, la distance entre 2 récepteurs voisins ($x_i - x_{i-1}$) diminue avec l'éloignement des récepteurs par rapport à l'axe de symétrie. Ainsi, pour $N = 2p$ récepteurs (p récepteurs de chaque côté de l'axe), pour p positif :

$$(x_p - x_{p-1}) < (x_{p-1} - x_{p-2}) < \cdots < (x_2 - x_1)$$

et pour $p$ négatif avec $p = -|p|$, il vient

$$(x_{-|p|} - x_{-(|p|-1)}) < (x_{-(|p|-1)} - x_{-(|p|-2)}) < \cdots < (x_{-2} - x_{-1})$$

Dans certains modes de réalisation, le nombre de récepteurs dans un groupe multistatique donné 3 peut correspondre au nombre minimal qui permette d'obtenir une barrière aussi longue que possible tout en ayant une épaisseur continue suffisante pour permettre, quelques soient les menaces, d'avoir un temps de classification suffisant pour déclencher et mettre en oeuvre une réaction prédéfinie en fonction du besoin et capacités de protection.

La longueur de barrière représente la plus grande longueur de la zone de détection le long de l'axe $\Delta 1$ formé par la ligne des récepteurs du système de détection, dans une direction perpendiculaire à l'axe de symétrie 33.

L'épaisseur de barrière représente la plus petite distance de la zone de détection, dans la direction définie par l'axe de symétrie 33. Elle correspond ainsi à la plus petite distance de la zone de détection que peut franchir une menace détectée. Cette distance définit le temps de détection compte tenu de la vitesse de la menace est un paramètre important du système de détection (en fonction du TS). L'épaisseur de la barrière doit être suffisamment importante pour permettre la détection et la classification de tout type de menace lors du franchissement de la barrière par la menace tout en garantissant un temps de réaction adapté.

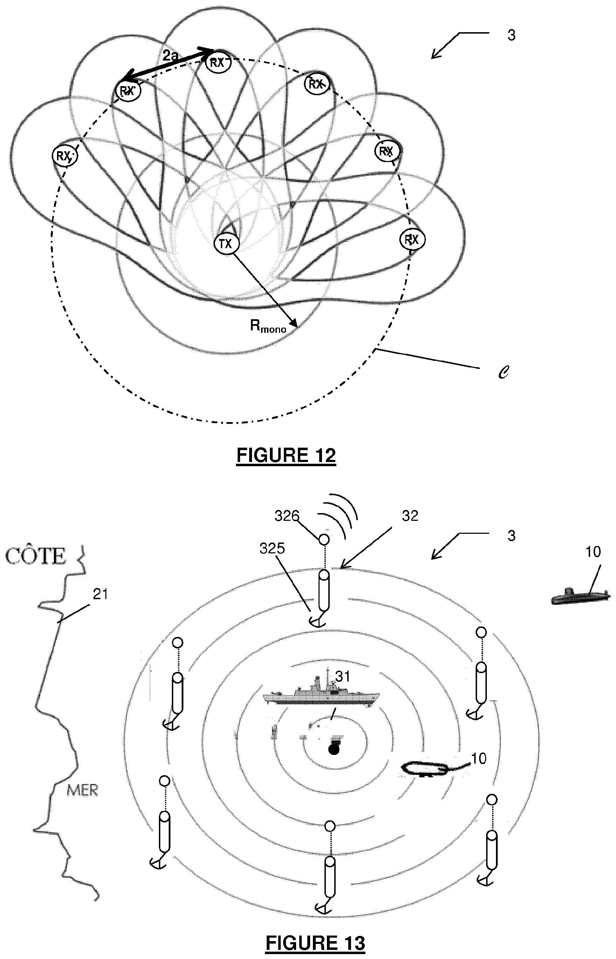

La Figure 12 représente un exemple de groupe de détection 3, selon un mode de réalisation dans lequel les récepteurs 32 sont agencés selon une configuration circulaire de Cercle C :

Dans un tel mode de réalisation, la distance inter-récepteur de référence 2$a$ peut être déterminée à partir du carré $R_{mono}^2$ du rayon de détection $R_{mono}$ du sonar monostatique équivalent et ici du rayon R > $R_{mono}$ de la forme circulaire $\mathcal{C}$ décrite par les récepteurs 32 qui égale tous les $D_{TRX_i}$

En particulier, la distance inter-récepteur de référence $d_{inter}$ = 2$a$ (comme illustré sur la figure 12) peut correspondre à toutes les solutions entre $R_{mono}^2/R$ , correspondant à des conditions dans lesquelles la zone détection d'un récepteur donné s'étend jusqu'aux deux récepteurs adjacents (comme exprimé par l'équation (1)), et $2R_{mono}^2/D$ correspondant à recoupement des zones de détection des récepteurs adjacents uniquement au milieu de la corde liant les deux récepteurs adjacents (comme exprimé par l'équation (20)) ::

$$R_{mono}^2/R \le d_{inter} \le 2R_{mono}^2/D$$

Avec D correspondant ici à la distance entre l'émetteur et le segment reliant les 2 récepteurs adjacents, avec D = $R \cos \theta_1$ et R la distance entre l'émetteur et un des deux récepteurs de référence (avec R = $D_{TRX_1}$).

Dans le cas d'une couche circulaire de récepteurs de rayon R, les distances $D_{TRX_1}$ = R et la distance D sur l'axe de symétrie est la projection du rayon R, selon l'angle $\theta_1$ :

$$R_{mono}^2/R \le d_{inter} \le 2R_{mono}^2/(R.\cos\theta_1)$$

En fonction de R et $d_{inter}$ il vient : $D^2 = R^2 - \left(\frac{d_{inter}}{2}\right)^2$

En posant $X = \left(\frac{d_{inter}}{2}\right)^2$ donnant la valeur maximum de $d_{inter}$ peut être exprimée sous la forme de l'équation bicarrée suivante du second degré en $X$ avec $D = D_{TR}$ :

$$X(R^2 - X) = R_{mono}^4$$

Soit :

$$X^2 - R^2 X + R_{mono}^4 = 0$$

Cette équation a une solution réelle si :

$$R^4 - 4R_{mono}^4 > 0,$$

Soit si : $R > R_{mono}\sqrt{2}$ Dans le cas où $R < R_{mono}\sqrt{2}$ , il n'y a pas de solution particulière à l'équation bicarrée ci-dessus pour $d_{inter}$ car toutes les positions de récepteur sur le cercle conviennent.

Pour $R > R_{mono}\sqrt{2}$ , les deux solutions d'espacement $d_{inter}$ entre récepteurs sont :

$$d_{inter1} = R\sqrt{2}.\sqrt{1 + \sqrt{1 - \left(\frac{R_{mono}\sqrt{2}}{R}\right)^4}} \quad \text{et} \quad d_{inter2} = R\sqrt{2}.\sqrt{1 - \sqrt{1 - \left(\frac{R_{mono}\sqrt{2}}{R}\right)^4}}$$

En fonction de l'angle $\theta_1$, il vient :

$$d_{inter} = 2R \sin\theta_1 ,$$

$$d_{inter} \leq 2R_{mono}^2/R \cos\theta_1 \quad \text{devient} \quad 2R \sin\theta_1 \leq 2R_{mono}^2/R \cos\theta_1$$

Ou encore :

$$\sin 2\theta_1 = 2R_{mono}^2/R^2$$

ayant pour solutions les deux angles suivants :

$$\theta_{1.1} = \frac{1}{2}\sin^{-1}(2R_{mono}^2/R^2) \quad \text{et} \quad \theta_{1.2} = \pi - \frac{1}{2}\sin^{-1}(2R_{mono}^2/R^2) \qquad (32)$$

Il convient de noter que la solution $d_{inter2}$ ou la solution équivalente $\theta_{1.1}$ (angle le plus faible) est celle où les récepteurs sont les plus proches entre eux tout en étant avantageusement loin de l'émetteur TX pour garantir un meilleur préavis. La zone de recouvrement entre les zones de détection respectives de deux récepteurs adjacents diminue toutefois à mesure que l'on se rapproche de leur écartement maximal de $2R_{mono}^2/D$ . Par exemple, la figure 10 montre un écartement entre récepteurs adjacents légèrement inférieur à l'écartement maximal, avec un recouvrement très partiel entre les récepteurs, cet écartement pouvant être cependant suffisant pour déclencher une alerte avec un bon préavis. L'exemple de la figure 12 montre par contre un écartement entre récepteurs adjacents inférieur à l'écartement maximal, le recouvrement entre zones de détection voisines étant plus important. Sur la figure 12, le point de recoupement des zones de détection adjacentes qui est le plus éloigné de l'émetteur est au-delà du cercle formé par les récepteurs. Ainsi, l'inégalité suivante est strictement respectée:

$$\sin\left(\frac{\theta_1}{2}\right) < R_{mono}^2/2R^2 \quad \text{soit} \quad \theta_1 < 2 \, Arcsin(R_{mono}^2/2R^2)$$

Cette solution d'angle $\theta_1$ est supérieure à

$$\frac{1}{2}Arcsin(2R_{mono}^2/R).$$

Dans un autre mode de réalisation de l'invention, les groupes 3 du système peuvent comprendre au moins un groupe ayant une ou plusieurs couches de forme courbe quelconque, une telle couche de forme courbe comprenant un ensemble de récepteurs, les récepteurs adjacents $RX_i$ et $RX_{i+1}$ forment une suite de segments non alignés (configuration dite « linéaire par morceaux »), de forme autre que linéaire ou circulaire, les segments pouvant être non symétriques, avec des récepteurs 32 pouvant être situés à une distance différente de l'émetteur 31. Les récepteurs d'une telle couche courbe peuvent être en nombre pair ou impair.

Pour une couche de forme courbe particulière constituée de récepteurs situés sur un même cercle avec une distance inter-récepteurs $d_{inter_i} = 2_{a_i}$, non constante, entre deux récepteurs adjacents $R_i$ et $R_{i+1}$ successifs dont l'axe de symétrie passe par l'émetteur 31, la distance inter-récepteurs $2_{a_i}$ peut avantageusement satisfaire d'après les équations (1) et (21) :

$$R^2_{mono}/R < 2a_i < 2R^2_{mono}/D \qquad (33)$$

Dans un tel mode de réalisation à couche de forme linéaire par morceaux, il est possible également de considérer l'aire de la surface

$$Aire(\mathcal{T}_i)$$

de chaque triangle

$$\mathcal{T}_i,$$

tel que défini ci-dessus, les angles $\theta_i$ étant définis par rapport à la distance $D_i$ entre l'émetteur 31 et la ligne passant par les points coïncidant avec les récepteurs $RX_{i-1}$ à $RX_i$, comme représenté sur la Figure 11B, mais avec des distances $D_i$ pouvant être différentes de la distance D de la paire de référence. L'aire

$$Aire(\mathcal{T}_i)$$

peut prendre toutes les valeurs intermédiaires entre des valeurs seuils

$$Aire(\mathcal{T}_i)_{min}$$

et

$$Aire(\mathcal{T}_i)_{max},$$

les valeurs seuils dépendant de $R^2_{mono}$ et de $cos(\theta_i)$. En particulier, les valeurs seuils

$$Aire(\mathcal{T}_i)_{min}$$

et

$$Aire(\mathcal{T}_i)_{max},$$

peuvent être égales respectivement à :

$$Aire(\mathcal{T}_i)_{min} = R^2_{mono}cos(\theta_i)/2 \text{ et } Aire(\mathcal{T}_i)_{max} = R^2_{mono}.cos(\theta_{Mi}),$$

soit:

$$R_{mono}^2 cos(\theta_i)/2 \leq \mathcal{A}ire(\mathcal{T}_i) \leq R_{mono}^2.cos(\theta_{Mi})$$

Toutes les distances $d_{inter}$ = 2$a$ intermédiaires correspondantes sont possibles. Ainsi, dans le cas d'une couche circulaire, toutes les distances $d_{inter}$ = 2$a$ intermédiaires correspondantes obtenues avec l'équation (33) sont possibles. Comme montré sur la Figure 12, un tel exemple intermédiaire de configuration circulaire est caractérisé par :

- Une redondance en cas de panne d'un des récepteurs moins bonne que dans les modes de réalisation des Figures 6 ou 7, la détection n'étant pas assurée jusqu'à la ligne des récepteurs contrairement aux modes de réalisation des Figures 6 ou 7 mais jusqu'au cercle de rayon $R_{mono}$ < $R$ ;

- Des zones « d'ombre » (ou zones de non détection) de chaque couple émetteur/récepteur recouvertes seulement partiellement.

Dans le mode de réalisation de la Figure 7A, le rayon R de la forme circulaire $\mathcal{C}$ décrite par les récepteurs 32 peut être égal au rayon de détection $R_{mono}$ du sonar monostatique (R = $R_{mono}$). La distance inter-récepteur de référence 2$a$ peut alors être égale au rayon de détection $R_{mono}$ en appliquant l'équation 5. Six récepteurs 32 formant un hexagone de coté égal à R peuvent alors être utilisés. La portée multistatique maximale depuis l'émetteur commun 31 est alors égale à un paramètre égal à $R$. $(1 + \sqrt{5})/2$, le nombre " $(1+\sqrt{5})/2$ " correspondant au nombre d'or.

Pour une configuration de récepteurs circulaire comme celles des figures 9, 12, et 13, il peut être requis que le point de recoupement le plus éloigné de l'émetteur entre les zones de détection respectives de 2 récepteurs adjacents, et en particulier ceux de la paire de référence, soit au moins sur le cercle formé par les récepteurs dont le rayon est égal à R et non au niveau du milieu du segment joignant les 2 récepteurs adjacents, ce qui dans ce cas d'une configuration circulaire est la corde et non l'arc de cercle.

Ce cas est donc moins contraignant en termes de proximité de récepteurs adjacents que le cas de la Figure 7A où le point de recoupement le plus éloigné est notablement au-delà du cercle de rayon R.

Pour la configuration circulaire, la condition pour que le point de recoupement le plus éloigné de l'émetteur soit à une distance R de l'émetteur s'écrit, à partir des équations similaires à (18) et (19) :

$$\log((0^2 + D^2)^{0,5}) + \log((0 - x_1)^2 + (R - D)^2)^{0,5}) = 2.\log(R_{mono})$$

$$R.\sqrt{x_1^2 + (R - D)^2} = R_{mono}^2$$

En notant comme précédemment $\theta_1$, l'angle passant par l'émetteur TX et le récepteur RX1 de la paire de référence, le terme racine $\sqrt{x_1^2 + (R - D)^2}$ correspondant à la corde d'un cercle de rayon R et l'angle $\theta_1$ correspondant à l'angle interceptant la corde, il vient donc:

$$\sqrt{x_1^2 + (R - D)^2} = 2R sin(\frac{\theta_1}{2})$$

La condition recherchée pour un recoupement des zones de détection adjacentes sur le cercle formé par les récepteurs ou au-delà est donc :

$$sin\left(\frac{\theta_1}{2}\right) \leq R_{mono}^2/2R^2,$$

Ainsi, pour $\theta_1$ = 60° soit 2$\theta_1$ = 120°, la configuration comprenant donc uniquement 3 récepteurs sur tout le cercle, on obtient :

$$sin\left(\frac{60}{2}\right) = \frac{1}{2} \leq R_{mono}^2/2R^2$$

Dans le cas particulier où $R = R_{mono}{}^2$, cette solution à 3 récepteurs autour de ce cercle est exactement celle pour laquelle le point de recoupement des zones de détection le plus éloigné de l'émetteur se situe exactement au milieu de l'arc de cercle délimité par 2 de ces 3 récepteurs.

Ce cas particulier correspondrait à une figure dérivée de la figure 7A, en retirant trois récepteurs intercalés (par exemple $RX_2$, $RX_4$ et $RX_6$) parmi les 6 récepteurs de cette Figure 7A qui correspond à des récepteurs sur un cercle de rayon $R = R_{mono}{}^2$. Par exemple, les zones de détection des récepteurs RX1 et RX3 se recoupent à la position du récepteur intercalé RX2.

Selon certains modes de réalisation, chaque récepteur 32 d'un groupe de détection 3 peut être configuré pour recevoir des signaux dans une bande de fréquence inférieure à 30 KHz.

Le système de détection 100, dimensionné à partir du rayon $R_{mono}$ correspondant à la portée minimale parmi l'ensemble des menaces possibles dans l'environnement considéré du sonar monostatique équivalent, permet alors de détecter tout type de menaces sous-marines tel qu'un plongeur motorisé ou non motorisé, un SDV, un drone AUV, un mini sous-marin, etc., quelle que soit sa taille et sa vitesse, et quelle que soit le type d'infrastructure 2.

Dans un mode de réalisation, le système de détection 100 peut être utilisé pour assurer l'autoprotection d'une infrastructure 2 de type bâtiment de surface, au mouillage ou restant dans une zone fixe durant un temps de mission donné, contre tout type de menaces sous-marines, sans nécessiter de câbles attachés au bâtiment de surface et tout en gardant un minimum de capacité de mouvement. Dans un tel mode de réalisation, le système de détection 100 peut être utilisé par exemple lors d'un positionnement littoral pour une mission à proximité des côtes.

La Figure 13 montre un exemple de groupe de détection 3, selon un mode de réalisation dans lequel les récepteurs 32 sont agencés selon une configuration sensiblement circulaire ou adaptée en fonction de l'environnement s'il n'est pas isotrope. Dans un tel mode de réalisation, l'émetteur 31 peut être constitué par le sonar de coque d'un bâtiment militaire (par exemple de 3 à 9 KHz), ou par le sonar d'un bâtiment de surface tel qu'un sonar de pêche basse fréquence ( par exemple jusqu'à 30 KHz environ). Un tel groupe de détection peut s'auto-déployer lui-même par largage de récepteurs 32 autonomes, de manière énergétique, pendant la durée de la mission à laquelle est dédiée le bâtiment de surface dans la zone considérée, de tels récepteur 32 transmettant leurs données au bâtiment de surface par tout moyen de communication (par exemple radio (VHF, satellitaire, WiFi ou Wimax)) .

Dans un mode de réalisation particulier, le système de détection 100 peut comprendre deux récepteurs directifs de type bouée acoustique ou sonar d'hélicoptère, déployés à l'arrière au plus loin de l'émetteur 31, situés sur chaque bord du bateau, posé sur le fond ou immergé à une immersion adapté à une propagation acoustique avec chenal de surface, permettant un traitement avec accès à tous les hydrophones et un traitement adaptatif obtenant la capacité de réception de l'écho même pendant la réception directe de l'émetteur 31 (capacité RX pendant TX mentionnée précédemment). La distance émetteur-récepteur D peut être avantageusement égale à la longueur du bateau.

Un tel système de détection 100 peut donc être utilisé comme système de surveillance d'autoprotection d'un bâtiment de surface militaire ou civil, stationnaire ou restant sur une zone donnée. Les récepteurs 32 peuvent être des récepteurs autonomes agencés dans cette zone, avec ou sans câble attaché au bâtiment de surface. L'émetteur 31 du groupe peut être tout sonar militaire ou de pêche du bâtiment de surface (source unique d'insonification), avec ou sans câble.

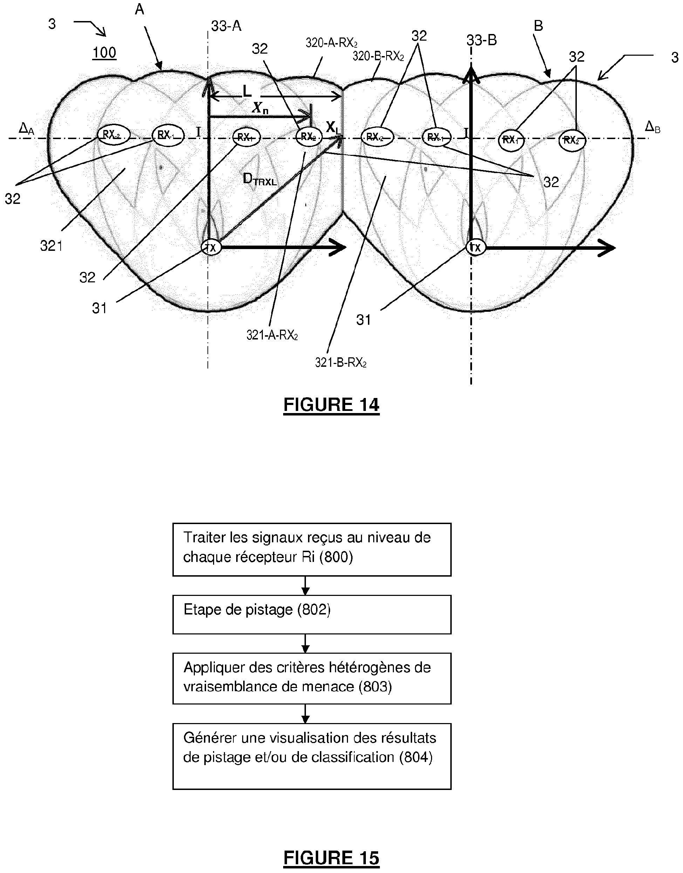

La Figure 14 montre un système de détection comprenant deux groupes de détection 3 (désigné par A et B) à configuration linéaire, correspondant aux modes de réalisation des Figures 2 ou 3, les deux groupes étant agencés entre eux pour constituer conjointement une zone de détection offrant une protection adéquate. Selon une caractéristique, les zones de détection élémentaires 320-A-$RX_2$ et 320-B-$RX_{-2}$ de certains au moins des récepteurs d'extrémité ($RX_2$ pour le groupe 3-A et $RX_{-2}$ pour le groupe 3-B) un groupe de détection donné (A par exemple) se recoupent au moins partiellement avec les récepteurs d'extrémité d'un groupe de détection adjacent (B par exemple).

En particulier, les zones de détection des groupes multistatiques adjacents 3, comme montré sur la Figure 14, peuvent se recouper pour que le récepteur d'extrémité 32 (par exemple gauche) d'un groupe donné (par exemple le groupe de droite) prenne la position qu'aurait pu avoir un récepteur supplémentaire du groupe adjacent, à l'extrémité du groupe donné situé du même côté que le groupe adjacent. Ainsi la position du récepteur $RX_{-2}$ du groupe 3-B de droite peut correspondre à la position qu'aurait pu avoir un récepteur $RX_3$ du groupe 3-A, par exemple selon l'équation (5)

Les groupes 3 peuvent être ainsi agencés de manière contiguë pour que le système de détection couvre une zone de détection continue, sans zones d'ombre, ce qui permet de mettre en oeuvre tout type de réaction (par exemple, calcul de lancement d'une grenade, envoi d'un USV, guidage d'un drone ou d'une torpille de destruction de type « hard kill »).

En particulier, la distance L entre l'axe de symétrie 33-A d'un groupe de détection donné (A par exemple) et un point d'intersection $X_L$ entre ce groupe A et le groupe adjacent B, situé sur le segment reliant les récepteurs d'extrémité adjacents $RX_2$ du groupe A et $RX_{-2}$ du groupe adjacent B, est une fonction du carré $R_{mono}^2$ du rayon de détection du sonar monostatique équivalent, de la distance entre le point d'intersection $X_L$ et l'émetteur du groupe donné ($D_{TRXL}$).

En particulier, la distance *L* satisfait :

$$D_{TRX_L} \cdot 2(L - X_n) = R_{mono}^2 \quad (34)$$

$X_n$ désigne l'abscisse du récepteur 32 le plus éloigné du groupe A ($X_2$ sur la Figure 14). $X_L$ représente ainsi le point d'intersection des deux lignes $\Delta_A$ et $\Delta_B$ formées par les récepteurs des 2 groupes adjacents A et B.

Sur la Figure 14, il convient de noter que le récepteur $RX_{-2}$ du groupe B (groupe de droite) occupe la place optimale qu'aurait un 3ème récepteur sur le groupe A (groupe de gauche), ce qui détermine l'écartement entre 2 groupes. Cela permet de régulariser l'épaisseur de la barrière tout en assurant une robustesse aux pannes : par exemple, si le récepteur $RX_2$ du groupe A est en panne, le récepteur $RX_{-2}$ du groupe B peut prendre le relai en fonctionnant en multistatique, non seulement avec l'émetteur 31-B de son propre groupe B mais aussi avec l'émetteur 31-A du groupe adjacent A dont l'émission peut être synchrone avec un code orthogonal.

Dans certains modes de réalisation, les signaux de certains au moins des récepteurs peuvent être utilisés par une unité de classification pour classifier les cibles détectées, chaque récepteur étant configuré pour fonctionner au moins acoustiquement en mode passif et actif simultanément, chaque récepteur en mode passif traitant préférentiellement des fréquences inférieures aux fréquences traitées en mode actif, une classification acoustique passive pouvant être faite par asservissement du pistage actif, la portée acoustique ou la portée non acoustique (telle que électrique et/ou magnétique) étant au moins égale à la moitié de la distance maximale entre deux récepteurs voisins, appartenant ou non à un même groupe et pouvant assurer lors du passage de la menace entre eux l'apport d'une information électromagnétique confirmant une classification de vraie menace telle qu'une menace avec arme métallique ou moteur par exemple.

En particulier, la portée acoustique passive peut être au moins égale à la moitié de la plus grande distance entre deux récepteurs, soit égale à *a* (qui dans une configuration linéaire correspond à $x_1$).

En particulier, chaque récepteur peut être configuré pour écouter en continu les signaux émis en passif par une cible détectée à partir de la direction de détection de la cible en mode actif. Chaque récepteur peut notamment être configuré pour écouter en continu les signaux émis en passif, en asservissant continûment la voie d'écoute, le système de détection pouvant être configuré pour effectuer une analyse de classification spectrale à partir de la direction de détection de la cible en mode actif, la détection en mode actif de la cible étant faite à des fréquences plus hautes que les fréquences du mode passif.

Le pistage actif peut avantageusement être utilisé pour asservir la voie de pointage acoustique de pistage (« tracking » en langue anglo-saxonne) à l'audio, à l'intégration de l'analyse spectrale du signal, et/ou aux autres capteurs éventuels (y compris des capteurs non acoustiques) pour une identification/classification optimale de la cible.

La détection en actif donnant la distance et le gisement au cours du pistage et donc la radiale Doppler, il devient possible de dé-dopplériser le signal dans cette voie asservie et donc d'effectuer l'intégration spectrale du signal de façon plus performante (sur une durée plus longue et donnant directement la fréquence centrale signante de la menace).

Dans certains modes de réalisation, le système de détection 100 peut être configuré pour classifier les cibles détectées. Le système 100 peut comprendre une unité de classification configurée pour utiliser des signaux émis par un ou plusieurs capteurs, agencés par exemple au niveau des récepteurs, pour classifier la cible 10.

La Figure 15 représente le procédé de détection mis en oeuvre par l'unité de traitement 7, dans un mode de réalisation où le système de détection 100 opère avec pistage de cible, classification de cible et alerte.

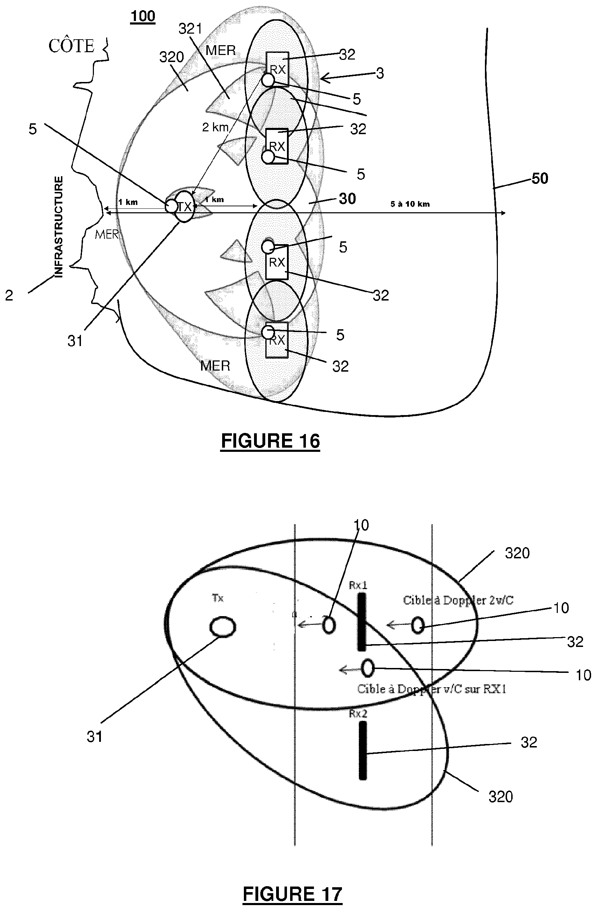

Le système 100 peut comprendre en outre au moins un capteur 5 agencés au niveau des récepteurs 32, comme représenté sur la Figure 16. Les capteurs peuvent inclure des capteurs tels qu'un capteur magnétique, et/ou un capteur acoustique, et/ou un capteur non acoustique. Des capteurs non acoustiques pouvant être utilisés comprennent par exemple de type Electrique à extrêmement faible fréquence (capteurs ELFE, acronyme pour l'expression anglo-saxonne correspondante « Extremely Low Frequency Electric »), à potentiel Electrique Sous-marin (capteurs UEP, acronyme pour l'expression anglo-saxonne correspondante « Underwater Electric Potential »), à détection acoustique magnétique (capteurs MAD, acronyme pour l'expression anglo-saxonne correspondante « Magnetic Acoustic Détection »).

Le procédé peut comprendre une étape 800 de détection consistant à traiter les signaux reçus par les récepteurs (les récepteurs pouvant être acoustiques ou non acoustiques). L'étape de détection est spécifique à chaque récepteur 32 d'un groupe donné et peut fournir un ensemble d'événements détectés hétérogènes, les événements acoustiques détectés correspondant au moins à l'émetteur du groupe correspondant, et pouvant correspondre également à des émetteurs voisins ne gênant pas la détection. Des émetteurs voisins ne gênent pas la détection :

- lorsqu'ils sont situés plus loin que l'émetteur 31 du groupe considéré qui lui-même ne gêne pas la détection, notamment avec utilisation d'un traitement adaptatif permettant le mode « RX pendant TX », ou

- lorsqu'ils sont situés à des distances telles que la réverbération dans la même bande de fréquences utile peut être négligée par rapport à celle de l'émetteur du groupe considéré.

Différents émetteurs des codes peuvent émettre des codes orthogonaux, de sorte qu'il est possible de distinguer les échos en sortie de traitement cohérent avec les copies des codes correspondants, même s'ils sont dans la même bande de fréquences. Les événements détectés à chacune des émissions peuvent comprendre la détection d'une menace et/ou des fausses alarmes.

L'étape 802 de pistage associe entre eux les événements détectés d'émissions successives qui peuvent correspondre à un mouvement d'une même menace provenant ou non du même récepteur 32, dans un groupe donné, du fait de l'émission de l'émetteur correspondant à ce groupe, puis peut fusionner les pistes de 2 groupes voisins pouvant correspondre à la même menace.

A l'étape 803, à chaque pistage sont associés des critères hétérogènes de vraisemblance de menace, ces critères étant caractéristiques d'une menace donnée observée par des capteurs fournissant des grandeurs observables hétérogènes (e.g. taille, vitesse, grandeurs acoustiques ou non, etc.).

A l'étape 804, les résultats de pistage et de classification obtenus pour les différents groupes sont regroupés et éventuellement fusionnés pour les visualiser sur une carte de la zone à surveiller et une alerte peut être déclenchée si une forte vraisemblance de menace est obtenue.

Le système de détection 100 peut être également utilisé comme système de surveillance à au moins 2 niveaux de barrière comprenant la barrière 30 et en amont de celle-ci une barrière complémentaire (50) à la barrière 30, créée au moyen de capteurs 5 placés au niveau de certains au moins des éléments de détection du système 100 (au niveau de l'émetteur 31 et/ou au niveau de un ou plusieurs récepteurs 32).

La Figure 16 illustre un exemple de réalisation utilisant un groupe de 4 récepteurs pour lequel deux distances de barrières 30 et 50 sont obtenues : la première (30) pour les pires menaces lentes typiquement plongeurs non motorisés, la deuxième (50) pour des engins motorisés, détectés notablement plus loin grâce à la basse fréquence utilisée.

La barrière complémentaire 50 la plus lointaine permet d'adresser les menaces les plus rapides et donc bruyantes, avec une capacité d'alerte lointaine pour garder un temps de réaction suffisant. La barrière la plus lointaine peut être acoustique et passive, et adaptée pour déclencher une première alerte à grande distance et sur une grande longueur, en utilisant des capteurs acoustiques optiques et/ou de la télémétrie optique (par exemple sur plus de 10km).

Dans l'exemple de la Figure 16, des capteurs à télémétrie optique 5 sont placés au niveau de chaque récepteur 32 et de l'émetteur 31. L'émetteur 31 est placé à 1 km de la côte qui sépare la zone maritime de l'infrastructure 2 à protéger, l'émetteur 31 est à une distance $DTR$ de 1 Km par rapport à la ligne $\Delta$ des récepteurs 32. La zone de détection 30 forme une barrière de détection de deuxième niveau tandis que les mêmes capteurs à télémétrie optique génèrent une barrière 50 de premier niveau lointaine en amont de la barrière 30 s'étendant par exemple jusqu'à une distance allant de 5 à 10 km par rapport à la côte. Une barrière à deux niveaux est ainsi constituée, la barrière lointaine de premier niveau 50 étant particulièrement adaptée aux menaces rapides et bruyantes.

Dans certains modes de réalisation, le système de traitement 7 peut comprendre en outre une fonction doppler 6 pour mesurer la vitesse des cibles 10 détectées, les récepteurs 32 étant alors configurés pour recevoir des échos pendant l'émission (fonctionnement en mode « Rx pendant Tx »). Le positionnement des récepteurs 32 selon l'invention permet de minimiser au mieux les zones d'ombre.

La Figure 17 illustre les avantages du système de détection 100 dans un mode de fonctionnement avec Doppler. Sur la Figure 17, seules les zones de détection 320 sont montrées pour simplifier la représentation.

Dans les barrières monostatiques classiques, au niveau de chaque récepteur de la Figure 17 est agencé également un émetteur qui gêne ses proches voisins.

Dans le système de détection multistatique 100 selon l'invention, pour chaque groupe multistatique, un unique émetteur 31 est placé à distance des récepteurs 32 et en amont de ceux-ci. Dans un mode de fonctionnement utilisant un code d'émission et traitement sensible au Doppler, un Doppler nul est observé sur la droite TX-RX1 . Cependant, à l'intérieur de la barrière de détection 30, un autre récepteur RX2 peut recevoir du Doppler. Il convient de noter que dans les applications de l'invention où il est nécessaire d'éloigner la barrière de la côte pour un meilleur préavis d'alerte, il n'est pas nécessaire d'éloigner l'émetteur d'autant.

De plus, pour détecter la menace 10 la plus critique passant juste entre 2 récepteurs 32, il existe donc un Doppler, alors que dans les solutions monostatiques conventionnelles, il n'existe rigoureusement aucun Doppler lorsqu'une menace passe en orthoradial (perpendiculairement à l'axe formé par 2 sonars monostatiques et traversant au plus court la barrière).

Le système de détection multistatique 100 selon les modes de réalisation de l'invention est basé sur un nombre d'émetteurs 31 bien inférieur à celui utilisé dans les réalisations monostatiques conventionnelles, pour un temps de réaction au moins équivalent pour les plus petites menaces et un temps de réaction supérieur pour les plus grosses menaces, tout en diminuant les contraintes de stratégie d'émission (car moins d'émetteurs). Dans les modes de réalisation où les récepteurs sont configurés pour faire du « Rx as Tx », tous les émetteurs 31 du système 100 peuvent émettre indépendamment l'un de l'autre, ou en même temps en utilisant des codes orthogonaux. Dans les réalisations monostatiques classiques, même si chaque sonar est capable de rejeter toute émission de ses voisins, il est sourd pendant qu'il émet lui-même sur une zone cT/2 (c étant la vitesse du son et T la durée de l'impulsion d'émission). Le système multistatique de détection selon l'invention peut permettre d'améliorer encore les performances en augmentant la durée de l'impulsion d'émission T. Comme les émetteurs ne gênent plus la réception, les zones d'ombre 321 sont fortement restreintes et tendent à s'approcher de la droite reliant l'émetteur 31 et le récepteur 32 considéré.

Les modes de réalisation permettent ainsi une détection multistatique sur une large zone, à la fois au-delà de la barrière mais aussi entre la barrière de récepteurs (RX) et le transmetteur (TX), grâce au recoupement des zones de détection élémentaires des récepteurs voisins par croisement de leurs zones aveugles (encore appelée « zone d'ombre » ou zone de « blanking » en langue anglo-saxonne). Pour chaque couple bistatique émetteur/récepteur, la zone de détection derrière l'émetteur est symétrique à la zone de détection devant le récepteur (tel qu'utilisé ici, le terme « derrière » fait référence à la partie de la zone de détection s'étendant en direction de l'infrastructure sensible tandis que le terme « devant » fait référence à la direction opposée, vers le large). Le recoupement entre les zones de détection des différents couples bistatiques permet, dans certains modes de réalisation, un pistage continu de cible qui peut ainsi être obtenu sur une large surface quasiment sans trou de détection. Il est possible de mettre en oeuvre une analyse du comportement de la cible par pistage acoustique actif, et/ou un guidage de la réaction qui peut être continu lorsque le pistage est continu.

Lorsque la cible passe au niveau de la barrière à une distance suffisamment proche, le système de barrière de surveillance de l'invention peut en plus confirmer une classification du type de menace et déclencher une alerte à faible taux de fausses alarmes pour renforcer une réaction adaptée. Les critères de classification peuvent comprendre différents types de critères tels que des critères de classification acoustique passive, mais aussi des critères de classification non acoustiques (par exemple électrique et magnétique) qui sont très signants pour rejeter toute fausse alarme qui serait due à la vie marine. Ces critères sont d'autant plus efficaces que la distance entre deux récepteurs impose à la cible de passer près d'au moins un des récepteurs, au niveau de la barrière. Ces critères sont d'autant plus utiles opérationnellement que la barrière de réception multistatique est au large de la zone à protéger (dans un tel cas, le système selon l'invention permet d'ajouter un déport multistatique à la distance entre l'émetteur et l'infrastructure à protéger).

Il convient de noter que dans les modes de réalisation utilisant une configuration de récepteurs 32 avec redondance en cas de panne, même une menace 10 qui connaîtrait la position exacte des récepteurs 32 et qui suivrait une ellipse autour du couple récepteur/émetteur le plus proche de la menace, serait détectée avec Doppler sur l'ellipse du récepteur voisin.

Il convient de noter que l'invention n'est pas limitée à un nombre de groupes multistatiques particulier et peut inclure un nombre variable de groupes 3 en fonction de l'application.

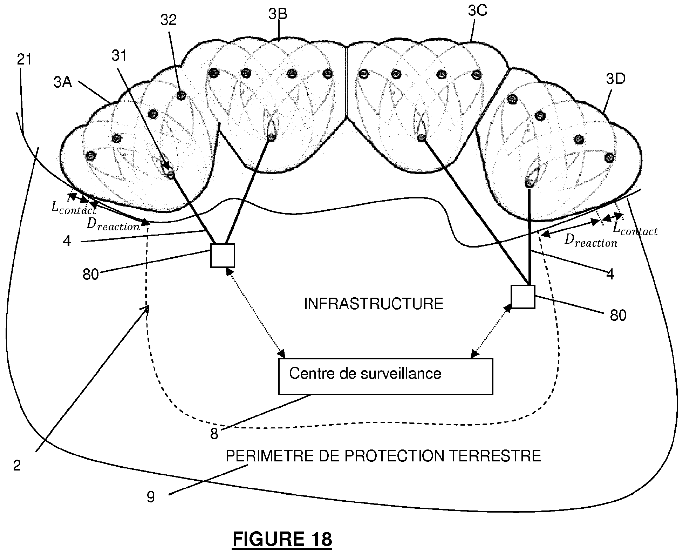

La Figure 18 illustre un mode de réalisation dans lequel le système comprend 4 groupes multistatiques 3. L'axe x (ou axe $\Delta$) de chaque groupe peut être aligné ou non avec ceux des autres groupes adjacents en fonction de la configuration de la zone sensible où se situe l'infrastructure 2, et en particulier fermer la zone formant barrière de protection de part et d'autre, sur la Figure 18 avec les groupes 3A et 3D. On peut bien sûr insérer autant de groupes que nécessaire entre les groupes 3B et 3C puisque les groupes voisins ne se gênent pas acoustiquement entre eux. On peut ainsi former des zones de protection suivant la forme de l'infrastructure à protéger sans limite du nombre de groupes avec une zone de protection de plusieurs dizaines de km ou plus. La protection peut être complétée par un centre de surveillance 8 placé au voisinage de l'infrastructure et d'un périmètre de protection terrestre 22. Le centre de surveillance 8 peut être connecté à des locaux techniques 80.

Par ailleurs, dans des modes de réalisation préférés où la zone sensible s'étend largement de part et d'autre sur la côte, les zones de détection 3-A et 3-D des groupes les plus extrêmes de la barrière (groupes situés vers les points de la côte à protéger les plus éloignés) referment la barrière et doivent toucher la côte 21 à une distance $D_{reaction}$ suffisante de la zone sensible pour permettre le temps suffisant pour la réaction. Dans de tels modes de réalisation, chaque groupe d'extrémité peut être avantageusement agencé de sorte que sa zone de détection 30 touche la côte 21 sur une longueur $L_{contact}$ (longueur de contact entre la zone de détection 30 du groupe d'extrémité 3 et la côte) et à une distance $D_{reaction}$ suffisante de la zone à protéger pour permettre la réaction à temps. En particulier, la distance $D_{reaction}$ peut être avantageusement supérieure ou égale au produit de la vitesse de menace maximale et du temps de préavis prédéfini pour favoriser une réaction efficace sur cette menace.

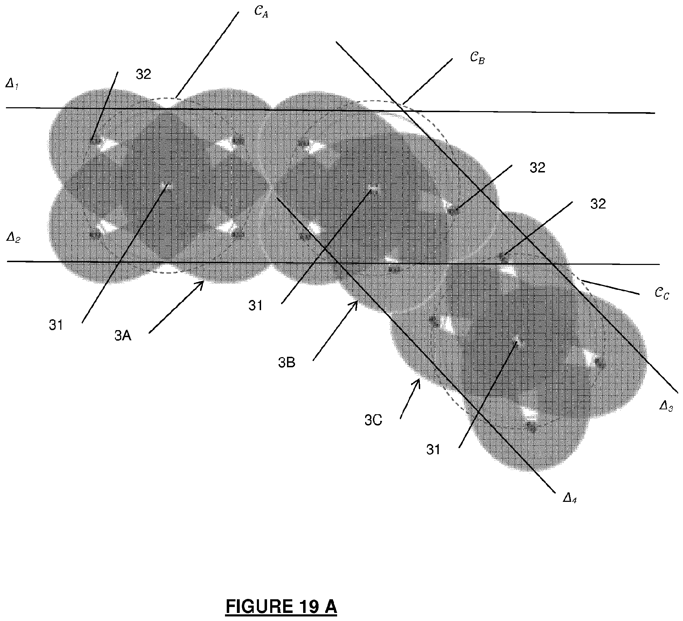

La Figure 19A est une vue simplifiée d'un exemple de système multistatique comprenant 3 groupes multistatiques 3-A, 3-B, 3-C à configuration circulaire, avec un espacement irrégulier des récepteurs adjacents le long du cercle, et présentant un axe de symétrie , les récepteurs 32 de chaque groupe décrivant un cercle

$$\mathcal{C}_A, \mathcal{C}_B,$$

ou

$$\mathcal{C}_C,$$

chaque cercle étant centré au niveau de l'émetteur 31 de chaque groupe, et présentant un rayon légèrement supérieur à la portée monostatique équivalente $R_{mono}$. Les émetteurs 31 successifs des différents groupes peuvent former une suite de segments alignés ou non. La distance entre deux émetteurs 31 de deux groupes adjacents et la forme des segments successifs peut être choisie pour optimiser la protection en fonction de la forme de l'infrastructure sensible à protéger, et/ou de la configuration de la côte et/ou de la pente des fonds marins autour. Dans l'exemple de la figure 19A, les zones d'ombre des récepteurs sont recouvertes au moins partiellement par les zones de détection élémentaires des récepteurs voisins du même groupe ou des groupes voisins, ce qui permet une détection quasiment sans trou, les trous de détection n'étant situé qu'à proximité de chaque récepteur. De plus, la barrière ainsi formée comprend une redondance de recouvrement pour certains au moins des récepteurs et permet une continuité de service réduite et étanche en cas de panne de récepteurs. Les menaces peuvent être détectées à l'intérieur des cercles et des interfaces entre les groupes par plusieurs récepteurs, y compris dans la zone située entre deux groupes. Il est ainsi obtenu un exemple de barrière quasiment dépourvue de trou de détection et avec redondance de recouvrement, la barrière comprenant deux zones de barrière rectangulaires ayant globalement une épaisseur minimale constante, y compris dans les modes de réalisation où elles sont inclinées entre elles. Ainsi :

- Les groupes 3-A et 3-B génèrent une barrière rectangulaire entre les droites Δ1 et Δ2
- Les groupes 3-B et 3-C génèrent une barrière rectangulaire entre les droites Δ3 et Δ4.

Il convient de noter que :

- le groupe 3B est adapté à une inclinaison entre les deux tranches de barrière rectangulaires ci-dessus sur une large plage de valeurs possibles, en décalant sur le cercle

$$\mathcal{C}_B$$

les deux récepteurs d'interface avec le groupe 3-C par rapport aux récepteurs interfaçant le groupe 3-A ;

- Les droites Δ1 à Δ4 sont toutes tangentes au cercle de rayon $R_{mono}$ centré sur les différents émetteurs, ce qui permet une bonne configuration formant barrière avec des groupes adjacents 1TX/4RX circulaire, comme détaillé ci-après.

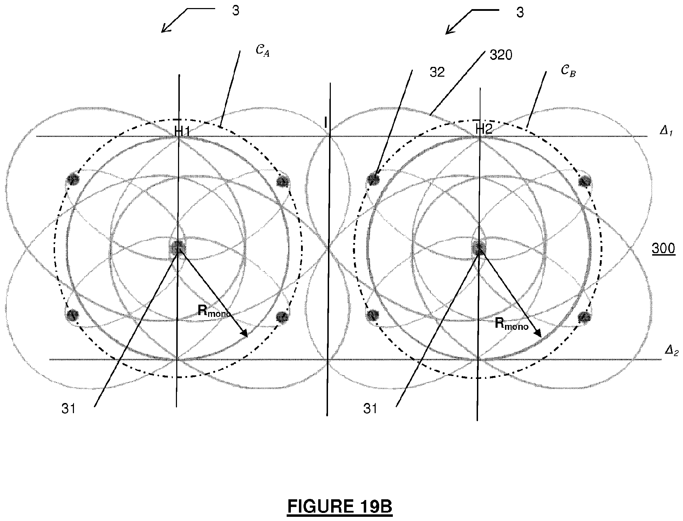

La Figure 19B est un schéma du système de détection 100 dans un mode de réalisation utilisant deux groupes de détection circulaires adjacents générant conjointement une zone de détection 300 qui présente une symétrie par rapport à l'axe passant par les émetteurs, et avec une redondance totale à l'intérieur de chaque cercle $R_{mono}$, et une redondance partielle entre les groupes, et sans trou de détection, la zone rectangulaire formant barrière entre les droites Δ1 et Δ2 étant entièrement détectée

Plus précisément, dans l'exemple de la Figure 19B, les récepteurs des deux groupes situés respectivement sur le Cercle

$$\mathcal{C}_A$$

ou le cercle

$$\mathcal{C}_B$$

sont localisés à une distance de l'émetteur 31 supérieure à la portée monostatique équivalente $R_{mono}$, l'angle entre un émetteur et deux récepteurs sur un cercle étant plus large que celui de la configuration hexagonale de la figure 7A (angle de 60°). La zone de détection globale 300 passe à la fois par les points H1 et H2 et le point I situé à l'intersection entre les zones de détection 30 des deux groupes et la droite Δ1. Chaque point H1 et H2 correspond au point d'intersection entre la droite Δ1 et l'axe passant par un des deux émetteurs qui est perpendiculaire à la barrière du groupe 3 considéré, ces points étant également situés sur le cercle de rayon $R_{mono}$ centré au niveau de l'émetteur du même groupe et tangent à la droite Δ1.

**EP 3 559 696 B1**

La zone de détection globale 300 forme une barrière pleine et sans trou dont l'épaisseur est égale à 2. $R_{mono}$ et la longueur est égale à la distance entre les 2 émetteurs 31 des deux groupes, soit à la distance du segment [H1H2]. Cette barrière correspond ainsi à une surface $S'$ rectangulaire qui, lorsqu'elle est ramenée à 2. $R^2_{mono}$, pour une configuration correspondant à la figure 19B avec pour chaque groupe 1 émetteur et quatre récepteurs donne :

$$\frac{S'}{2.R^2_{mono}} = 2,7$$

La surface $2.R^2_{mono}$, peut être interprétée comme la partie rectangulaire de la surface de barrière formée par une chaine d'émetteurs monostatiques distants entre eux de $\sqrt{2}$ . $R_{mono}$ et d'épaisseur $\sqrt{2}$ . $R_{mono}$ apportant donc chacun une surface pleine et rectangulaire de 2. $R^2_{mono}$. La partie rectangulaire de la zone de détection est la caractéristique de la barrière qui doit assurer une épaisseur minimale de barrière pour une distance ou temps de détection de la menace souhaités. Ainsi par rapport à un système monostatique classique, l'avantage en coût dépend du coût d'un récepteur par rapport à celui d'un émetteur. Un autre avantage significatif est que la menace a, en tout point de redondance dans la barrière, une radiale Doppler qui ne peut s'annuler pour une menace mobile par rapport à au moins un des couples bistatiques.

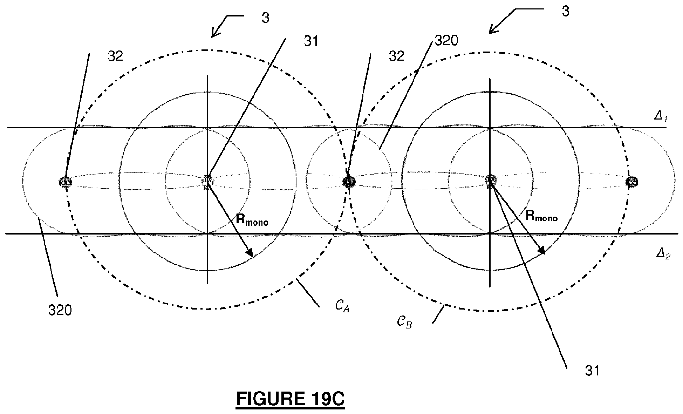

La Figure 19C est un schéma d'un système de détection comprenant au moins deux groupes de détection adjacents générant une barrière (le système peut comprendre d'autres groupes similaires et non représentés, la barrière totale du système étant dans ce cas plus longue), selon un mode de réalisation. Chaque groupe comprend 2 récepteurs et l'émetteur de chaque groupe partage chacun des deux récepteurs avec les émetteurs des groupes adjacents situés de part et d'autre.

Chacun des deux récepteurs 32, qui sont entourés d'émetteurs 31 de part et d'autre, utilisent les deux émissions pour générer une zone de détection identique par symétrie.

La zone de détection globale formée par la succession de tels groupes adjacents peut être adaptée aux besoins de l'implémentation de l'invention en rompant l'alignement entre les deux segments qui joignent chacun les deux récepteurs de chacun des deux groupes adjacents, ce qui fait tourner ces zones de détection autour du récepteur partagé entre ces deux groupes.

Une telle configuration de groupe permet une zone de détection étendue en longueur, symétrique par rapport à l'axe formé par les émetteurs et formant une zone de détection en utilisant un seul émetteur et un seul récepteur en plus par groupe. En effet, dans ce mode de réalisation, tous les récepteurs sont partagés entre deux émetteurs. Cependant, il ne peut y avoir redondance dans une telle configuration minimale en matériel et particulièrement adaptée à une forme de barrière rectangulaire par morceaux. Les zones d'ombre sont en partie recouvertes au niveau de l'interface entre deux groupes. Par suite, la zone de détection est quasiment dépourvue de trou, ce qui n'est pas gênant en pratique, en particulier dans le mode « RX pendant TX ». Les récepteurs 32 entourés d'émetteurs 31 de part et d'autre peuvent distinguer leurs émissions respectives y compris dans la même bande de fréquences pour générer des zones de détection 30 identiques par symétrie. La zone de détection peut être adaptée aux besoins de l'application de l'invention en la faisant tourner autour des récepteurs partagés entre deux émetteurs.

Plus généralement, le système de détection 100 peut comprendre des groupes partageant au moins un récepteur (dit récepteur commun), les récepteurs communs pouvant utiliser les émissions d'un ou plusieurs émetteurs suffisamment proches appartenant aux groupes voisins et utilisant tous la même bande de fréquences et des signaux orthogonaux.

Comme montré sur la figure 19C, la zone de détection globale 300, formant barrière pleine et sans trou, a donc pour épaisseur minimale 2B égale à la distance entre les droites $\Delta1$ et $\Delta2$ et pour longueur la distance entre les 2 émetteurs 31.

La longueur du groupe formé par un émetteur et deux récepteurs est donc de 2R.

Une telle configuration garantit une barrière dont l'épaisseur est partout d'au moins 2B pour assurer un temps de réaction minimal sur une distance 2B>Dmin avec $D_{min} > (V_{menace}/T_{reac})$.

Une barrière linéaire par morceaux optimale et simplifiée peut être constituée de groupes ayant une longueur de barrière 2R la plus grande possible.

Pour que les deux points d'intersection des zones de détection des deux groupes adjacents de la

Figure 19C les plus éloignés de leurs émetteurs forment une barrière d'épaisseur 2B à la distance R de leurs émetteurs respectifs, chacun de ces deux points doit appartenir à l'ovale de Cassini de produit $R^2_{mono}$, avec la même condition par symétrie:

$$B.\sqrt{B^2 + R^2} = R^2{}_{mono}$$

Par symétrie, la condition est identique au niveau de l'émetteur pour une barrière d'épaisseur 2B.

Si l'émetteur et le récepteur sont trop éloignés l'un de l'autre, les ovales de Cassini tendent à se rétrécir en leur milieu puis à se séparer. Le point le plus critique est donc au milieu du segment délimité par l'émetteur et le récepteur et sur la droite $\Delta_1$ pour assurer une épaisseur de barrière 2B à la distance R/2. La distance entre ce point critique de la droite $\Delta_1$ et l'émetteur, ou de façon identique entre ce point critique de la droite $\Delta_1$ et le récepteur est donc:

$$\sqrt{B^2 + R^2/4}$$

Pour appartenir à l'ovale de Cassini de produit $R^2{}_{mono}$, la condition suivante doit alors être satisfaite:

$$B^2 + R^2/4 = R^2{}_{mono}$$

Ou encore ;

$$R^2 = 4R^2{}_{mono} - 4B^2$$

En substituant $R^2$ dans la première condition il peut être déduit des équations précédents l'équation bicarrée en X = $B^2$ suivante :

$$3X^2 - 4XR^2{}_{mono} + R^4{}_{mono} = 0$$

Cette équation bicarrée admet deux solutions dont une inutile correspondant à R=0 et la deuxième qui est donc la solution optimale définie par $B_{opt}$ et $R_{opt}$ comme suit :

$$B_{opt} = R_{mono}/\sqrt{3} \quad \text{et} \quad R_{opt} = \sqrt{8/3}\ R_{mono} \sim 1{,}63\ R_{mono}$$

Cette solution optimale correspond au mode de réalisation de la Figure 19C.

La surface rectangulaire S' couverte par cette configuration simple avec 1 émetteur et 2 récepteurs, agencés selon une forme optimale pour constituer une barrière multistatique, est donc :

$$S' = 2B_{opt}. 2R_{opt} = 8\frac{\sqrt{2}}{3} R^2{}_{mono} \sim 3{,}771\ R^2{}_{mono}$$

Cette barrière multistatique correspond ainsi, pour chaque groupe, à la partie rectangulaire S' de sa surface de détection qui peut être comparée à la grandeur 2. $R^2{}_{mono}$, qui est la partie rectangulaire (dans ce cas particulier carrée) de surface d'un groupe monostatique de portée $R_{mono}$, les groupes monostatiques étant espacés entre eux de $R_{mono} \sqrt{2}$:

$$\frac{S'}{2R^2{}_{mono}} = 1{,}886$$

La barrière multistatique selon le mode de réalisation de la Figure 19C est formée par une succession d'ensembles de 1 émetteur/2 récepteurs, avec chacun des 2 récepteurs partagés avec les groupes voisins de part et d'autre. L'espacement entre l'émetteur TX et chaque récepteur RX étant égal à $1{,}6R_{mono}$, l'espacement entre deux émetteurs successifs étant donc de 3,26 $R_{mono}$. Cette barrière multistatique est donc avantageuse en surface d'un rapport sensiblement égal à 1,886 par rapport à une barrière monostatique formée de 1 émetteur/1 récepteur colocalisés et espacés de $R_{mono}\sqrt{2}$ .

Par ailleurs, la longueur de la barrière rectangulaire bistatique par couple TX/RX de 3,26 $R_{mono}$ constitue un

avantage significatif par rapport à l'espacement $R_{mono}\sqrt{2}$ pour une barrière monostatique.

Il convient de noter qu'il est possible d'espacer les sonars monostatiques de façon à avoir la même épaisseur minimale de barrière $2B_{opt} = 2\,R_{mono}/\sqrt{3}$ que la solution multistatique optimale ci-dessus. L'espacement entre sonars monostatiques est alors de : $2R_{mono}\sqrt{\frac{2}{3}}$ et la surface rectangulaire obtenue est de :

$$2R_{mono}\sqrt{\tfrac{2}{3}}.\,2\,R_{mono}/\sqrt{3} = \tfrac{4}{3}\sqrt{2}R^2{}_{mono} \sim 1{,}886\ R^2{}_{mono}$$

Cette valeur est moins optimale que la solution monostatique initiale de surface carrée 2 $R^2{}_{mono}$ espacée de $R_{mono}\sqrt{2}$ et d'épaisseur identique $R_{mono}\sqrt{2}$

Cette dernière solution monostatique de même épaisseur $2B_{opt} = 2\,R_{mono}/\sqrt{3}$ que la solution multistatique est très exactement deux fois moins bonne en longueur et donc en surface que la surface rmultistatique de la Figure 19C :

$$\text{S' } = 2B_{opt}.\,2R_{opt} = 8\,\tfrac{\sqrt{2}}{3}R^2{}_{mono} \sim 3{,}771\ R^2{}_{mono}$$

Chaque groupe multistatique partageant ses 2 récepteurs avec ses 2 voisins, cela revient à n'ajouter par groupe que 1 émetteur et 1 récepteur par groupe multistatique soit l'équivalent en matériel d'un sonar monostatique pour une longueur de barrière double donc deux fois plus avantageuse en multistatique pour la même épaisseur de barrière.

L'agencement de la figure 19C, contrairement à l'agencement de la figure 19B, n'est pas redondant : si un émetteur 31 tombe en panne, il existe un trou dans la barrière de protection, comme pour une barrière monostatique.

Comme pour la barrière monostatique, la détection en mode actif basé sur le Doppler de la menace peut être difficile si la menace passe perpendiculairement à la barrière au niveau du récepteur, comme indiqué sur la Figure 17. En effet, la radiale Doppler est strictement nulle sur l'axe émetteur/récepteur (axe TX/RX) et faible de part et d'autre de cet axe. Cependant, la distance au récepteur RX passe par un minimum favorisant la détection en mode passif ou en fonctionnement non acoustique.

Une telle barrière multistatique étendue en longueur pour les menaces lentes et à faible index de détection est particulièrement avantageuse lorsqu'il est utile d'optimiser également la détection de menaces à plus fort index, le plus loin possible de l'infrastructure, et donc les menaces les plus rapides à détecter. Un espacement trop petit entre les récepteurs peut devenir alors inutile et coûteux, et la détection de ces menaces à plus fort index à plus longue distance de la côte peut se faire avantageusement en ajoutant des récepteurs plus loin de l'infrastructure 2.

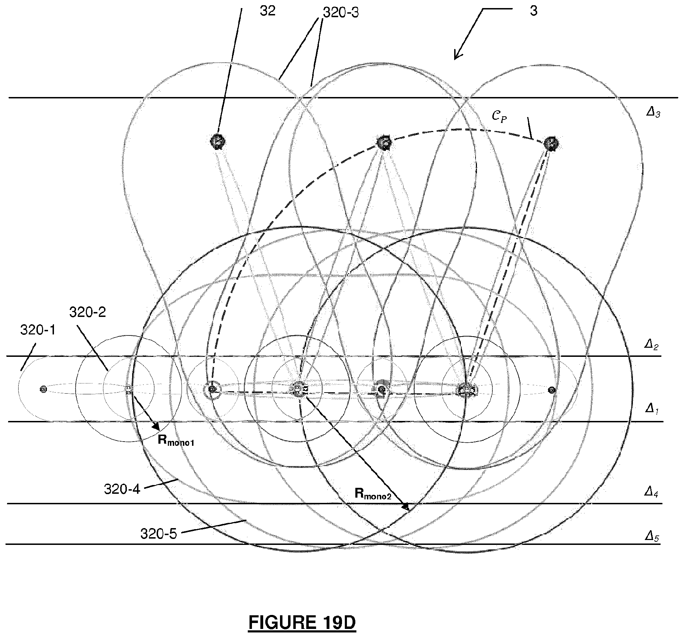

La Figure 19D montre un exemple de barrière de détection multicouches, comprenant une première couche de récepteurs identiques à celle de Figure 19C adaptée pour la détection de menaces à faible index, et une deuxième couche de récepteurs plus éloignée que la première de la côte et constituée de récepteurs partagés par au moins deux groupes (un tel récepteur appartient simultanément à ces deux groupes), la deuxième couche étant adaptée à la détection de cibles 10 ayant des index de cibles plus forts et localisées beaucoup plus loin. Dans ce mode de réalisation, le terme « couche » fait référence à un ensemble de récepteurs du système de détection 100, considéré dans son ensemble, les récepteurs tétant pour la plupart partagés entre groupes en utilisant les émissions de plusieurs émetteurs. Un tel ensemble de récepteurs a des caractéristiques de répartition géométrique adaptées à la forme de la zone à surveiller.

Un tel agencement permet au système de détection de détecter des menaces d'index différents, pouvant avoir des vitesses différentes. Par exemple :

une menace de type plongeur peut avoir un index très faible, mais sa vitesse moyenne sans engin d'aide de traction reste typiquement de l'ordre de 1 noeud ;

- une menace de type gros engin de propulsion pour transport rapide, gros drone ou mini sous-marin peut avoir un index d'environ 10 à 20 dB plus fort et peut aller beaucoup plus vite, jusqu'à typiquement environ 6 noeuds en zone littorale; de telles menaces doivent être détectées 6 fois plus loin.

Un système monostatique dans un environnement de type petit fond a, en basses fréquences, des pertes aller/retour en $2KlogR_{mono_1}$. Un tel système monostatique a une portée $R_{mono_2}$ sur une cible d'index plus fort, l'écart d'index $\Delta(TS)$ par rapport à la portée initiale $R_{mono_1}$ étant tel que :

$$2 * KlogR_{mono_2} = 2 * KlogR_{mono_1} + \Delta(TS) \quad (35)$$

Pour deux couches devant satisfaire les mêmes contraintes de couverture des zones de détection comme mentionné précédemment (avec ou sans redondance de recouvrement, avec ou sans trou de détection par exemple), en appliquant les équations précédentes définissant les espacements $d_{inter}$ entre deux récepteurs adjacents et les rayons respectifs R de ces deux couches, les produits $(d_{inter}.R)_1$ et $(d_{inter}.R)_2$ étant respectivement proportionnels à $R_{mono_1}$ et $R_{mono_2}$, il vient :

$$2 * Klog(R_{mono_2}/R_{mono_1}) = 2 * Klog(d_{inter}.R)_2/(d_{inter}.R)_1 = \Delta(TS) \quad (36)$$

Ainsi, dans les modes de réalisation où le centre des cercles décrits par les couches concentriques d'un groupe donné coïncide sensiblement avec l'émetteur, pour des pertes de propagation égales à K fois le logarithme de la distance des trajets de propagation $TL$, le rapport entre le produit $d_{inter1}R_1$ de la distance inter-récepteur associée à une couche par le rayon $R_1$ de cette couche et le produit $d_{inter2}R_2$ de la distance inter-récepteur $d_{inter2}$ associée à une autre couche par le rayon $R_2$ de cette autre couche peut être déterminé en fonction de l'écart maximal d'index de détection $\Delta(TS)$ des cibles possibles, selon l'équation (36).

En tenant compte de la géométrie de la Figure 19D, en appliquant l'équation (36) et en considérant d=D(TX,RX) la distance entre chaque émetteur et un récepteur, alors la distance inter-récepteur $d_{inter1}$ de la première couche satisfait :

$$d_{inter1} = 2d \text{ avec un rayon } R_1 = d$$

La distance inter-récepteur $d_{inter2}$ de la deuxième couche satisfait :

$$d_{inter2} = 2d \text{ avec un rayon } R_2 = 3d$$

En considérant que les deux zones de détection associées aux couches de la figure 19D ont les mêmes contraintes de couverture, et notamment sont configurées sans redondance, il apparaît directement que les deux couches adressent chacune, pour des pertes de propagation classiques en petit fond, et pour de basses fréquences en 17 *log R*, des menaces d'index différent avec un écart d'index donné par :

$$\Delta(TS) = 2 * Klog(d_{inter}.R)_2/d_{inter}.R)_1 = 34log(6/2) = 16,2 \, dB$$

Il convient de noter sur la Figure 19-D que les rayons $R_{mono_1}$ et $R_{mono_2}$ diffèrent bien également d'un rapport 3.

La formule précédente donnant l'écart d'index $\Delta(TS)$ permet donc de déterminer la plage d'index de menaces que le système de détection peut adresser à partir de sa géométrie ou au contraire de dimensionner la géométrie des couches du système de détection en fonction de la plage des menaces à détecter à partir d'émetteurs et récepteurs de performance donnée.

Le système multistatique multicouche 100 de la Figure 19D permet pour sa première couche d'avoir des zones de détection 320-1 et 320-2 respectivement pour le récepteur à gauche et à droite de chaque émetteur 31, chacune étant proche d'une forme hippodrome particulièrement bien adaptée pour former une barrière de détection située entre les droites Δ1 et Δ2, avec une zone de recouvrement pour un récepteur donné, puisque chaque récepteur utilise les deux émetteurs autour de lui.

La barrière de la première couche peut être particulièrement adaptée à une détection des menaces à faible index, par exemple de type plongeur, sur une épaisseur quasi constante d'environ $2B_{opt} = 2R_{mono}/\sqrt{3} \sim 1,155 \, R_{mono}$ et une distance avantageuse entre émetteurs de $2R_{opt} = 2\sqrt{8/3} \, R_{mono} \sim 2 * 1,63 \, R_{mono} \sim 3,266 \, R_{mono}$ au lieu de 1,414 $R_{mono}$ dans les solutions monostatiques classiques. Il en résulte un gain en surface rectangulaire de barrière de 3,771$R^2_{mono}$ au lieu de 2$R^2_{mono}$ pour des cercles de systèmes monostatiques classiquement distants de √2. Le rapport de 1,89 précédent est également satisfait.

Dans l'exemple de la figure 19D, chaque récepteur de la deuxième couche est situé, dans cet exemple, sur un axe perpendiculaire à la ligne décrite par les récepteurs 32 de la première couche (qui passe aussi par les émetteurs 31) et passant sensiblement par un récepteur de la première couche, la distance émetteur-récepteur pour un récepteur de la deuxième couche étant trois fois plus grande que la distance émetteur-récepteur de la première ligne de récepteurs. Dans cet exemple, les récepteurs de la deuxième couche sont dédiés à la détection de menaces d'index 16,2dB plus forts que l'index de menaces de type plongeurs (similairement au mode de réalisation de la Figure 19-C), et correspondent à des menaces d'index 16,2 dB supérieurs, donc à des menaces pourvues d'engins plus gros pouvant aller bien plus vite qu'un plongeur sans aide de traction.

Chaque récepteur 32 de la deuxième couche peut traiter avantageusement les émissions de plusieurs émetteurs 31 et est partagé entre les groupes adjacents (i.e. appartient simultanément à plusieurs groupes adjacents), les émetteurs de ces groupes pouvant utiliser des codes orthogonaux entre eux, ce qui permet aux émetteurs d'utiliser la même bande de fréquences. Il convient de noter que sur la figure 19D, ne sont représentées que les zones de détection 320-3 de cette deuxième couche avec les 2 émetteurs les plus proches de chaque récepteur. Inversement chaque émetteur 31 insonifie utilement au moins deux récepteurs 32 qui peuvent constituer comme dans cet exemple une paire de référence constituant pour chaque groupe une couche minimale, cette couche minimale pouvant être considérée comme linéaire ou partiellement circulaire, comme indiqué par l'arc de cercle

$$\mathcal{C}_P$$

de la figure 19-D. La zone de détection 320-3 de la deuxième couche de récepteurs sont bien plus larges que les zones 320-1 et 320-2 de la première couche et permettent également aux récepteurs de cette deuxième couche, typiquement situés vers le large de la côte 21, de détecter également de l'autre côté de la ligne formée par les émetteurs (donc vers la côte).

Il convient de noter que la meilleure détection des engins de menaces, d'index 16,2 dB supérieurs aux index des plongeurs détectés sur les zones 320-1 et 320-2 entre la ligne des émetteurs et la côte, est obtenue avec des couples bistatiques formés par :

- tous les couples émetteurs/récepteurs adjacents de la première couche, donc situés à une distance $d_{inter1}$ ; de tels couples permettent d'obtenir une zone de détection quasi circulaire de type 320-5 qui se répète tous les intervalles $d_{inter1}$ et qui constituent ainsi une barrière de détection sans trou efficace vers la côte des menace rapides, jusqu'à la droite Δ5, ce qui facilite leur interception pour une réaction adaptée ;

- tous les couples émetteurs/récepteurs de la première couche distants d'une distance 3. $d_{inter1}$ ; de tels couples permettent d'obtenir une zone de détection de type hippodrome 320-4 qui se répète tous les intervalles $d_{inter1}$ et qui constitue une forme allongée très régulière pour étendre la barrière jusqu'à la jusqu'à la droite Δ4 pour les cibles ayant des index de cibles plus forts.

Entre les droites Δ3 et Δ5, la barrière de détection est d'épaisseur 6 fois plus grande pour une cible à 6 noeuds que la barrière de détection située entre les droites Δ1 et Δ2, alors que l'augmentation de 16,2 dB de l'index de cible dans cet exemple ne permettrait qu'une augmentation de portée en monostatique, par définition selon un rapport $R_{mono2}/R_{mono1}$ = 3 dans cet exemple.

Cet écart d'index de détection déjà important entre les deux types de menaces correspond à la plage d'index de cibles qui peut être adressée efficacement par le système de détection dans les modes de réalisation où les zones de détection sont de même type, à savoir sans trou et sans redondance pour ces deux menaces, et utilise deux couches de récepteurs. La menace à fort index est détectée continûment sans trou par un groupe multistatique en ajoutant 1 émetteur avec un seul récepteur mais utilisant 2 récepteurs partagés, sur une distance 6 fois plus grande que la distance de la Figure 19C correspondant à la première couche pour les index faibles avec 1 émetteur TX/1 récepteur RX par groupe multistatique.

Au total, pour deux couches étanches à des menaces d'index aussi différentes que 16,2 dB, par groupe, il est ajouté uniquement que 1TX / 2RX, un rapport de portée d'un facteur 6 correspondant typiquement à leurs vitesses respectives, ce qui permet un temps de réaction identique.

Par comparaison, un système conventionnel, à savoir un système monostatique, ne permet d'obtenir qu'un rapport de 3 en portée, et l'espacement ne peut être pas être adapté pour les deux types de menaces à la fois. L'avantage d'une solution multistatique multicouche, selon le mode de réalisation de la figure 19D est donc très significatif. De plus, la basse fréquence permet d'envisager des portées peu limitées en pratique par l'absorption.

Il convient de noter que des propriétés similaires peuvent être obtenues pour des configurations du système de détection où chaque couche est configurée pour détecter une cible d'index minimal donné et, où certains au moins des récepteurs de l'ensemble des groupes sont agencés selon au moins deux lignes de récepteurs principales, les récepteurs adjacents de la première ligne étant distants entre eux d'une distance $d_{inter1}$ et la distance émetteur-récepteur de référence de la première ligne étant désignée par $D_{TRX1}$, les récepteurs adjacents d'au moins une autre ligne de récepteurs étant distants entre eux d'une distance $d_{inter2}$ et la distance émetteur-récepteur de référence de cette autre ligne étant désignée par $D_{TRX2}$, la première ligne étant agencée entre l'infrastructure et les autres ligne. En effet, pour des pertes de propagation égales à K fois le logarithme de la distance des trajets de propagation *TL,* le rapport entre le produit $d_{inter1}$. $D_{TRX1}$ correspondant à la première ligne et le produit $d_{inter2}$. $D_{TRX2}$ de cette autre ligne peut être déterminé en fonction de l'écart maximal d'index de détection $\Delta(TS)$ des cibles possibles :

$$2K log\ ((d_{inter_2}.D_{TRX2})/(d_{inter_1}.D_{TRX1}))\ = \Delta(TS)\ (37)$$

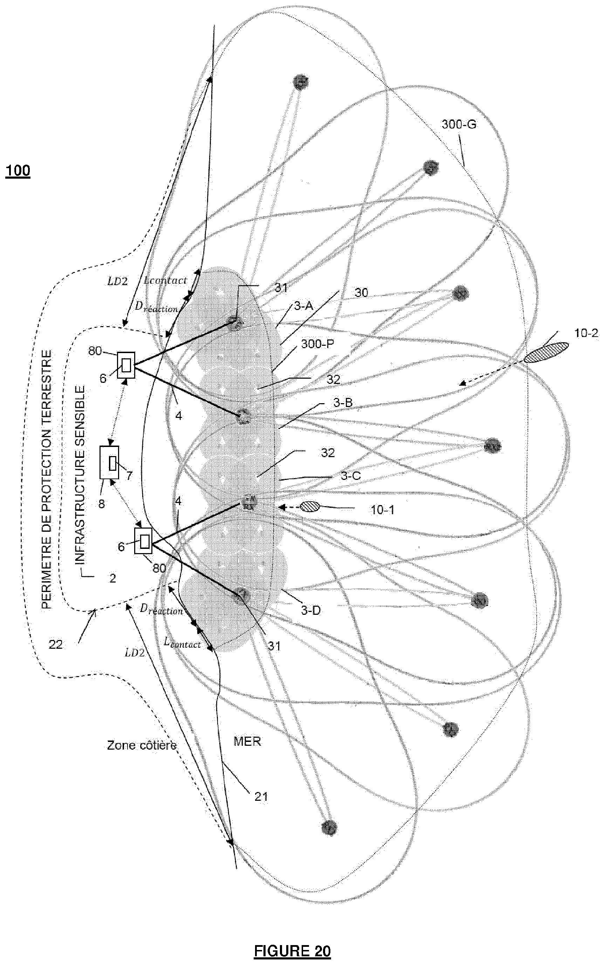

La Figure 20 représente un exemple de système multistatique comprenant 4 groupes multistatiques 3-A, 3-B, 3-C et 3-D, à configuration circulaire, qui sont accolés successivement pour former une barrière. Les émetteurs 31 des différents groupes peuvent décrire une forme adaptée protégeant l'infrastructure.

Le nombre de groupes peut notamment dépendre de la forme de l'infrastructure à protéger. Le nombre de récepteurs par groupe est égal à 4 sur la figure 20.Dans le mode de réalisation de la figure 20, une deuxième couche de récepteurs est utilisée, cette deuxième couche comprenant des récepteurs partagés par les groupes adjacents. Chaque récepteur 32 de la deuxième couche peut utiliser les émissions de plusieurs émetteurs. Inversement chaque émetteur peut insonifier utilement au moins deux récepteurs équidistants, formant la paire de référence de la deuxième couche du groupe comprenant l'émetteur. Il peut être observé en plus que :

- dans la zone la plus droite de la barrière, un récepteur est partagé, appartenant à la fois aux groupes 3-B et 3-C. Il y a donc en tout uniquement 7 récepteurs dans la seconde couche alors qu'il y a 4 groupes ayant bien chacun une paire de référence de récepteurs équidistants de l'émetteur associé ;

- certains émetteurs insonifient utilement des récepteurs autres que les récepteurs de la paire de référence de leur groupe, ces récepteurs utilisant alors les émissions d'au moins deux émetteurs. C'est le cas des émetteurs assurant la fermeture de la barrière sur la côte de part et d'autre, à savoir 3-D et 3-A.

Similairement à la Figure 19D, la Figure 20 montre l'intérêt de la combinaison de deux couches de réception par groupe multistatique qui permet donc d'optimiser la zone de détection pour des menaces d'index de détection fort différents avec les mêmes émetteurs.

Un tel agencement du système de détection 100 est avantageux par rapport à la solution multi-monostatique classique puisque l'espacement entre deux groupes TX/RX ne peut être optimisé simultanément pour les deux types de menaces, mais conduit, pour une détection sans trou multi-monostatique, au moins sur une couche, à un pavage régulier du plan à l'espacement minimal nécessaire à la menace la plus difficile à détecter, ce qui est beaucoup plus coûteux.

Comme dans le mode de réalisation de la figure 18, un centre de surveillance 8 peut être prévu au voisinage de l'infrastructure et d'un périmètre de protection terrestre 22, ce centre de surveillance 8 pouvant être connecté à des locaux techniques 80.

Les zones de détection 3-A et 3-D des groupes les plus extrêmes de la barrière (groupes situés vers les points de la côte à protéger les plus éloignés) referment la barrière et peuvent toucher avantageusement la côte 21 sur une longueur $L_{contact}$ (longueur de contact entre la zone de détection 30 du groupe d'extrémité 3 et la côte pour la menace la plus difficile à détecter adressée par la première couche) et à une distance $D_{reaction}$ suffisante de la zone à protéger 22 (zone marquée en pointillé sur la figure 19 et entourant l'infrastructure, le centre de surveillance 8 et les locaux techniques 80) compte tenu de la vitesse de cette menace dans l'eau. En particulier, la distance $D_{reaction}$ peut être avantageusement supérieure ou égale au produit de la vitesse de menace Maximale et du temps de préavis prédéfini pour favoriser une réaction efficace sur cette menace. Il convient de noter, que dans les modes de réalisation utilisation un périmètre de protection terrestre, la menace ne peut pas pénétrer à proximité de l'infrastructure sensible 2 à protéger par la côte du fait de ce périmètre de protection terrestre.

De façon similaire, pour la plus grosse menace adressée au plus loin par la seconde couche, le système de surveillance permet une détection à une distance LD2 suffisante du début de la zone à protéger de sorte qu'une menace de vitesse maximale soit détectée avec le même temps de préavis qu'une menace lente de type plongeur sans aide de traction.

Cette longueur peut inclure, outre la distance permettant rapidement la détection sur un Doppler d'alerte, une distance de réaction 6 fois plus importante que celle pour la menace 6 fois plus lente, ce qui permet un temps de réaction identique pour ces deux menaces très différentes.

L'invention n'est pas non plus limitée à une fixation particulière des récepteurs 32 dans un environnement maritime ni à un mode de communication particulier entre les récepteurs 32 et l'émetteur 31. Les récepteurs 32 peuvent être par exemple posés sur le fond pour une durée choisie et transmettre les résultats de détection prétraités, par câble ou par radio.

L'invention n'est pas non plus limitée aux applications de surveillance mentionnées ci-avant et englobe tout type de surveillance de zone sensible associée à une infrastructure accessible par voie d'eau.

Par exemple, les modes de réalisation de l'invention peuvent être utilisés pour effectuer une surveillance dans des zones sensibles associées à tout type d'infrastructure 2 (surveillance côtière, industrielle, au large d'une plateforme). L'infrastructure 2 peut être par exemple une infrastructure industrielle, touristique, militaire ou civile avec façade ou implémentation maritime (e.g. port militaire). Le système de détection selon les modes de réalisation de l'invention est adapté à tout type de menaces immergées 10, par exemple des menaces sous-marines à vitesse plus importante qu'un plongeur non motorisé. Le déport géométrique des récepteurs des groupes 3 permet de constitué des barrières longues, dans lesquelles les zones aveugles sont très limitées voire absentes, et permettent une détection des menaces 10 à une distance suffisamment éloignée de l'infrastructure 2, ce qui permet un temps de réaction suffisant.

Dans une application de l'invention utilisant un seul groupe multistatique 3 à configuration circulaire, il est possible d'effectuer une surveillance circulaire déportée pour les récepteurs 32, l'émetteur 31 étant agencé au niveau d'une plateforme pétrolière ou gazière, quelle que soit la profondeur de la plateforme (petit ou grand fond par exemple).

Dans une autre application de l'invention, le système de détection 100 peut être utilisé comme système de surveillance par défaut discret, le système 100 ne déclenchant la fonction d'émission active qu'en cas d'une alerte passive de la barrière multistatique basse fréquence de l'invention déportée.

Enfin l'invention s'applique à tout type de zone sensible définie par rapport à une infrastructure correspondant à une structure ou à un ensemble de structures agencé(es) sur terre ou sur une plateforme ou sur un bateau/partiellement ou totalement immergée quelque soit ses dimensions et sa configuration.

## Revendications

1. Système de détection acoustique (100) pour détecter des cibles au moins partiellement immergées dans une zone sensible définie par rapport à une infrastructure, le système de détection comprenant au moins un groupe de détection multistatique, chaque groupe (3) de détection multistatique définissant une zone de détection, et comprenant :

   • Un émetteur (31) immergé émettant en basses fréquences ;
   • Une pluralité de récepteurs (32) immergés comprenant au moins deux récepteurs, **caractérisé en ce que** chaque récepteur d'un groupe donné forme avec l'émetteur dudit groupe un couple bistatique, chaque couple bistatique générant une zone de détection élémentaire (320) entourant une zone d'ombre (321), une zone d'ombre associée à un couple bistatique correspondant à une zone de non détection, la zone de détection dudit groupe étant constituée par l'ensemble des zones de détection élémentaires desdits récepteurs du groupe, la zone d'ombre (321) de chaque récepteur dans un groupe de détection donné est recouverte au moins partiellement par les zones de détection élémentaires des récepteurs voisins du système de détection, et **en ce que** les récepteurs d'un groupe donné décrivent au moins une forme linéaire par morceaux, les récepteurs d'un groupe donné comprenant au moins une paire de référence, ladite paire de référence comprenant des récepteurs adjacents et équidistants de l'émetteur (31), le segment rectiligne reliant les récepteurs de ladite paire de référence étant situé à une distance D de l'émetteur, dite distance émetteur-récepteur de référence, la distance d'un récepteur donné du groupe par rapport à l'axe de symétrie de la paire de référence, parmi les récepteurs du groupe autres que les récepteurs de la paire de référence, dépendant de la distance émetteur-récepteur de référence D et de la distance ($2x_1$) entre les récepteurs de la paire de référence.

2. Système de détection acoustique selon la revendication 1, **caractérisé en ce que** la distance ($2x_1$) entre les récepteurs de la paire de référence est une fonction de la distance émetteur-récepteur de référence ($D$), et de la portée minimale $R_{mono}$ d'un sonar monostatique équivalent sur l'ensemble des cibles possibles.

3. Système selon l'une des revendications 1 et 2, **caractérisé en ce que** les récepteurs de chaque groupe sont agencés selon au moins une couche, et **en ce que** pour au moins un groupe du système, les récepteurs d'au moins une couche dudit groupe décrivent une forme linéaire par morceaux, les récepteurs de la paire de référence étant symétriques par rapport à un axe de symétrie passant par l'émetteur.

4. Système selon la revendication 3, **caractérisé en ce que** la distance $x_i$ entre un récepteur donné RX$_i$, autre que les récepteurs de la paire de référence, et l'axe de symétrie de la forme dépend de la distance $x_{i-1}$ entre le récepteur adjacent RX$_{i-1}$ et l'axe de symétrie (33), ledit récepteur adjacent étant situé entre ledit récepteur donné et l'axe de symétrie, et **en ce que** la distance du ième récepteur par rapport au récepteur de référence, situé du même côté que le $i$ - è$me$ récepteur par rapport à l'axe, dépend de l'indice $i$ du récepteur et de la distance $x_1$ du récepteur de ladite paire de référence par rapport à l'axe de symétrie.

5. Système selon l'une des revendications 3 et 4, **caractérisé en ce que** ladite distance $x_1$ entre un récepteur de ladite paire de référence et l'axe de symétrie du groupe est égal au moins à une valeur seuil minimale $x_{1min}$:

$$x_{1min} = \frac{D}{\sqrt{2}} \cdot \sqrt{\sqrt{1 + \left(\frac{R_{mono}}{D}\right)^4} - 1}$$

6. Système selon la revendication 5, **caractérisé en ce que**, pour une couche linéaire d'un groupe donné telle que la distance $x_1$ est égale à la valeur seuil minimale, la surface

$$\mathcal{A}ire(\mathcal{T}_i)$$

d'un triangle

$$\mathcal{T}_i$$

formé par un point coïncidant avec l'émetteur du groupe (31) et deux points coïncidant avec deux récepteurs adjacents (32) de ladite couche, divisée par le cosinus d'un angle $\theta_i$ désignant l'angle d'insonification du récepteur $RX_i$ par rapport à l'axe de symétrie est égale à la moitié de la surface

$$\mathcal{A}ire(S)$$

d'un carré S ayant un côté égal à la portée minimale du sonar monostatique équivalent $R_{mono}$ :

$$\mathcal{A}ire(\mathcal{T}_i) / \cos(\theta_i) = \mathcal{A}ire(S)/2 = R_{mono}^2/2$$

7. Système selon l'une des revendications 3 et 4, **caractérisé en ce que** ladite distance $x_1$ d'un récepteur de ladite paire de référence par rapport à l'axe de symétrie est au plus égal à une valeur seuil maximale $x_{1max}$:

$$x_{1max} = R_{mono}^2/D$$

8. Système selon la revendication 7, **caractérisé en ce que**, pour une couche linéaire d'un groupe donnée, la surface

$$\mathcal{A}ire(\mathcal{T}_i)$$

d'un triangle de référence

$$\mathcal{T}_i$$

formé par un point coïncidant avec l'émetteur du groupe (31) et deux points coïncidant avec deux récepteurs (32) adjacents $RX_{i-1}$ et $RX_i$ de ladite couche, divisée par le cosinus de l'angle $\theta_{Mi}$ entre l'axe de symétrie, d'une part, et l'axe passant par l'émetteur TX et par un point $M_i$ situé au milieu du segment délimité par lesdits récepteurs adjacents, est égale à la surface d'un carré $S$ ayant un côté égal à la portée minimale du sonar monostatique équivalent $R_{mono}$ :

$$\mathcal{A}ire(\mathcal{T}_i)/cos(\theta_{Mi}) = \mathcal{A}ire(S) = R^2_{mono}$$

9. Système selon les revendications 5 et 7, **caractérisé en ce que** la valeur de ladite distance $x_1$ d'un récepteur de ladite paire de référence par rapport à l'axe de symétrie est comprise entre ladite valeur seuil minimale $x_{1_{min}}$ et ladite valeur seuil maximale $x_{1_{max}}$.

10. Système selon la revendication 9, **caractérisé en ce que** la position de chaque récepteur RX$_i$ est telle que l'aire de la surface

$$\mathcal{A}ire(\mathcal{T}_i)$$

d'un triangle

$$\mathcal{T}_i$$

est inférieure ou égale à $R^2_{mono} \cdot cos(\theta_{Mi})$ et supérieure ou égale à $R^2_{mono} cos(\theta_i)/2$ , le triangle

$$\mathcal{T}_i$$

étant formé par un point coïncidant avec l'émetteur du groupe (31) et deux points coïncidant avec deux récepteurs adjacents (32) de ladite couche, l'angle $\theta_i$ désignant l'angle d'insonification du récepteur RX$_i$ par rapport à l'axe de symétrie et l'angle $\theta_{Mi}$ désignant l'angle entre, d'une part, l'axe de symétrie (33) et, d'autre part, l'axe passant par l'émetteur (31) et par le point $M_i$ correspondant au milieu du segment délimité le récepteur RXi et le récepteur adjacent précédent RX$_{i-1}$.

11. Système selon l'une des revendications 1 et 2, **caractérisé en ce que** les récepteurs de chaque groupe sont agencés selon au moins une couche, et **en ce que** pour au moins un groupe du système, les récepteurs d'au moins une couche dudit groupe décrivent une forme courbe, et **en ce que** la position de chaque récepteur RX$_i$ est telle que l'aire de la surface

$$\mathcal{A}ire(\mathcal{T}_i)$$

d'un triangle

$$\mathcal{T}_i$$

est inférieure ou égale à $R^2_{mono} \cdot cos(\theta_{Mi})$ et supérieure ou égale à $R^2_{mono} cos(\theta_i)/2$ , le triangle

$$\mathcal{T}_i$$

étant formé par un point coïncidant avec l'émetteur du groupe (31) et deux points coïncidant avec deux récepteurs adjacents RX$_i$ et RX$_{i-1}$ (32) de ladite couche, l'angle $\theta_i$ désignant l'angle d'insonification du récepteur RX$_i$ par rapport à l'axe passant par l'émetteur et perpendiculaire à la droite passant par les récepteurs RX$_i$ et RX$_{i-1}$, l'angle $\theta_{Mi}$ désignant l'angle entre, d'une part, ledit axe et, d'autre part, l'axe passant par l'émetteur (31), et par le point $M_i$ correspondant au milieu du segment délimité le récepteur RXi et le récepteur adjacent précédent RX$_{i-1}$.

12. Système de détection selon l'une des revendications précédentes, **caractérisé en ce qu'**il comprend au moins un groupe ayant au moins deux couches de récepteurs, les couches de récepteurs étant agencées à des distances émetteur-récepteur de référence différentes.

13. Système de détection selon l'une quelconque des revendications précédentes, **caractérisé en ce que** chaque couche est configurée pour détecter une cible d'index minimal donné, et **en ce que** le produit de la distance $2.x_1$ entre les deux récepteurs de référence de la paire de référence d'une couche par la distance $D_{TRX}$ entre l'émetteur et un récepteur de référence de ladite paire est déterminé en fonction du carré $R^2_{mono}$ du rayon de détection du sonar monostatique équivalent pour une cible d'index minimal donné à détecter au moins par ladite couche.

14. Système de détection selon l'une des revendications 12 et 13, **caractérisé en ce qu'**il comprend des couches de récepteurs linéaires et/ou des couches de récepteurs circulaires, une couche linéaire comprenant des récepteurs sensiblement alignés selon une ligne, une couche circulaire comprenant des récepteurs décrivant une forme au moins partiellement circulaire, certains récepteurs pouvant être partagés entre deux groupes quelconques.

15. Système de détection selon les revendications 13 et 14, **caractérisé en ce que** ledit groupe comprend au moins une première couche linéaire agencée entre l'émetteur et l'infrastructure et au moins une deuxième couche linéaire, l'émetteur étant agencé entre la deuxième couche linéaire de récepteurs et la première couche linéaire de récepteurs.

16. Système de détection selon la revendication 1, **caractérisé en ce que** chaque couche est configurée pour détecter une cible d'index minimal donné, et **en ce que** certains au moins des récepteurs de l'ensemble des groupes sont agencés selon au moins deux lignes de récepteurs principales, les récepteurs adjacents de la première ligne étant distants entre eux d'une distance $d_{inter_1}$ et la distance émetteur-récepteur de référence de la première ligne étant désignée par $D_{TRX1}$, les récepteurs adjacents d'au moins autre ligne de récepteurs étant distants entre eux d'une distance $d_{inter_2}$ et la distance émetteur-récepteur de référence de ladite autre ligne étant désignée par $D_{TRX2}$, la première ligne étant agencée entre l'infrastructure et les autres lignes, et **en ce que**, pour des pertes de propagation égales à K fois le logarithme de la distance des trajets de propagation $TL$, le rapport entre le produit $d_{inter1}. D_{TRX1}$ correspondant à la première ligne et le produit $d_{inter2}. D_{TRX2}$ de ladite autre ligne est déterminé en fonction de l'écart maximal d'index de détection $\Delta(TS)$ des cibles possibles :

$$2Klog\ ((d_{inter_2}.D_{TRX2})/(d_{inter_1}.D_{TRX1}))\ = \Delta(TS)$$

17. Système de détection selon l'une des revendications précédentes, **caractérisé en ce que** chaque récepteur est configuré pour recevoir des signaux dans une bande de fréquences inférieure à 30 KHz.

18. Système de détection selon l'une des revendications précédentes, **caractérisé en ce que** les zones de détection élémentaires de certains au moins des récepteurs d'extrémité d'un groupe de détection donné se recoupent au moins partiellement avec les récepteurs d'extrémité d'un groupe de détection adjacent.

19. Système de détection selon la revendication 18, **caractérisé en ce que** la distance entre le récepteur d'extrémité d'un groupe donné et le point d'intersection de deux groupes situé au milieu du segment reliant les deux récepteurs d'extrémité adjacents entre les deux groupes, est une fonction du carré du rayon de détection du sonar monostatique équivalent $R^2_{mono}$, et de la distance $D_{TRXL}$ entre ledit point d'intersection et l'émetteur du groupe donné ($D_{TRXL}$).

20. Système de détection selon l'une des revendications précédentes, **caractérisé en ce qu'**il comprend au moins un capteur choisi parmi le groupe consistant en un capteur magnétique, un capteur acoustique, un capteur non acoustique, et **en ce qu'**il comprend une unité de classification configurée pour utiliser des informations dérivées des signaux du ou des capteurs pour classifier la cible.

21. Système de détection selon la revendication 20, **caractérisé en ce que** les signaux de certains au moins des récepteurs sont utilisés ladite unité de classification pour classifier les cibles détectées, et **en ce que** chaque récepteur est configuré pour fonctionner au moins acoustiquement en mode passif et actif simultanément, chaque récepteur en mode passif traitant des fréquences inférieures aux fréquences traitées en mode actif, une classification acoustique passive étant faite par asservissement du pistage actif, la portée de classification acoustique ou non acoustique étant au moins égale à la moitié de la distance maximale entre deux récepteurs voisins, afin de classifier au moins lors du passage de la cible entre eux.

22. Système de détection selon l'une des revendications précédentes, **caractérisé en ce qu'**il comprend une unité de traitement mettant en oeuvre un traitement cohérent et adaptatif des récepteurs (32) pour recevoir des échos de cibles sur un récepteur y compris pendant la réception directe de l'émission d'impulsions (« Rx pendant Tx »).

23. Système de détection selon l'une des revendications 2 à 22, **caractérisé en ce qu'**il comprend un groupe dont l'émetteur (31) est non omnidirectionnel, le rayon de détection du sonar monostatique équivalent utilisé pour déterminer le positionnement de chaque récepteur RXi du groupe étant une fonction de l'angle θi qui désigne l'angle d'insonification de l'émetteur vers ledit récepteur RX$_i$ par rapport à la direction d'émission maximale de l'émetteur.

24. Système de détection selon l'une des revendications précédentes, **caractérisé en ce que** certains au moins des groupes adjacents sont configurés pour émettre des codes orthogonaux dans la même bande de fréquences et ont des récepteurs communs partagés, lesdits récepteurs partagés utilisant les échos multistatiques des cibles provenant à la fois des émetteurs desdits groupes adjacents, les récepteurs étant configurés pour distinguer les échos reçus entre deux émetteurs.

**Patentansprüche**

1. Akustisches Detektionssystem (100) zum Detektieren von mindestens teilweise untergetauchten Zielen in einer definierten sensiblen Zone in Bezug auf eine Infrastruktur, wobei das Detektionssystem mindestens eine multistatische Detektionsgruppe umfasst, wobei jede multistatische Detektionsgruppe (3) eine Detektionszone definiert, und das Folgendes umfasst:

   • einen Unterwassersender (31), der mit niedrigen Frequenzen sendet;
   • eine Vielzahl von Unterwasserempfängern (32), die mindestens zwei Empfänger umfassen, **dadurch gekennzeichnet, dass** jeder Empfänger einer gegebenen Gruppe mit dem Sender der Gruppe ein bistatisches Paar bildet, wobei jedes bistatische Paar eine elementare Detektionszone (320) erzeugt, die eine Schattenzone (321) umgibt, wobei eine mit einem bistatischen Paar assoziierte Schattenzone einer Nicht-Detektionszone entspricht, wobei die Detektionszone der Gruppe durch die Gesamtheit der elementaren Detektionszonen der Empfänger der Gruppe gebildet wird,
   die Schattenzone (321) jedes Empfängers in einer gegebenen Detektionsgruppe mindestens teilweise von den elementaren Detektionszonen der benachbarten Empfänger des Detektionssystems überlappt wird,
   und dadurch, dass die Empfänger einer gegebenen Gruppe mindestens eine stückweise lineare Form beschreiben, wobei die Empfänger einer gegebenen Gruppe mindestens ein Referenzpaar umfassen, wobei das Referenzpaar benachbarte und gleich weit vom Sender (31) entfernte Empfänger umfasst, wobei sich das geradlinige Segment, das die Empfänger des Referenzpaars verbindet, in einem Abstand D, Sender-Empfänger-Referenzabstand genannt, vom Sender befindet, wobei der Abstand eines gegebenen Empfängers der Gruppe in Bezug auf die Symmetrieachse des Referenzpaars unter den Empfängern in der Gruppe, die nicht die Empfänger des Referenzpaars sind, vom Sender-Empfänger-Referenzabstand D und dem Abstand ($2x_1$) zwischen den Empfängern des Referenzpaars abhängt.

2. Akustisches Detektionssystem nach Anspruch 1, **dadurch gekennzeichnet, dass** der Abstand ($2x_1$) zwischen den Empfängern des Referenzpaares eine Funktion des Sender-Empfänger-Referenzabstands (D) und der Mindestreichweite $R_{mono}$ eines äquivalenten monostatischen Sonars über alle möglichen Ziele ist.

3. System nach einem der Ansprüche 1 und 2, **dadurch gekennzeichnet, dass** die Empfänger jeder Gruppe in mindestens einer Schicht angeordnet sind, und dadurch, dass für mindestens eine Gruppe des Systems die Empfänger mindestens einer Schicht der Gruppe eine stückweise lineare Form beschreiben, wobei die Empfänger des Referenzpaares symmetrisch in Bezug auf eine durch den Sender verlaufende Symmetrieachse sind.

4. System nach Anspruch 3, **dadurch gekennzeichnet, dass** der Abstand $x_i$ zwischen einem gegebenen Empfänger RX$_i$, der kein Empfänger des Referenzpaares ist, und der Symmetrieachse der Form vom Abstand $x_{i-1}$ zwischen dem benachbarten Empfänger RX$_{i-1}$ und der Symmetrieachse (33) abhängt, wobei sich der benachbarte Empfänger zwischen dem gegebenen Empfänger und der Symmetrieachse befindet, und dadurch, dass der Abstand des *i-ten* Empfängers in Bezug auf den Referenzempfänger, der sich auf derselben Seite wie der *i-te* Empfänger in Bezug auf die Achse befindet, vom Index i des Empfängers und dem Abstand $x_1$ des Empfängers des Referenzpaares in Bezug auf die Symmetrieachse abhängt.

5. System nach einem der Ansprüche 3 und 4, **dadurch gekennzeichnet, dass** der Abstand $x_1$ zwischen einem Empfänger des Referenzpaars und der Symmetrieachse der Gruppe mindestens einem Mindestschwellenwert $x_{1min}$

entspricht:

$$x_{1min} = \frac{D}{\sqrt{2}} \cdot \sqrt{\sqrt{1 + \left(\frac{R_{mono}}{D}\right)^4} - 1}$$

.

6. System nach Anspruch 5, **dadurch gekennzeichnet, dass** für eine lineare Schicht einer gegebenen Gruppe, bei der der Abstand $x_1$ gleich dem Mindestschwellenwert ist, die Fläche *Fläche*($T_i$) eines Dreiecks $T_i$, gebildet durch einen mit dem Sender der Gruppe (31) zusammenfallenden Punkt und zwei mit zwei benachbarten Empfängern (32) der Schicht zusammenfallenden Punkten, dividiert durch den Kosinus eines Winkels $\theta_i$, der den Beschallungs-winkel des Empfängers RX$_i$ in Bezug auf die Symmetrieachse bezeichnet, gleich der Hälfte der Fläche *Fläche*($S$) eines Quadrats S mit einer Seite ist, die gleich der Mindestreichweite des äquivalenten monostatischen Sonars $R_{mono}$ ist:

$$\text{Fläche}(T_i)/\cos(\theta_i) = \text{Fläche}(S)/2 = R^2_{mono}/2$$

7. System nach einem der Ansprüche 3 und 4, **dadurch gekennzeichnet, dass** der Abstand $x_1$ eines Empfängers des Referenzpaares in Bezug auf die Symmetrieachse höchstens gleich einem maximalen Schwellenwert $x_{1max}$ ist:

$$x_{1max} = R^2_{mono}/D.$$

8. System nach Anspruch 7, **dadurch gekennzeichnet, dass** für eine lineare Schicht einer gegebenen Gruppe die Fläche *Fläche*($T_i$) eines Referenzdreiecks $T_i$, gebildet durch einen mit dem Sender der Gruppe (31) zusammenfallenden Punkt und zwei mit zwei benachbarten Empfängern (32) RX$_{i-1}$ und RX$_i$ der Schicht zusammenfallenden Punkten, dividiert durch den Kosinus des Winkels $\theta_{Mi}$ zwischen der Symmetrieachse einerseits und der Achse, die durch den Sender TX und einen Punkt M$_i$ in der Mitte des von den benachbarten Empfängern begrenzten Segments verläuft, gleich der Fläche *Fläche*($S$) eines Quadrats S mit einer Seite ist, die gleich der Mindestreichweite des äquivalenten monostatischen Sonars $R_{mono}$ ist:

$$\text{Fläche}(T_i)/\cos(\theta_{Mi}) = \text{Fläche}(S) = R^2_{mono}$$

9. System nach den Ansprüchen 5 und 7, **dadurch gekennzeichnet, dass** der Wert des Abstands $x_1$ eines Empfängers des Referenzpaars in Bezug auf die Symmetrieachse zwischen dem Mindestschwellenwert $x_{1min}$ und dem maxi-malen Schwellenwert $x_{1max}$ liegt.

10. System nach Anspruch 9, **dadurch gekennzeichnet, dass** die Position jedes Empfängers RX$_i$ derart ist, dass der Inhalt der Fläche *Fläche*($T_i$) eines Dreiecks $T_i$ gleich oder kleiner $R^2_{mono}\cos(\theta_{Mi})$ und gleich oder größer $R^2_{mono}\cos(\theta_i)/2$ ist, wobei das Dreieck $T_i$ durch einen mit dem Sender der Gruppe (31) zusammenfallenden Punkt und zwei mit zwei benachbarten Empfängern (32) der Schicht zusammenfallenden Punkten gebildet wird, wobei der Winkel $\theta_i$ den Beschallungswinkel des Empfängers RX$_i$ in Bezug auf die Symmetrieachse bezeichnet und der Winkel $\theta_{Mi}$ den Winkel zwischen einerseits der Symmetrieachse (33) und andererseits der Achse bezeichnet, die durch den Sender (31) und den Punkt $M_i$ entsprechend der Mitte des durch den Empfänger RXi und den vorhergehenden benachbarten Empfänger RX$_{i-1}$ begrenzten Segments verläuft.

11. System nach einem der Ansprüche 1 und 2, **dadurch gekennzeichnet, dass** die Empfänger jeder Gruppe in mindestens einer Schicht angeordnet sind, und dadurch, dass für mindestens eine Gruppe des Systems die Empfänger von mindestens einer Schicht der Gruppe eine gekrümmte Form beschreiben, und dadurch, dass die Position jedes Empfängers RX$_i$ derart ist, dass der Inhalt der Fläche *Fläche(T$_i$)* eines Dreiecks $T_i$ gleich oder kleiner $R^2_{mono}\cos(\theta_{Mi})$ und gleich oder größer $R^2_{mono}\cos(\theta_i)/2$ ist, wobei das Dreieck $T_i$ durch einen mit dem Sender der Gruppe (31) zusammenfallenden Punkt und zwei mit zwei benachbarten Empfängern RX$_i$ und RX$_{i-1}$ (32) der Schicht zusammenfallenden Punkten gebildet wird, wobei der Winkel $\theta_i$ den Beschallungswinkel des Empfängers RX$_i$ in Bezug auf die Achse bezeichnet, die durch den Sender und lotrecht zu der durch die Empfänger RX$_i$ und RX$_{i-1}$ verlaufenden Gerade verläuft, wobei der Winkel $\theta_{Mi}$ den Winkel zwischen einerseits der genannten Achse und andererseits der Achse bezeichnet, die durch den Sender (31) und durch den Punkt $M_i$ entsprechend der Mitte des durch den Empfänger RXi und den vorhergehenden benachbarten Empfänger RX$_{i-1}$ begrenzten Segments verläuft.

12. Detektionssystem nach einem der vorhergehenden Ansprüche, **dadurch gekennzeichnet, dass** es mindestens eine Gruppe mit mindestens zwei Empfängerschichten umfasst, wobei die Empfängerschichten in unterschiedlichen Sender-Empfänger-Referenzabständen angeordnet sind.

13. Detektionssystem nach einem der vorhergehenden Ansprüche, **dadurch gekennzeichnet, dass** jede Schicht zum Detektieren eines Ziels mit einem gegebenen Mindestindex konfiguriert ist, und dadurch, dass das Produkt aus dem Abstand $2.x_1$ zwischen den beiden Referenzempfängern des Referenzpaares einer Schicht und dem Abstand $D_{TRX}$ zwischen dem Sender und einem Referenzempfänger des Paares in Abhängigkeit vom Quadrat $R^2_{mono}$ des Detektionsradius des äquivalenten monostatischen Sonars für ein mindestens durch die Schicht zu detektierendes Ziel mit einem gegebenen Mindestindex bestimmt wird.

14. Detektionssystem nach einem der Ansprüche 12 und 13, **dadurch gekennzeichnet, dass** es Schichten von linearen Empfängern und/oder Schichten von kreisförmigen Empfängern umfasst, wobei eine lineare Schicht im Wesentlichen entlang einer Linie ausgerichtete Empfänger umfasst, eine kreisförmige Schicht Empfänger umfasst, die eine mindestens teilweise kreisförmige Form beschreiben, wobei einige Empfänger von zwei beliebigen Gruppen gemeinsam verwendet werden können.

15. Detektionssystem nach den Ansprüchen 13 und 14, **dadurch gekennzeichnet, dass** die Gruppe mindestens eine zwischen dem Sender und der Infrastruktur angeordnete erste lineare Schicht und mindestens eine zweite lineare Schicht umfasst, wobei der Sender zwischen der zweiten linearen Schicht von Empfängern und der ersten linearen Schicht von Empfängern angeordnet ist.

16. Detektionssystem nach Anspruch 1, **dadurch gekennzeichnet, dass** jede Schicht zum Detektieren eines Ziels mit einem gegebenen Mindestindex konfiguriert ist, und dadurch, dass mindestens einige der Empfänger aller Gruppen in mindestens zwei Hauptempfängerlinien angeordnet sind, wobei die benachbarten Empfänger der ersten Linie in einem Abstand $d_{inter1}$ voneinander entfernt sind und der Sender-Empfänger-Referenzabstand der ersten Linie mit $D_{TRX1}$ bezeichnet wird, die benachbarten Empfänger von mindestens einer weiteren Empfängerlinie um eine Distanz $d_{inter2}$ voneinander entfernt sind und der Sender-Empfänger-Referenzabstand der weiteren Linie mit $D_{TRX2}$ bezeichnet wird, wobei die erste Linie zwischen der Infrastruktur und den weiteren Linien angeordnet ist, und dadurch, dass für Ausbreitungsverluste gleich K mal dem Logarithmus des Abstands der Ausbreitungswege $TL$, das Verhältnis zwischen dem Produkt $d_{inter1}.D_{TRX1}$ entsprechend der ersten Linie und dem Produkt $d_{inter2}.D_{TRX2}$ der anderen Linie in Abhängigkeit von der maximalen Detektionsindexabweichung $\Delta(TS)$ von möglichen Zielen bestimmt wird:

$$2Klog\left((d_{inter_2}.D_{TRX2})/(d_{inter_1}.D_{TRX1})\right) = \Delta(TS)$$

17. Detektionssystem nach einem der vorhergehenden Ansprüche, **dadurch gekennzeichnet, dass** jeder Empfänger zum Empfangen von Signalen in einem Frequenzband unterhalb von 30 KHz konfiguriert ist.

18. Detektionssystem nach einem der vorhergehenden Ansprüche, **dadurch gekennzeichnet, dass** die elementaren Detektionszonen von mindestens einigen der Endempfänger einer gegebenen Detektionsgruppe sich mindestens teilweise mit den Endempfängern einer benachbarten Detektionsgruppe überschneiden.

19. Detektionssystem nach Anspruch 18, **dadurch gekennzeichnet, dass** der Abstand zwischen dem Endempfänger einer gegebenen Gruppe und dem Schnittpunkt zweier Gruppen, der sich in der Mitte des Segments befindet, das die beiden benachbarten Endempfänger zwischen den beiden Gruppen verbindet, eine Funktion des Quadrats des Detektionsradius des äquivalenten monostatischen Sonars $R^2_{mono}$ und des Abstands $D_{TRXL}$ zwischen dem Schnittpunkt und dem Sender der gegebenen Gruppe ($D_{TRXL}$) ist.

**20.** Detektionssystem nach einem der vorhergehenden Ansprüche, **dadurch gekennzeichnet, dass** es mindestens einen Sensor umfasst, ausgewählt aus der Gruppe bestehend aus einem magnetischen Sensor, einem akustischen Sensor und einem nichtakustischen Sensor, und dadurch, dass es eine Klassifizierungseinheit umfasst, die zum Nutzen von aus den Signalen der ein oder mehreren Sensoren abgeleiteten Informationen zum Klassifizieren des Ziels konfiguriert ist.

**21.** Detektionssystem nach Anspruch 20, **dadurch gekennzeichnet, dass** die Signale von mindestens einigen der Empfänger von der Klassifizierungseinheit zum Klassifizieren der detektierten Ziele verwendet werden, und dadurch, dass jeder Empfänger zum gleichzeitigen Arbeiten mindestens akustisch in einem passiven und einem aktiven Modus konfiguriert ist, wobei jeder Empfänger im passiven Modus Frequenzen verarbeitet, die niedriger sind als die im aktiven Modus verarbeiteten Frequenzen, wobei eine passive akustische Klassifizierung durch Servosteuerung der aktiven Verfolgung vorgenommen wird, wobei die Reichweite der akustischen oder nichtakustischen Klassifizierung mindestens die Hälfte des maximalen Abstands zwischen zwei benachbarten Empfängern beträgt, um mindestens beim Durchgang des Ziels zwischen ihnen zu klassifizieren.

**22.** Detektionssystem nach einem der vorhergehenden Ansprüche, **dadurch gekennzeichnet, dass** es eine Verarbeitungseinheit umfasst, die eine kohärente und adaptive Verarbeitung der Empfänger (32) zum Empfangen von Echos von Zielen auf einem Empfänger einschließlich während des direkten Empfangs von Impulssendungen ("Rx während Tx") implementiert.

**23.** Detektionssystem nach einem der Ansprüche 2 bis 22, **dadurch gekennzeichnet, dass** es eine Gruppe umfasst, deren Sender (31) nicht omnidirektional ist, wobei der Detektionsradius des äquivalenten monostatischen Sonars, der zum Bestimmen der Positionierung jedes Empfängers RXi der Gruppe verwendet wird, eine Funktion des Winkels θi ist, der den Beschallungswinkel des Senders zu dem Empfänger $RX_i$ in Bezug auf die maximale Senderichtung des Senders bezeichnet.

**24.** Detektionssystem nach einem der vorhergehenden Ansprüche, **dadurch gekennzeichnet, dass** mindestens einige der benachbarten Gruppen zum Senden von orthogonalen Codes im selben Frequenzband konfiguriert sind und gemeinsam genutzte Empfänger haben, wobei die gemeinsam genutzten Empfänger die multistatischen Echos von Zielen verwenden, die gleichzeitig von den Sendern der benachbarten Gruppen kommen, wobei die Empfänger zum Unterscheiden der zwischen zwei Sendern empfangenen Echos konfiguriert sind.

**Claims**

**1.** An acoustic detection system (100) for detecting targets that are at least partially submerged in a sensitive area defined relative to an infrastructure, the detection system comprising at least one multistatic detection group, each multistatic detection group (3) defining a detection area, and comprising:

    • a submerged transmitter (31) transmitting at low frequencies;
    • a plurality of submerged receivers (32) comprising at least two receivers, **characterised in that** each receiver of a given group forms, with the transmitter of said group, a bistatic pair, each bistatic pair generating an elementary detection area (320) surrounding a blind area (321), a blind area associated with a bistatic pair corresponding to a non-detection area, the detection area of said group being formed by all the elementary detection areas of said receivers of the group,
the blind area (321) of each receiver in a given detection group is at least partially covered by the elementary detection areas of the neighbouring receivers of the detection system,
and **in that** the receivers of a given group describe at least one piecewise linear form, the receivers of a given group comprising at least one reference pair, said reference pair comprising receivers that are adjacent to and equidistant from the transmitter (31), the rectilinear segment linking the receivers of said reference pair being located at a distance $D$ from the transmitter, called reference transmitter-receiver distance, the distance of a given receiver of the group relative to the axis of symmetry of the reference pair, from among the receivers of the group other than the receivers of the reference pair, depending on the reference transmitter-receiver distance D and on the distance ($2x_1$) between the receivers of the reference pair.

**2.** The acoustic detection system according to claim 1, **characterised in that** the distance ($2x_1$) between the receivers of the reference pair is a function of the reference transmitter-receiver distance ($D$) and of the minimum range $R_{mono}$ of an equivalent monostatic sonar on all the possible targets.

3. The system according to any of claims 1 and 2, **characterised in that** the receivers of each group are arranged in at least one layer, and **in that**, for at least one group of the system, the receivers of at least one layer of said group describe one linear piecewise form, the receivers of the reference pair being symmetrical relative to an axis of symmetry passing through the transmitter.

4. The system according to claim 3, **characterised in that** the distance $x_i$ between a given receiver $RX_i$, other than the receivers of the reference pair, and the axis of symmetry of the form depends on the distance $x_{i-1}$ between the adjacent receiver $RX_{i-1}$ and the axis of symmetry (33), said adjacent receiver being located between said given receiver and the axis of symmetry, and **in that** the distance of the *i-th* receiver relative to the reference receiver, located on the same side as the *i-th* receiver relative to the axis, depends on the index i of the receiver and on the distance $x_1$ of the receiver of said reference pair relative to the axis of symmetry.

5. The system according to any of claims 3 and 4, **characterised in that** said distance $x_1$ between a receiver of said reference pair and the axis of symmetry of the group is at least equal to a minimum threshold value $x_{1min}$:

$$x_{1min} = \frac{D}{\sqrt{2}} \cdot \sqrt{\sqrt{1 + \left(\frac{R_{mono}}{D}\right)^4} - 1}$$

.

6. The system according to claim 5, **characterised in that**, for a linear layer of a given group such that the distance $x_1$ is equal to the minimum threshold value, the surface area *Aire* ($T_i$) of a triangle $T_i$ formed by a point coinciding with the transmitter (31) of the group and two points coinciding with two adjacent receivers (32) of said layer, divided by the cosine of an angle $\theta_i$ denoting the angle of insonification of the receiver $RX_i$ relative to the axis of symmetry, is equal to half the surface area *Aire* ($S$) of a square S having a side equal to the minimum range of the equivalent monostatic sonar $R_{mono}$:

$$Area(T_i)/\cos(\theta_i) = Area(S)/2 = R_{mono}^2/2$$

7. The system according to any of claims 3 and 4, **characterised in that** said distance $x_1$ of a receiver of said reference pair relative to the axis of symmetry is at most equal to a maximum threshold value $x_{1max}$:

$$x_{1max} = R_{mono}^2/D$$

8. The system according to claim 7, **characterised in that**, for a linear layer of a given group, the surface area *Area*($T_i$) of a reference triangle $T_i$ formed by a point coinciding with the transmitter of the group (31) and two points coinciding with two adjacent receivers (32) $RX_{i-1}$ and $RX_i$ of said layer, divided by the cosine of the angle $\theta_{Mi}$ between the axis of symmetry, on the one hand, and the axis passing through the transmitter TX and through a point $M_i$ located in the middle of the segment defined by said adjacent receivers, is equal to the surface area *Area*($S$) of a square S having a side equal to the minimum range of the equivalent monostatic sonar $R_{mono}$:

$$Area(T_i)/\cos(\theta_{Mi}) = Area(S) = R_{mono}^2$$

9. The system according to claims 5 and 7, **characterised in that** the value of said distance $x_1$ of a receiver of said reference pair relative to the axis of symmetry ranges between said minimum threshold value $x_{1min}$ and said maximum threshold value $x_{1max}$.

10. The system according to claim 9, **characterised in that** the position of each receiver $RX_i$ is such that the surface area *Area*($T_i$) of a triangle $T_i$ is less than or equal to $R_{mono}^2 \cos(\theta_{Mi})$ and greater than or equal to $R_{mono}^2 \cos(\theta_i)/2$, the triangle $T_i$ being formed by a point coinciding with the transmitter (31) of the group and two points coinciding with two adjacent receivers (32) of said layer, the angle $\theta_i$ denoting the angle of insonification

of the receiver RX$_i$ relative to the axis of symmetry and the angle $\theta_{Mi}$ denoting the angle between the axis of symmetry, on the one hand, and the axis passing through the transmitter (31) and through the point $M_i$ corresponding to the middle of the segment defined by the receiver RXi and the preceding adjacent receiver RX$_{i-1}$, on the other hand.

11. The system according to any of claims 1 and 2, **characterised in that** the receivers of each group are arranged in at least one layer, and **in that**, for at least one group of the system, the receivers of at least one layer of said group describe a curved form, and **in that** the position of each receiver RX$_i$ is such that the surface area *Area*($T_i$) of a triangle $T_i$ is less than or equal to $R^2_{mono}\cos(\theta_{Mi})$ and greater than or equal to $R^2_{mono}\cos(\theta_i)/2$, the triangle $T_i$ being formed by a point coinciding with the transmitter (31) of the group and two points coinciding with two adjacent receivers (32) RX$_i$ and RX$_{i-1}$ of said layer, the angle $\theta_i$ denoting the angle of insonification of the receiver RX$_i$ relative to the axis passing through the transmitter and perpendicular to the straight line passing through the receivers RX$_i$ and RX$_{i-1}$, the angle $\theta_{Mi}$ denoting the angle between said axis, on the one hand, and the axis passing through the transmitter (31) and through the point $M_i$ corresponding to the middle of the segment defined by the receiver RXi and the preceding adjacent receiver RX$_{i-1}$, on the other hand.

12. The detection system according to any of the preceding claims, **characterised in that** it comprises at least one group having at least two layers of receivers, the layers of receivers being arranged at different reference transmitter-receiver distances.

13. The detection system according to any one of the preceding claims, **characterised in that** each layer is configured to detect a given minimum index target, and **in that** the product of the distance $2.x_1$ between the two reference receivers of the reference pair of a layer and the distance $D_{TRX}$ between the transmitter and a reference receiver of said pair is determined as a function of the square $R^2_{mono}$ of the detection radius of the equivalent monostatic sonar for a given minimum index target to be detected at least by said layer.

14. The detection system according to any of claims 12 and 13, **characterised in that** it comprises layers of linear receivers and/or layers of circular receivers, a linear layer comprising receivers that are substantially aligned in a row, a circular layer comprising receivers describing an at least partially circular form, some receivers being able to be shared between any two groups.

15. The detection system according to claims 13 and 14, **characterised in that** said group comprises at least one first linear layer arranged between the transmitter and the infrastructure and at least one second linear layer, the transmitter being arranged between the second linear layer of receivers and the first linear layer of receivers.

16. The detection system according to claim 1, **characterised in that** each layer is configured to detect a given minimum index target, and **in that** at least some of the receivers of all the groups are arranged in at least two main rows of receivers, the adjacent receivers of the first row being separated from one another by a distance d$_{inter1}$ and the reference transmitter-receiver distance of the first row being denoted $D_{TRX1}$, the adjacent receivers of at least one other row of receivers being separated from one another by a distance d$_{inter2}$ and the reference transmitter-receiver distance of said other row being denoted $D_{TRX2}$, the first row being arranged between the infrastructure and the other rows, and **in that**, for propagation losses equal to K times the logarithm of the distance of the propagation paths *TL,* the ratio between the product d$_{inter1}.D_{TRX1}$ corresponding to the first row and the product d$_{inter2}.D_{TRX2}$ of said other row is determined as a function of the maximum detection index deviation $\Delta(TS)$ of the possible targets:

$$2K\log\left((d_{inter_2}.D_{TRX2})/(d_{inter_1}.D_{TRX1})\right) = \Delta(TS)$$

17. The detection system according to any of the preceding claims, **characterised in that** each receiver is configured to receive signals in a frequency band lower than 30 kHz.

18. The detection system according to any of the preceding claims, **characterised in that** the elementary detection areas of at least some of the end receivers of a given detection group at least partially overlap with the end receivers of an adjacent detection group.

19. The detection system according to claim 18, **characterised in that** the distance between the end receiver of a given group and the point of intersection of two groups located in the middle of the segment linking the two adjacent end receivers between the two groups is a function of the square of the detection radius of the equivalent monostatic sonar $R^2_{mono}$, and of the distance $D_{TRXL}$ between said point of intersection and the transmitter of the given group ($D_{TRXL}$).

20. The detection system according to any of the preceding claims, **characterised in that** it comprises at least one sensor selected from among the group made up of a magnetic sensor, an acoustic sensor, a non-acoustic sensor, and **in that** it comprises a classification unit configured to use information derived from the signals of the one or more sensors in order to classify the target.

21. The detection system according to claim 20, **characterised in that** the signals of at least some of the receivers are used by said classification unit to classify the detected targets, and **in that** each receiver is configured to operate at least acoustically in passive and active mode simultaneously, each receiver in passive mode processing frequencies lower than the frequencies processed in active mode, a passive acoustic classification being performed by slaving it from the active tracking, the acoustic or non-acoustic classification range being at least equal to half the maximum distance between two neighbouring receivers, so as to carry out classification at least when the target passes between them.

22. The detection system according to any of the preceding claims, **characterised in that** it comprises a processing unit implementing coherent and adaptive processing of the receivers (32) in order to receive echoes of targets on a receiver, including during the direct reception of the transmission of pulses ("Rx during Tx").

23. The detection system according to any of claims 2 to 22, **characterised in that** it comprises a group for which the transmitter (31) is not omnidirectional, the detection radius of the equivalent monostatic sonar used to determine the positioning of each receiver RXi of the group being a function of the angle θi denoting the angle of insonification of the transmitter towards said receiver $RX_i$ relative to the direction of maximum transmission of the transmitter.

24. The detection system according to any of the preceding claims, **characterised in that** at least some of the adjacent groups are configured to transmit orthogonal codes in the same frequency band, and have shared common receivers, said shared receivers using the multistatic echoes of the targets simultaneously originating from the transmitters of said adjacent groups, the receivers being configured to distinguish the echoes received between two transmitters.

300-G

100

F

30

3-A

32

300-M

31

300-P

33

22

80

4

6

32

3-B

33

INFRASTRUCTURE
SENSIBLE

31

32

31

3-C

10-M

10-G

7

4

8

10-P

6

80

32

33

31

Zone côtière

3-D

2

21

MER

**FIGURE 1**

**FIGURE 2**

**FIGURE 3**

**FIGURE 4**

**FIGURE 5**

FIGURE 6

**FIGURE 7A**

**Figure 7B**

FIGURE 8A

**FIGURE 8B**

FIGURE 9A

FIGURE 9B

**FIGURE 9C**

FIGURE 10

FIGURE 11A

**FIGURE 11B**

**FIGURE 12**

**FIGURE 13**

**FIGURE 14**

Traiter les signaux reçus au niveau de chaque récepteur Ri (800)

Etape de pistage (802)

Appliquer des critères hétérogènes de vraisemblance de menace (803)

Générer une visualisation des résultats de pistage et/ou de classification (804)

**FIGURE 15**

**FIGURE 16**

**FIGURE 17**

21
3A
31
32
3B
3C
3D

$L_{contact}$
$D_{reaction}$
4
80

$L_{contact}$
$D_{reaction}$
4
80

INFRASTRUCTURE

Centre de surveillance

2

8

PERIMETRE DE PROTECTION TERRESTRE

9

**FIGURE 18**

**FIGURE 19 A**

**FIGURE 19B**

**FIGURE 19C**

**FIGURE 19D**

FIGURE 20

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- Performance comparison of target localization for active sonar systems. **SUHWAN KIM et al.** IEEE TRANSACTIONS ON AEROSPACE AND ELECTRONIC SYSTEMS. IEEE SERVICE CENTER, 01 Octobre 2008, vol. 44, 1371-1380